(19) Europäisches Patentamt / European Patent Office / Office européen des brevets

(11) **EP 4 498 614 A1**

(12) **EUROPEAN PATENT APPLICATION**
published in accordance with Art. 153(4) EPC

(43) Date of publication:
**29.01.2025  Bulletin 2025/05**

(21) Application number: **23775284.5**

(22) Date of filing: **21.03.2023**

(51) International Patent Classification (IPC):
**H04B 7/06** (2006.01)      **H04B 17/345** (2015.01)
**H04W 24/10** (2009.01)     **H04W 72/23** (2023.01)
**H04W 72/56** (2023.01)     **H04W 84/06** (2009.01)
**H04L 5/14** (2006.01)       **H04L 5/22** (2006.01)
**H04W 84/04** (2009.01)     **H04B 17/318** (2015.01)

(52) Cooperative Patent Classification (CPC):
**H04B 7/06; H04B 17/318; H04B 17/345;
H04L 5/14; H04L 5/22; H04W 24/10; H04W 72/23;
H04W 72/56; H04W 84/04; H04W 84/06**

(86) International application number:
**PCT/KR2023/003754**

(87) International publication number:
**WO 2023/182788 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.03.2022  KR 20220034426
25.04.2022  KR 20220050688**

(71) Applicant: **Electronics and Telecommunications
Research Institute
Daejeon 34129 (KR)**

(72) Inventor: **NOH, Hoon Dong
Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR TRANSMITTING OR RECEIVING CHANNEL STATE INFORMATION IN COMMUNICATION SYSTEM**

(57)      An embodiment of an operating method of a first device may comprise the steps of: receiving, from a second device, a first report setting configured to perform reporting of first channel state information (CSI); receiving, from the second device, a first medium access control (MAC) control element (CE) that configures one or more multiplexing modes for the first device in at least a first time resource; generating the first CSI on the basis of the first report setting and the first MAC CE; and transmitting the first CSI to the second device, wherein the first time resource configures a first CSI reference resource, configured by the first report setting.

[FIG. 24]

## Description

[Technical Field]

The present disclosure relates to a channel state information transmission and reception technique, and more particularly, to a channel state information transmission and reception technique for efficiently supporting transmission modes dynamically varying in a wireless communication system.

[Background Art]

With the development of information and communication technology, various wireless communication technologies are being developed. Representative wireless communication technologies include long-term evolution (LTE) and new radio (NR) defined as the 3rd generation partnership project (3GPP) standards. The LTE may be one of the 4th generation (4G) wireless communication technologies, and the NR may be one of the 5th generation (5G) wireless communication technologies.

In the communication technologies for the 5G or later generation, a higher data rate, larger communication capacity, lower latency, wider coverage, and the like may be required than in the communication technologies of the previous generations. In order to achieve such the requirements, an integrated access and backhaul (IAB) network technology is being studied. An IAB node constituting the IAB network may be composed of two elements: a distributed unit (i.e., IAB-DU) and a mobile terminal (i.e., IAB-MT). In addition, an IAB node may configure a dual connectivity (DC) with a parent node or a child node.

In an exemplary embodiment of a communication system, transmission modes may be variably applied to a radio resource to cope with various communication situations. For example, in order to cope with various situations related to operations of IAB nodes, operations of multiple transmission and reception points (multi-TRP), in-band/out-band full duplex communication operations, and the like, transmission modes may be variably applied to a radio resource.

Communication devices (i.e., transceiver, communication node, base station, terminal, and the like) of the communication system may use resources such as time/frequency/spatial/power resources equally or differently according to the respective transmission modes (or according to an indication of an upper node considering each transmission mode) for the purpose of improving wireless communication quality. For example, the communication devices may equally or differently use resources such as time resources, frequency resources, the number of antennas, antenna shapes, and transmit power according to the respective transmission modes. For the purpose of securing robustness and resiliency for various communication environments as well as enhancing wireless communication quality/capacity, techniques for dynamically/variably using various transmission modes may be required. Further, techniques for measuring and/or reporting channel state information to efficiently support dynamically varying transmission modes may be required.

Matters described as the prior arts are prepared to promote understanding of the background of the present disclosure, and may include matters that are not already known to those of ordinary skill in the technology domain to which exemplary embodiments of the present disclosure belong.

[Disclosure]

[Technical Problem]

An objective of the present disclosure for achieving the above-described needs is to provide a method and an apparatus for channel state information transmission and reception to efficiently support transmission modes dynamically varying in a communication system.

[Technical Solution]

An operation method of a first device, according to an exemplary embodiment of the present disclosure for achieving the above-described objective, may comprise: receiving, from a second device, a first report configuration for configuring to perform reporting of first channel state information (CSI); receiving, from the second device, a first medium access control (MAC) control element (CE) for configuring one or more multiplexing modes to the first device in at least a first time resource; generating the first CSI based on the first report configuration and the first MAC CE; and transmitting the first CSI to the second device, wherein the first time resource constitutes first CSI reference resource(s) configured by the first report configuration.

The first MAC CE may indicate the one or more multiplexing modes configured to the first device among a plurality of multiplexing modes configured based on a first signaling received before receiving the first MAC CE.

The one or more multiplexing modes configured by the first MAC CE may be a first multiplexing mode, and the generating of the first CSI may comprise: determining a first channel quality indicator (CQI) index in consideration of the first multiplexing mode configured by the first MAC CE; and generating the first CSI including the first CQI index.

The one or more multiplexing modes configured by the first MAC CE may include at least N multiplexing modes, and the generating of the first CSI may comprise: determining at least one CQI index in consideration of at least one multiplexing mode among the N multiplexing modes; and generating the first CSI including the determined at least one CQI index, wherein N is a natural number.

The first MAC CE may indicate the N multiplexing modes configured to the first device among a plurality of multiplexing modes configured based on a first signaling received before receiving the first MAC CE, and may further indicate information on a first criterion for determining the at least one multiplexing mode among the N multiplexing modes.

The first MAC CE may be received before a first time interval from the first CSI reference resource(s) in time domain.

The first CSI may include information indicating at least one multiplexing mode considered in generating the first CSI among the one or more multiplexing modes.

The first MAC CE may indicate a first frequency resource to which the one or more multiplexing modes are applied, and the generating of the first CSI may comprise: generating the first CSI in consideration of the one or more multiplexing modes based on a resource overlapping with the first frequency resource among the first CSI reference resource(s).

The first MAC CE may indicate a first frequency resource to which the one or more multiplexing modes are applied, and the generating of the first CSI may comprise: generating the first CSI in consideration of the one or more multiplexing modes based on a resource overlapping with the first frequency resource and a resource non-overlapping with the first frequency resource among the first CSI reference resource(s).

The first device may include a first transceiver for communication with an upper node of the first device and a second transceiver for communication with a lower node of the first device, and the generating of the first CSI may comprise: generating the first CSI using a resource non-overlapping with a resource allocated to the second transceiver among the first CSI reference resource(s).

The first report configuration may include downlink (DL) power control configuration information for the first CSI reference resource(s), and the generating of the first CSI may comprise: generating the first CSI based on the DL power control configuration information for the first CSI reference resource(s), when a time division multiplexing (TDM) mode is assigned to the first CSI reference resource(s).

The first MAC CE may include DL transmit (Tx) power adjustment configuration information for a resource corresponding at least to the first time resource, and the generating of the first CSI may comprise: generating the first CSI based on the DL transmit power adjustment configuration information for the resource corresponding at least to the first time resource, when a frequency division multiplexing (FDM) mode is assigned to the first CSI reference resource(s).

The operation method may further comprise: receiving, from the second device, a second report configuration for configuring to perform reporting of second CSI; receiving, from the second device, a second MAC CE for configuring at least one multiplexing mode to the first device in a second time resource constituting second CSI reference resource(s) configured by at least the second report configuration; comparing multiplexing modes configured for at least one channel measurement resource (CMR) and/or at least one interference measurement resource (IMR) configured by the second report configuration, based on the second report configuration and the second MAC CE; and determining not to perform reporting of the second CSI, when different multiplexing modes are configured for the at least one CMR and/or the at least one IMR.

The operation method may further comprise: receiving, from the second device, a second report configuration for configuring to perform reporting of second CSI; receiving, from the second device, a second MAC CE for configuring at least one multiplexing mode to the first device in a second time resource constituting second CSI reference resource(s) configured by at least the second report configuration; comparing multiplexing modes configured for at least one CMR and/or at least one IMR configured by the second report configuration, based on the second report configuration and the second MAC CE; generating the second CSI based on the at least one CMR and the at least one IMR in consideration of a multiplexing mode configured for one of the at least one CMR and/or the at least one IMR, when different multiplexing modes are configured for the at least one CMR and/or the at least one IMR; and transmitting the second CSI to the second device.

An operation method of a first device, according to another exemplary embodiment of the present disclosure for achieving the above-described objective, may comprise: transmitting, to a second device, a first report configuration for configuring to perform reporting of first channel state information (CSI); transmitting, to the second device, a first medium access control (MAC) control element (CE) for configuring one or more multiplexing modes to the first device in at least a first time resource; and receiving, from the second device, the first CSI generated based on the first report configuration and the first MAC CE, wherein the first time resource constitutes first CSI reference resource(s) configured by the first report configuration.

The one or more multiplexing modes configured by the first MAC CE may be a first multiplexing mode, and the first CSI may include a first channel quality indicator (CQI) index determined in consideration of the first multiplexing mode configured by the first MAC CE.

The one or more multiplexing modes configured by the first MAC CE may include at least N multiplexing modes, and the first CSI may include at least one CQI index determined in consideration of at least one multiplexing mode among the N multiplexing modes, N being a natural number.

The first MAC CE may indicate the N multiplexing modes configured to the first device among a plurality of multiplexing modes configured based on a first signaling received before receiving the first MAC CE, and may further indicate information on a first criterion for determining the at least one multiplexing mode among the N multiplexing modes.

The second device may include a first transceiver for communication with an upper node of the second device and a second transceiver for communication with a lower node of the second device, and the first CSI may be generated using a resource non-overlapping with a resource allocated to the second transceiver among the first CSI reference resource(s).

The first MAC CE may include downlink (DL) transmit (Tx) power adjustment configuration information for a resource corresponding at least to the first time resource, and the first CSI may be generated based on the DL transmit power adjustment configuration information for the resource corresponding at least to the first time resource, when a frequency division multiplexing (FDM) mode is assigned to the first CSI reference resource(s).

[Advantageous Effects]

According to an exemplary embodiment of a method and apparatus for transmitting and receiving channel state information in a communication system, the communication system can support channel state information (CSI) measurement and/or reporting schemes for efficiently supporting dynamically changing transmission modes. In the communication system, communication devices may perform actions such as determining validity of a certain CSI report, determining a priority of the CSI report, or determining radio resources and/or computational resources required for the CSI report, based on references to a transmission mode change time, channel measurement time, interference measurement time, and/or the like. Based on the determinations made regarding the CSI reporting as described above, the CSI transmission and reception operations in the communication system can be performed efficiently.

[Description of Drawings]

FIG. 1 is a conceptual diagram illustrating an exemplary embodiment of a radio interface protocol structure in a communication system.

FIG. 2 is a conceptual diagram illustrating an exemplary embodiment of time resources in which radio signals are transmitted in a communication system.

FIG. 3 is a conceptual diagram illustrating a time difference between a reception timing of an i-th downlink frame and a transmission timing of an i-th uplink frame in an exemplary embodiment of a communication system.

FIG. 4 is a conceptual diagram illustrating an exemplary embodiment of a time/frequency resource grid of a communication system.

FIG. 5 is a conceptual diagram illustrating an exemplary embodiment of a synchronization signal and physical broadcast channel (SS/PBCH) block or synchronization signal block (SSB) of a communication system.

FIG. 6 is a sequence chart illustrating an exemplary embodiment of a random access procedure in a communication system.

FIG. 7 is a conceptual diagram illustrating a first exemplary embodiment of SSB-RO association according to RACH configuration in a communication system.

FIG. 8 is a conceptual diagram illustrating a second exemplary embodiment of SSB-RO association according to RACH configuration in a communication system.

FIG. 9 is a conceptual diagram illustrating an exemplary embodiment of a QCL information transfer process through TCI state configuration and indication in a communication system.

FIG. 10 is a conceptual diagram illustrating an exemplary embodiment of a TCI state activation/deactivation MAC CE in a communication system.

FIG. 11 is a conceptual diagram illustrating an exemplary embodiment of a TCI state indication MAC CE in a communication system.

FIG. 12 is a conceptual diagram illustrating slot configurations according to slot formats in a communication system.

FIG. 13 is a conceptual diagram illustrating an exemplary embodiment of an IAB network in a communication system.

FIG. 14 is a block diagram illustrating an exemplary embodiment of a functional split structure of a central unit (CU) and a distributed unit (DU) in a communication system.

FIG. 15 is a flowchart illustrating a first exemplary embodiment of a method for resource management of an IAB node in a communication system.

FIG. 16 is a flowchart illustrating an exemplary embodiment of a UE capability reporting procedure in a communication system.

FIGS. 17A and 17B are conceptual diagrams for describing a first exemplary embodiment of a user plane protocol stack structure and a control plane protocol stack structure in a communication system.

FIGS. 18A and 18B are conceptual diagrams for describing a second exemplary embodiment of a user plane protocol structure in a communication system.

FIG. 19A is a conceptual diagram for describing an exemplary embodiment of a method for measuring and reporting cross link interference (CLI) in an IAB node supporting a simultaneous DU/MT operation mode in a communication system.

FIG. 19B is a conceptual diagram for describing an exemplary embodiment of signaling for configuring a multiplexing operation mode in a communication system.

FIG. 20 is a conceptual diagram for describing a first exemplary embodiment of an operation mode assignment method.

FIG. 21 is a conceptual diagram for describing a second exemplary embodiment of an operation mode assignment method.

FIG. 22 is a conceptual diagram for describing a third exemplary embodiment of an operation mode assignment method.

FIG. 23 is a conceptual diagram for describing an exemplary embodiment of a CSI reporting method for each operation mode.

FIG. 24 is a sequence chart for describing a first exemplary embodiment of a method for transmitting and receiving CSI.

FIG. 25 is a sequence chart for describing a second exemplary embodiment of a method for transmitting and receiving CSI.

FIG. 26 is a conceptual diagram for describing an exemplary embodiment of a communication node in a communication system.

[Best mode of the Invention]

Exemplary embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

Accordingly, while the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may have the same meaning as a communication network.

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, beyond 5G (B5G) mobile communication network (e.g., 6G mobile communication network), or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present specification, the base station may refer to an access point, radio access station, node B (NB), evolved node B (eNB), base transceiver station, mobile multihop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

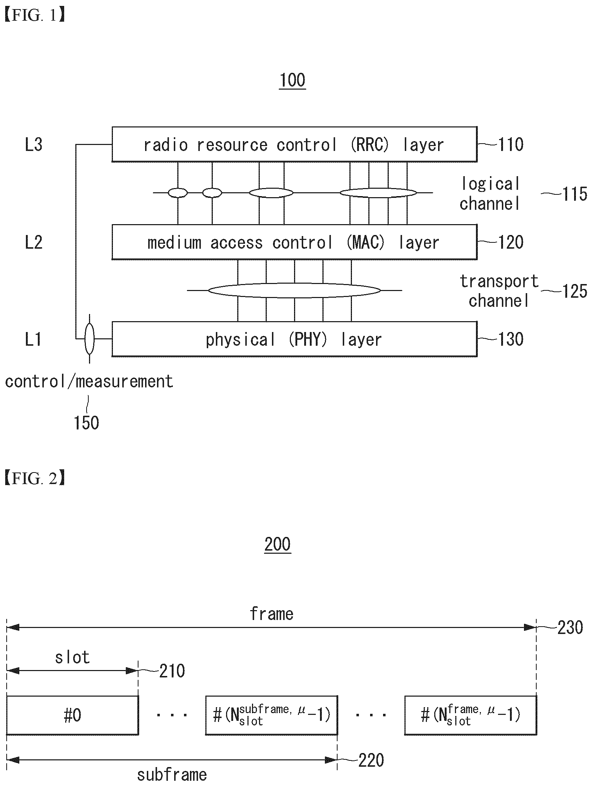

FIG. 1 is a conceptual diagram illustrating an exemplary embodiment of a radio interface protocol structure in a communication system.

Referring to FIG. 1, an exemplary embodiment of a radio interface protocol structure 100 of a communication system may be configured to include a radio resource control (RRC) layer 110, a medium access control (MAC) layer 120, a physical (PHY) layer 130, and the like. An exemplary embodiment of the radio interface protocol structure 100 shown in FIG. 1 may correspond to various exemplary embodiments of interfaces such as an interface between a terminal and a base station, an interface between an IAB-node distributed unit (IAB-DU) and an IAB-node mobile terminal (IAB-MT) of an integrated access backhaul (IAB) network, an interface between an IAB-DU and a lower node, an interface between an IAB-MT and an upper node, an interface between a plurality of terminals, and the like.

In the vicinity of the PHY layer 130, the RRC layer 110, and the MAC layer 120, and the like may be disposed above the PHY layer 130. For example, the MAC layer 120 may be disposed above the PHY layer 130. The RRC layer 110 may be disposed above the MAC layer 120.

The MAC layer 120 may be connected to a higher layer (e.g., RRC layer 110) through logical channels 115. The PHY layer 130 may be connected to the higher MAC layer 120 through transport channels 125. The PHY layer 130 may transmit and receive control information or measurement information 150 to and from the RRC layer 110.

The PHY layer 130 may be referred to as a 'layer 1' or 'L1'. The MAC layer 120 may be referred to as a 'layer 2' or 'L2'. The RRC layer 110 may be referred to as a 'layer 3' or 'L3'. The RRC layer 110 and the MAC layer 120 may be collectively referred to as the 'higher layer'.

In the present disclosure, 'L1 signaling' refers to signaling such as downlink control information (DCI) transmitted on a physical downlink control channel (PDCCH), uplink control information (UCI) transmitted on a physical uplink control channel (PUCCH), and sidelink control information (SCI) transmitted on a physical sidelink control channel (PSCCH), which are channels of the PHY layer 130. Similarly, in the present disclosure, 'higher layer signaling' may include L2 signaling transmitted through a MAC control element (CE), L3 signaling transmitted through RRC signaling, and the like. Although omitted in FIG. 1 for convenience of description, information that can be included in an interface between base stations, or an interface (e.g., F1, next generation (NG) interfaces, etc.) between base station components such as a distributed unit (DU) and a central unit (CU) may also be collectively referred to as higher layer signaling as well as the L2 signaling or L3 signaling.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^\mu \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is merely an example for the convenience of description, and exemplary embodiments of the numerologies used in the communication system may not be limited thereto. Each numerology $\mu$ may correspond to information of a subcarrier spacing (SCS) $\Delta f$ and a cyclic prefix (CP). The terminal may identify a numerology $\mu$ and a CP value applied to a downlink bandwidth part (BWP) or an uplink BWP based on higher layer parameters such as subcarrierSpacing, cyclicPrefix, and/or the like.

FIG. 2 is a conceptual diagram illustrating an exemplary embodiment of time resources in which radio signals are transmitted in a communication system.

Referring to FIG. 2, time resources in which radio signals are transmitted in a communication system 200 may be represented with a frame 220 comprising one or more $( N_{\text{slot}}^{\text{frame},\mu} / N_{\text{slot}}^{\text{subframe},\mu} )$ subframes, a subframe 220 comprising one or more $( N_{\text{slot}}^{\text{subframe},\mu} )$ slots, and a slot 210 comprising 14 $( N_{\text{symb}}^{\text{slot}} )$ OFDM symbols. In this case, according to a configured numerology, as the values of $N_{\text{symb}}^{\text{slot}}$, $N_{\text{slot}}^{\text{subframe},\mu}$, and $N_{\text{slot}}^{\text{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the 5G NR communication system, the frame 230 may have a length of 10 ms, and the subframe 220 may have a length of 1 ms. Each frame 230 may be divided into two half-frames having the same length, and the first half-frame (i.e., half-frame 0) may be composed of subframes #0 to #4, and the second half-frame (i.e., half-frame 1) may be composed of subframes #5 to #9. One carrier may include a set of frames for uplink (i.e., uplink frames) and a set of frames for downlink (i.e., downlink frames).

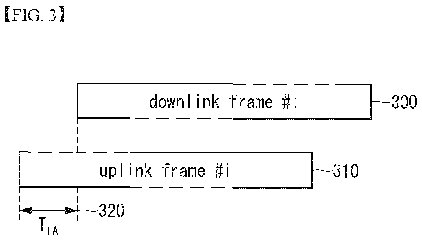

FIG. 3 is a conceptual diagram illustrating a time difference between a reception timing of an i-th downlink frame and a transmission timing of an i-th uplink frame in an exemplary embodiment of a communication system.

Referring to FIG. 3, a time difference between a reception timing of an i-th downlink frame 300 and a transmission timing of an i-th uplink frame 310 may be a TTA 320. Accordingly, the terminal may start transmission of the uplink frame #i 310 at a time earlier by TTA compared to the reception timing of the downlink frame #i 300. TTA may be referred to as a timing advance or timing adjustment TA. The base station may instruct the terminal to change a value of TTA through higher layer signaling or L1 signaling, and may configure the terminal to apply TTA in a manner defined as $T_{TA} = (N_{TA} + N_{TA,offset})$ $T_c$. In the case of 5G NR, $T_c$ may be defined as $T_c = \frac{1}{(\Delta f_{max} \cdot N_f)}$, $\Delta f_{max}$ may be defined as $\Delta f_{max} = 480\ kHz$, $N_f$ may be defined as $N_f = 4096$, $N_{TA,offset}$ may be a value set by L3 signaling, and $N_{TA}$ may be a value determined by Equation 1 below by a value $T_A$ indicated by L2 signaling.

[Equation 1]

$$N_{TA} = \begin{cases} T_A \cdot 16 \cdot \dfrac{64}{2^\mu} & \text{(for random access response)} \\ N_{TA\_old} + \left((T_A - 31) \cdot 16 \cdot 64/2^\mu\right) & \text{(for other cases)} \end{cases}$$

Here, the description on $N_{TA,offset}$ and $N_{TA}$ may be an example for a specific situation, and various other options may exist, but in order not to obscure the gist of the description, all possible cases may not be listed in the present disclosure.

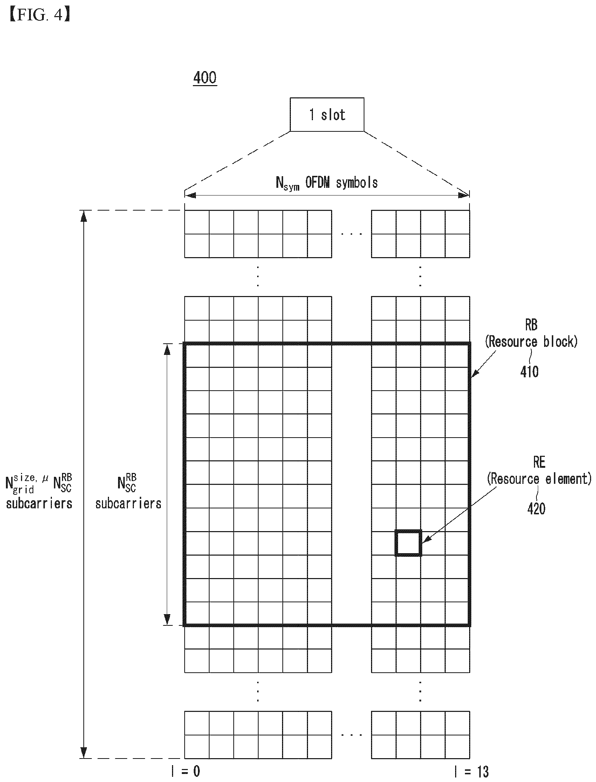

FIG. 4 is a conceptual diagram illustrating an exemplary embodiment of a time/frequency resource grid of a communication system.

Referring to FIG. 4, a time/frequency resource grid 400 of a communication system may have $N_{grid}^{size,\mu} N_{sc}^{RB}$ subcarriers and $N_{slot}^{subframe,\mu}$ OFDMs. The resource grid may be defined for each numerology and each carrier. In this case, $N_{grid}^{start,\mu}$ may mean a position of a common resource block (CRB) indicated by higher layer signaling. $N_{grid}^{size,\mu}$ may mean the number of resource blocks (RBs) starting from the CRB, that is, a carrier bandwidth. $N_{grid}^{start,\mu}$ and/or $N_{grid}^{size,\mu}$ may have different values for each link direction (e.g., uplink, downlink, or sidelink) or for each numerology $\mu$. Here, the numerology $\mu$ may be referred to by other terms, such as a SCS configuration, if necessary.

Each element in the resource grid for an antenna port p and a SCS configuration $\mu$ may be referred to as a resource element (RE) 420, and may be uniquely defined for each position $(k,l)_{p,\mu}$. In this case, $k$ may be a frequency axis index, and $l$ may indicate a symbol position on the time axis. $RE(k,l)_{p,\mu}$ may correspond to a physical resource used to transmit a physical channel or a signal complex value $a_{k,l}^{(p,\mu)}$. One RB 410 may be defined as consecutive $N_{sc}^{RB} = 12$ subcarriers on the frequency axis.

The 5G NR communication system has introduced the concept of BWPs in order to reduce high implementation complexity and power consumption of terminals due to the widened carrier bandwidth compared to the 3G/4G communication system. One BWP may be composed of contiguous CRBs, a starting RB position $N_{BWP,i}^{start,\mu}$ of the BWP and the number $N_{BWP,i}^{size,\mu}$ of RBs constituting the BWP may satisfy Equations 2 and 3.

[Equation 2]

$$N_{\mathrm{grid},x}^{\mathrm{start},\mu} \leq N_{\mathrm{BWP},i}^{\mathrm{start},\mu} < N_{\mathrm{grid},x}^{\mathrm{start},\mu} + N_{\mathrm{grid},x}^{\mathrm{size},\mu}$$

[Equation 3]

$$N_{\mathrm{grid},x}^{\mathrm{start},\mu} < N_{\mathrm{BWP},i}^{\mathrm{start},\mu} + N_{\mathrm{BWP},i}^{\mathrm{size},\mu} \leq N_{\mathrm{grid},x}^{\mathrm{start},\mu} + N_{\mathrm{grid},x}^{\mathrm{size},\mu}$$

Up to four downlink BWPs within one component carrier (CC) may be configured for one terminal, and only one downlink BWP may be activated at a time. The terminal may not receive a physical downlink shared channel (PDSCH), a physical downlink control channel (PDCCH), a channel state information reference signal (CSI-RS), or the like outside the activated BWP.

Up to four uplink BWPs within one CC may be configured for one terminal, and only one uplink BWP may be activated at a time. The terminal may not transmit a physical uplink shared channel (PUSCH), a physical uplink control channel (PUCCH), a sounding reference signal (SRS), or the like outside the activated BWP.

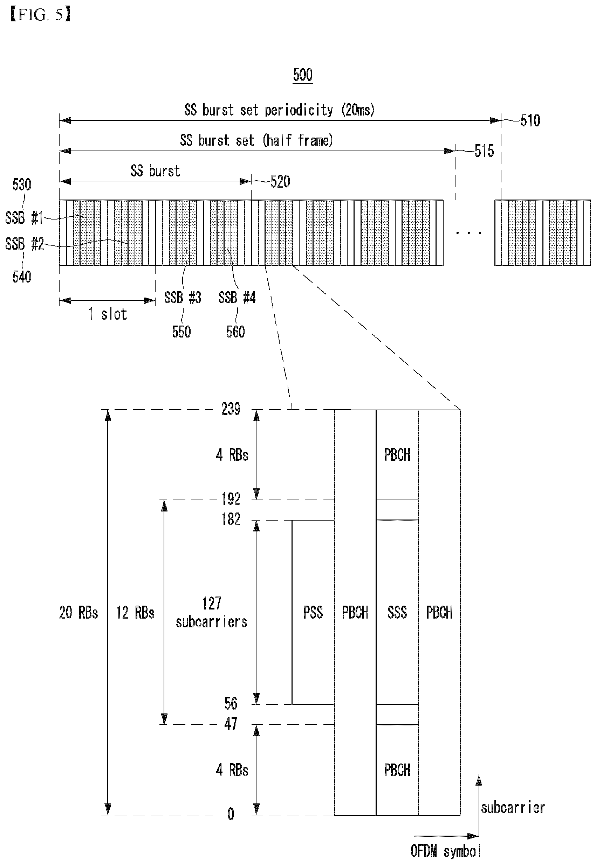

FIG. 5 is a conceptual diagram illustrating an exemplary embodiment of a synchronization signal and physical broadcast channel (SS/PBCH) block or synchronization signal block (SSB) of a communication system.

Referring to FIG. 5, an SS/PBCH block 500 of a communication system may be configured with a primary synchronization signal (PSS) transmitted in 127 subcarriers in the middle of a first OFDM symbol, a secondary synchronization signal (SSS) transmitted in 127 subcarriers in the middle of a third OFDM symbol, and a physical broadcast channel (PBCH) transmitted in second, third, and fourth OFDM symbols. The PBCH occupying the widest bandwidth may be transmitted over 20 RBs, which may be 3.6 MHz based on 15 kHz SCS. The base station transmits one SSB by applying the same beam. When the number of base station antennas increases or it is necessary to operate multiple beams such as applying one or more analog beams for high frequency support, the base station may support a multi-beam operation by transmitting multiple SSBs. Here, the term 'beam' may be expressed in various terms such as a transmission precoding or a spatial transmission (TX) filter when applied in practice. However, in order not to obscure the gist of the description, 'beam' is used hereinafter as a unified term.

For example, the base station may transmit a plurality of SSBs 530, 540, 550, and 560 to represent a plurality of beams (e.g., beam #1, beam #2, beam #3, beam #4). In this case, it may be possible that one or more SSBs are transmitted within one slot according to a pattern predetermined according to each numerology. The SSBs 530, 540, 550, and 560 to which different beams are applied may be bundled into one set by being included in an SS burst 520. The terminal may assume a half-frame window having a length of 5 ms at the time of monitoring SSBs. An SS burst set 515 configured by higher layer signaling within a half-frame may include one or more SS bursts 520. If RRC configuration values are unknown or unavailable when performing initial access (IA), the terminal may receive or measure the SSBs assuming that a periodicity of the SS burst set 510 is 20 ms. As an example, the terminal may receive SSB(s) with reference to SSB configuration information identical or similar to that shown in Table 4.

[Table 4]

```
MIB ::=                              SEQUENCE {
    systemFrameNumber
    subCarrierSpacingCommon
    ssb-SubcarrierOffset         // SSB subcarrier offset (0~15)
    dmrs-TypeA-Position
    pdcch-ConfigSIB1
    cellBarred
    intraFreqReselection
    spare
}

MeasObjectNR ::=                     SEQUENCE {
    ssbFrequency                 // Absolute Radio Frequency Channel Number (ARFCN)
of SSB
    ssbSubcarrierSpacing         // Numerology of SSB
    smtc1
        // first SSB measurement timing configuration (SMTC) configured with reference to




    smtc2   // Second SMTC configured with reference to SSB-MTC
    ...
    ...
}

SSB-Index                            // SSB index within SS-burst

SSB-MTC ::=                          SEQUENCE {
        // timing occasion configuration for SSBs to be measured by terminal
        periodicityAndOffset                 CHOICE {
        sf5          // offset when a SSB reception window has a legnth of 5 subframes
        sf10         // offset when a SSB reception window has a legnth of 10 subframes
        sf20         // offset when a SSB reception window has a legnth of 20 subframes
        sf40         // offset when a SSB reception window has a legnth of 40 subframes
        sf80         // offset when a SSB reception window has a legnth of 80 subframes
        sf160        // offset when a SSB reception window has a legnth of 160 subframes
        },
        duration     // a legnh of a SSB recepion window (number of subframes)
}

SSB-MTC2 ::=                         SEQUENCE {
```

```
    pci-List         // physical cell IDs (PCIs) following the SMTC configuration
    periodicity      // SMTC periodicity (number of subframes)
}
```

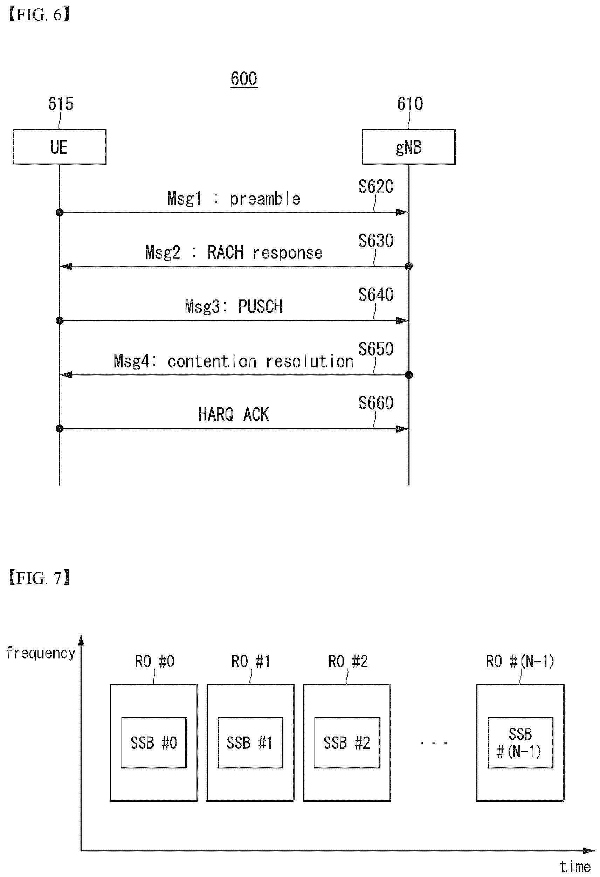

FIG. 6 is a sequence chart illustrating an exemplary embodiment of a random access procedure in a communication system.

Referring to FIG. 6, in a random access procedure of a communication system 600, a terminal 615 may transmit a physical random access channel (PRACH) preamble, and the PRACH preamble may be referred to as 'Msg1' (S620). Through a transmission of the PRACH preamble, random access-radio network temporary identifier (RA-RNTI) may be determined. In this case, the RA-RNTI may be calculated by Equation 4.

[Equation 4]

$$RA\text{-}RNTI = 1 + s\_id + 14 \times t\_id + 14 \times 80 \times f\_id + 14 \times 80 \times 8 \times ul\_carrier\_id$$

In Equation 4, s_id may be an index of a first OFDM symbol of a corresponding PRACH occasion (e.g.. $0 \leq s\_id < 14$), t_id may be an index of a first slot of the PRACH occasion within a system frame (e.g., $0 \leq t\_id < 80$), f_id may be an index of the PRACH occasion in the time domain (e.g., $0 \leq f\_id < 8$), and ul_carrier_id may be a value according to a uplink carrier type used for the preamble transmission (e.g., 0 indicates a regular uplink carrier, 1 indicates a supplementary uplink carrier).

Before the terminal transmits the PRACH preamble, the terminal may have at least part of the following information by receiving system information from the base station on a PBCH or receiving RRC signaling from the base station.

- PRACH preamble format
- Time/frequency resource information for RACH transmission
- Index for a logical root sequence table
- Cyclic shift NCS
- Set type (unrestricted, restricted set A, restricted set B)

Referring again to FIG. 6, as a second procedure, the base station may provide a random access response (RAR) to the terminal, which may be referred to as 'Msg2' (S630). Particularly, the base station may calculate an RA-RNTI based on Equation 4 when the base station receives the PRACH preamble from the terminal in the step S620, and may transmit a DCI by using the RA-RNTI for scrambling. The terminal may monitor a PDCCH scrambled with the RA-RNTI in a period included in a RACH response window configured by the higher layer in a type 1 PDCCH common search space (CSS). The terminal may receive the PDCCH (or the DCI transmitted from the base station through the PDCCH), and may decode the PDCCH (or the DCI). If the terminal successfully decodes the PDCCH (or the DCI), the terminal may decode a PDSCH including the RAR transmitted from the base station in the step S630. If the terminal succeeds in decoding the RAR, the terminal may identify whether an RA preamble identifier (RAPID) in the RAR matches a RAPID pre-allocated to the terminal.

As a third procedure, the terminal may transmit a PUSCH to the base station, which may be referred to as 'Msg3' (S640). To this end, the terminal may determine whether to apply a transform precoding to transmission of the PUSCH (i.e., whether to apply discrete Fourier transform (DFT)-s-OFDM-based transmission or OFDM-based transmission) based on a higher layer parameter (e.g., msg3-transformPrecoding). Also, the terminal may determine a SCS to be used for transmission of the PUSCH according to a higher layer parameter (e.g., msg3-scs). In this case, the PUSCH of Msg3 may be transmitted through a serving cell to which the PRACH has been transmitted.

As a fourth procedure, the base station may transmit a contention resolution message to the terminal, which may be referred to as 'Msg4' (S650). The terminal may start a timer for receiving the contention resolution message, and may monitor a PDCCH scrambled with a temporary cell-RNTI (TC-RNTI) in the type 1 PDCCH CSS until the timer expires. If the terminal successfully decodes the PDCCH, the terminal may decode a corresponding PDSCH including a MAC CE, and set the TC-RNTI as a cell-RNTI (C-RNTI). After successfully decoding the Msg4, the terminal may report a hybrid automatic repeat request (HARQ) positive-acknowledgement (ACK) thereto to the base station, and may report whether the RACH procedure is successful to the base station (S660).

The RACH occasion (RO) may mean a time and frequency resource specified for reception of a RACH preamble, and the terminal may use the RO for PRACH transmission. As described above, in the 5G NR, multiple SSBs may be associated with different beams for the multi-beam operation, and the terminal may measure the multiple SSBs, and select an optimal SSB (i.e., optimal beam) based on one of various schemes such as a reference signal received power (RSRP), reference signal received quality (RSRQ), signal-to-noise ratio (SNR), signal-to-noise/interference ratio (SNIR), or the like. Thereafter, the terminal may determine a beam (i.e., TX spatial filter) to be used for PRACH transmission based on the beam (i.e., RX spatial filter) used when receiving the optimal SSB. In this case, a relationship between SSB(s) and RO(s) may be established for the purpose of allowing the base station or the network to know which SSB (i.e., beam) the terminal has selected. Through such the relationship, the base station may know the SSB (i.e., beam) selected by the terminal based on the RO in which the terminal has transmitted the PRACH. For example, the relationship between SSB(s) and RO(s) may be determined with reference to the higher layer configurations identical or similar to those shown in Table 5.

[Table 5]

```
RACH-ConfigCommon ::=                    SEQUENCE {
    rach-ConfigGeneric                   // set of RACH parameters
    totalNumberOfRA-Preambles            // the total number of RACH preambles (1~63)
    ssb-perRACH-OccasionAndCB-PreamblesPerSSB      CHOICE {
        oneEighth        // The number of preambles per SSB when one SSB is associated with
eight ROs
        oneFourth        // The number of preambles per SSB when one SSB is associated with
four ROs
        oneHalf          // The number of preambles per SSB when one SSB is associated with
two ROs
        one              // The number of preambles per SSB when one SSB is associated with one
RO
        two              // The number of preambles per SSB when two SSBs are associated with
one RO
        four             // The number of preambles per SSB when four SSBs are associated with
one RO
        eight            // The number of preambles per SSB when eigth SSBs are associated with
one RO
        sixteen          // The number of preambles per SSB when sixteen SSBs are associated
with one RO
    }
    groupBconfigured                     SEQUENCE {
        ra-Msg3SizeGroupA    // The size of a transport block fro contention-based RA of Group
A
        messagePowerOffsetGroupB    // Threshold for preamble selection
        numberOfRA-PreamblesGroupA       // The number of CB preambles per SSB of Group
A
    }
    ra-ContentionResolutionTimer     // Initial value of a contention resolution timer
    rsrp-ThresholdSSB            // Threshold for selection of an SSB and an associated RACH
resource
    rsrp-ThresholdSSB-SUL    // Threshold for selection of an SSB and an associated RACH
resource in SUL
    prach-RootSequenceIndex                    CHOICE { // RACH root sequence index
        l839
        l139
    },
    msg1-SubcarrierSpacing       // SCS for Msg1 transmission
    restrictedSetConfig          // one of {unrestricted, restricted set A, restricted set B}
    msg3-transformPrecoder       // whether to apply transform precoding in transmisison of
Msg3
    ...
}
RACH-ConfigGeneric ::=                SEQUENCE {
    prach-ConfigurationIndex     // indicates a preamble format, etc.
    msg1-FDM                     // The number of ROs FDMed at a time
    msg1-FrequencyStart          // frequnency-axis offset of the lowest RO with reference to
PRB 0
    zeroCorrelationZoneConfig    // N-CS configuration
```

```
      preambleReceivedTargetPower    // Target power level at a network receiving node
      preambleTransMax
            // The maximum number of RA preambe transmissions performed unitl declaration of
an RA failure
      powerRampingStep                // Power ramping step
      ra-ResponseWindow               // Msg2 (RAR) window length (number of slots)
      ...,
   }
```

FIG. 7 is a conceptual diagram illustrating a first exemplary embodiment of SSB-RO association according to RACH configuration in a communication system.

Referring to FIG. 7, in an SSB-RO mapping relation according to the RACH configurations, in a certain frequency band, N SSBs 710-1 to 710-n having time resources which are separated from each other may be mapped to ROs 720-1 to 720-n having time resources which are separated from each other on a one-to-one basis. For example, if a higher layer parameter *msg1-FDM* is set to 1 (i.e., *msg1-FDM*=one) and a higher layer parameter *ssb-perRACH-OccasionAndCB-PreamblesPerSSB* is set to 1 (e.g., *ssb-perRACH-OccasionAndCB-PreamblesPerSB*=one), the N different SSBs 710-1 to 710-n may be mapped to the N different ROs 720-1 to 720-n on a one-to-one basis.

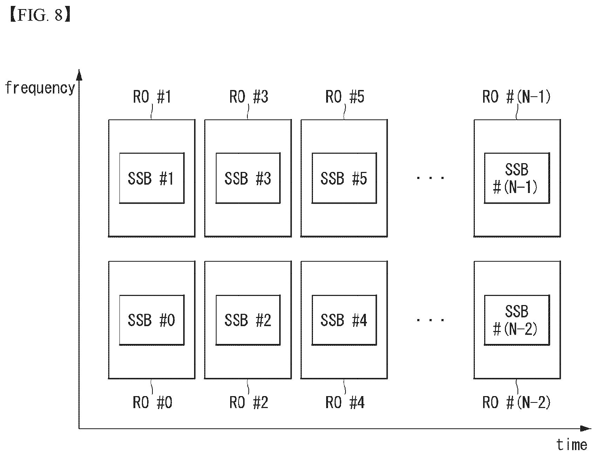

FIG. 8 is a conceptual diagram illustrating a second exemplary embodiment of SSB-RO association according to RACH configuration in a communication system.

Referring to FIG. 8, in an SSB-RO mapping relation according to the RACH configurations, in a first frequency band, SSBs 810-1, 810-3, 810-5, ..., and 810-(n-1) having time resources which are separated from each other may be mapped to ROs 820-1, 820-3, 820-5, ..., and 820-(n-1) having time resources which are separated from each other on a one-to-one basis. In addition, in a second frequency band, SSBs 810-2, 810-4, 810-6, ..., and 810-n having time resources which are separated from each other may be mapped to ROs 820-2, 820-4, 820-6, ..., and 820-n) having time resources which are separated from each other on a one-to-one basis. For example, if the higher layer parameter *msg1-FDM* is set to 2 (i.e., *msg1-FDM*=two), and higher layer parameter *ssb-perRACH-OccasionAndCB-PreamblesPerSSB* is set to 2 (e.g., *ssb-perRACH-OccasionAndCB-PreamblesPerSSB*=two), the N different SSBs 810-1 to 810-n may be mapped to the N different ROs 820-1 to 820-n which are frequency division multiplexed (FDMed) in a frequency domain, on a one-to-one basis.

Meanwhile, the 5G NR communication system may support DCI formats shown in Table 6 based on Release-16.

[Table 6]

| DCI format | Usage |
|---|---|
| 0_0 | Used for scheduling a PUSCH within one cell |
| 0_1 | Used for scheduling one or more PUSCHs within one cell, or indicating downlink feedback information for a configured grant (CG) PUSCH (i.e., CG-DFI) |
| 0_2 | Used for scheduling a PUSCH within one cell |
| 1_0 | Used for scheduling a PDSCH within one cell |
| 1_1 | Used for scheduling a PDSCH within one cell or triggering a one-shot HARQ-ACK codebook feedback |
| 1_2 | Used for scheduling a PDSCH within one cell |
| 2_0 | Used for notifying a slot format, an available RB set, a channel occupancy time (COT) duration, and search space set group switching to a UE group |
| 2_1 | Used for notifying PRB(s) and OFDM symbol(s) assumed not to be intended to be used for transmission to a UE group |
| 2_2 | Used for transmission of a transmission power control (TPC) for a PUCCH and a PUSCH |
| 2_3 | Used for transmission of a TPC command group for SRS transmission by one or more UEs |
| 2_4 | Used for a UE to notify PRB(s) and OFDM symbol(s) for which UL transmission from the UE is cancelled to a UE group |
| 2_5 | Used for notifying availability of soft resources |
| 2_6 | Used for notifying power saving information outside a DRX active time to one or more UEs |

(continued)

| DCI format | Usage |
|---|---|
| 3_0 | Used for NR sidelink scheduling within one cell |
| 3_1 | Used for LTE sidelink scheduling within one cell |

A DCI may include downlink control information for one or more cells, and may be associated with one RNTI. The DCI may be encoded through the order of 1) information element multiplexing, 2) cyclic redundancy check (CRC) addition, 3) channel coding, and 4) rate matching, and decoding may also be performed in consideration of the above steps. In the above description, "a certain DCI is associated with one RNTI" may mean that CRC parity bits of the DCI are scrambled with the RNTI. Referring to Table 6, some DCI may include scheduling information of one or more PUSCHs for a certain cell.

For example, a CRC of the DCI format 0_1 may be scrambled with a C-RNTI, configured scheduling-RNTI (CS-RNTI), semi-persistent CSI RNTI (SP-CSI-RNTI), or modulation coding scheme cell RNTI (MCS-C-RNTI). The DCI format 0_1 may include at least one of the following information.

□ Identifier for DCI format (1 bit): Indicator indicating a UL DCI format, which is always set to 0 in the case of DCI format 0_1

□ Carrier indicator (0 or 3 bits): Indicator indicating a CC scheduled by the corresponding DCI

□ DFI flag (0 or 1 bit): Configured grant downlink feedback information (CG-DFI) indicator

- If the DCI format 0_1 is used for CG-DFI indication (when the DFI flag is set to 1), at least one of the following fields may be used:

  □ HARQ-ACK bitmap (16 bits), where the order of mapping HARQ process indexes within the bitmap is that the HARQ process indexes are mapped from the MSB to the LSB of the bitmap in ascending order. For each bit in the bitmap, a value of 1 indicates ACK, and a value of 0 indicates NACK.
  □ TPC command for a scheduled PUSCH (2 bits)
  □ All the remaining bits in the DCI format 0_1 are set to zero

- If the DCI format 0_1 is not used for CG-DFI indication (when there is no DFI flag field or DFI flag field is set to 0), at least one of the following fields may be used:

  □ UL/SLTL indicator (0 or 1 bit): supplementary UL indicator.
  □ Bandwidth part indicator (0, 1, or 2 bits): Indicator indicating a BWP to be activated among uplink BWPs configured for the terminal.
  □ Frequency domain resource assignment: Indicator for allocating a frequency domain resource.
  □ Time domain resource assignment: Indicator for allocating a time domain resource.
  □ Frequency hopping flag (0 or 1 bit): Frequency axis hopping indicator
  □ Modulation and coding scheme (5 bits)
  □ New data indicator (NDI): Indicator indicating whether allocated data is new data or retransmission data.
  □ Redundancy version (RV): Indicator indicating an RV value when channel coding is applied to allocated data
  □ HARQ process number (4 bits): Indicator indicating a HARQ process to be allocated to scheduled data
  □ TPC command for a scheduled PUSCH (2 bits): TPC indicator
  □ SRS resource indicator: Aperiodic SRS resource selection indicator
  □ Precoding information and number of layers: Indicator indicating precoding and the number of transport layers to be used in PUSCH transmission
  □ Antenna ports: Indicator for uplink antenna ports to be used for PUSCH transmission
  □ SRS request: Indicator indicating whether to transmit aperiodic SRS
  □ CSI request: Indicator indicating whether and how to report channel state information
  □ PTRS-DMRS association: Indicator indicating a relationship between an uplink phase-noise tracking reference signal (PTRS) antenna port and a demodulation reference signal (DMRS) antenna port
  □ DMRS sequence initialization: Indicator for a DMRS sequence initialization value during OFDM-based uplink transmission
  □ UL-SCH indicator: Indicator indicating whether or not an uplink shared channel (UL-SCH) is included in a PUSCH (a PUSCH that does not include a UL-SCH needs to include CSI)

☐ Open-loop power control parameter set indication: Indicator indicating a set of open-loop power control (OPLC) parameter set

☐ Priority indicator: Uplink transmission priority indicator.

☐ Invalid symbol pattern indicator: Indicator indicating whether to apply an invalid symbol pattern configured by a higher layer

As another example, a CRC of the DCI format 1_1 may be scrambled with a C-RNTI, CS-RNTI, or MCS-C-RNTI, and the DCI format 1_1 may include at least one of the following information.

☐ Identifier for DCI format (1 bit): Indicator indicating a DL DCI format, which is always set to 1 in the case of DCI format 1_1

☐ Carrier indicator (0 or 3 bits): Indicator indicating a CC scheduled by the corresponding DCI

☐ Bandwidth part indicator (0, 1, or 2 bits): Indicator indicating a BWP to be activated among downlink BWPs configured for the terminal

☐ Frequency domain resource assignment: Indicator for allocating a frequency domain resource

☐ Time domain resource assignment: Indicator for allocating a time domain resource

☐ PRB bundling size indicator: Indicator indicating a type (i.e., static or dynamic) and a size of PRB bundling

☐ Rate matching indicator: Indicator indicating a rate matching pattern configured by a higher layer

☐ ZP CSI-RS trigger: Indicator for applying aperiodic zero-power (ZP) CSI-RS

☐ 'modulation and coding scheme', 'new data indicator', and 'redundancy version' fields for a transport block 1

☐ 'modulation and coding scheme', 'new data indicator', and 'redundancy version' fields for a transport block 2

☐ HARQ process number: Indicator indicating a HARQ process to be allocated to scheduled data

☐ Downlink assignment index: DAI indicator for HARQ-ACK codebook generation in TDD operation.

☐ TPC command for a scheduled PUCCH: Power control indicator for PUCCH transmission.

☐ PUCCH resource indicator: Indicator indicating a PUCCH resource for transmitting HARQ-ACK information for an allocated PDSCH or a predetermined PDSCH set

☐ PDSCH-to-HARQ_feedback timing indicator: Indicator indicating a time axis offset between the allocated PDSCH and the PUCCH

☐ Antenna port(s): Indicator indicating antenna ports to be used for PDSCH transmission/reception

☐ Transmission configuration indication: Indicator indicating transmission configuration information (TCI) to be used for PDSCH transmission and reception

☐ SRS request: Indicator indicating whether to transmit aperiodic SRS

☐ DMRS sequence initialization: Indicator for a DMRS sequence initialization value used for PDSCH transmission and reception

☐ Priority indicator: PDSCH reception priority indicator

As another example, certain DCI formats may be used to deliver the same control information to one or more terminals. For example, a CRC of the DCI format 2_3 may be scrambled with a transmit power control-sounding reference signal-RNTI (TPC-SRS-RNTI), and may include at least one of the following information.

☐ Block number 1, Block number 2, ..., Block number B: Indicators indicating resource regions to which the DCI format 2_3 is applied. A starting part of the block is configured by a higher layer parameter *startingBitOfFormat2-3* or *startingBitOfFormat2-3SUL-v1530*.

- When a terminal for which a higher layer parameter *srs-TPC-PDCCH-Group* is set to type A performs uplink transmission without a PUCCH and PUSCH or uplink transmission in which SRS power control is not tied to PUSCH power control, one block is configured by the higher layer, and the following fields are defined for the block.

☐ SRS request (0 or 2 bits): Aperiodic SRS transmission indicator

☐ TPC command number 1, TPC command number 2, ...,TPC command number N: Indicators indicating uplink power control to be applied to a UL carrier indicated by a higher layer parameter *cc-IndexInOneCC-Set*.

- When a terminal for which a higher layer parameter *srs-TPC-PDCCH-Group* is set to type B performs uplink transmission without a PUCCH and PUSCH or uplink transmission in which SRS power control is not tied to PUSCH power control, one or more blocks may be configured by the higher layer, and the following fields are defined for each block.

☐ SRS request (0 or 2 bits): Aperiodic SRS transmission indicator.

☐ TPC command (2 bits)

As another example, certain DCI formats may be used to deliver the same control information to one or more terminals. For example, a CRC of the DCI format 2_0 may be scrambled with an SFI-RNTI, and may be used for notifying information such as a slot format, a channel occupancy time (COT) duration, an available RB set, a search space set group switching, or the like. Specifically, the DCI format 2_0 may include at least one of the following information.

- When a higher layer parameter *slotFormatCombToAddModList* is configured,

☐ Slot format indicator 1, Slot format indicator 2, ..., Slot format indicator N

- When a higher layer parameter *availableRB-SetsToAddModList-r16* is configured,

☐ Available RB set indicator 1, Available RB set indicator 2, ..., Available RB set indicator N1

- When a higher layer parameter *co-DurationsPerCellToAddModList-r16* is configured,

☐ COT duration indicator 1, COT duration indicator 2, ..., COT duration indicator N2

- When a higher layer parameter *searchSpaceSwitchTriggerToAddModList-r16* is configured,

☐ Search space set group switching flag 1, Search space set group switching flag 2, ..., Search space set group switching flag M

The size of the DCI format 2_0 may be set by higher layer signaling as one of 0 to 128 bits. For example, the DCI format 2_5 may be used to notify availability of soft-type resources of an IAB node. A CRC of the DCI format 2_5 may be scrambled with an availability indicator-RNTI (AI-RNTI), and may include the following information.

☐ Availability indicator 1, Availability indicator 2, ..., and Availability indicator N

As the size of DCI format 2_5, one of values less than or equal to 128 bits may be set by higher layer signaling. The terminal may receive configuration information of a CORESET #0 and a search space #0, identical or similar to that shown in Table 7.

[Table 7]

| PDCCH-ConfigSIB1 ::= SEQUENCE {<br>        controlResourceSetZero<br>        searchSpaceZero<br>}<br><br>ControlResourceSetZero        // indicates a configuration value (0~15) of a CORESET #0 within an<br>initial BWP<br>SearchSpaceZero        // indicates a configuration value (0~15) of a search space #0 within an<br>initial BWP |
| --- |

The terminal may refer to the following higher layer configurations for cell-specific PDCCH monitoring, identical or similar to those shown in Tables 8 to 9.

[Table 8]

```
PDCCH-ConfigCommon ::=                    SEQUENCE {
      controlResourceSetZero // indicates a configuration value (0~15) of a CORESET #0 within an
initial BWP
      commonControlResourceSet
                  // configure a common CORESET by referring to CORESET configuration
searchSpaceZero      // indicates a configuration value (0~15) of a search space #0 within an initial
BWP
      commonSearchSpaceList   // configures a search sapce to be used for cell-specific PDCCH
monitoring by referring to up to four search space configurations
      searchSpaceSIB1          // search space configuration for SIB1
      searchSpaceOtherSystemInformation   // search space configuration for SIB2 or other SIBs
      pagingSearchSpace               // search space configuration for paging
      ra-SearchSpace                  // search space configuration for random access
procedure
      ...
}

ControlResourceSet ::=                    SEQUENCE {
      controlResourceSetId           // CORESET ID (a value other than 0 is used)
      frequencyDomainResources       // configuration of frequency resources of a CORESET
      duration                       // configuration of a time-axis length (symbols) of a
CORESET
      cce-REG-MappingType                    CHOICE { // CCE-to-REG mapping
configuration
            interleaved                       SEQUENCE {
                  reg-BundleSize
                  interleaverSize
                  shiftIndex
            },
            nonInterleaved
      },
```

```
      precoderGranularity
      tci-StatesPDCCH-ToAddList
                  // indicates a QCL relation possible between a QCL reference RS and a PDCCH
DMRS
      tci-StatesPDCCH-ToReleaseList
      tci-PresentInDCI           // indicates whether a TCI field exists within the DCI format 1_1
      pdcch-DMRS-ScramblingID    // indicates a scrambling initialization value of a PDCCH
DMRS
      ...
}
```

[Table 9]

```
SearchSpace ::=                                  SEQUENCE {
        searchSpaceId                   // search space ID
        controlResourceSetId            // CORESET ID associated with the search space
monitoringSlotPeriodicityAndOffset        CHOICE { // periodicity and offset of a PDCCH
monitoring slot
            sl1            // performs PDCCH monitoring in every slot
            ...
                           // (omitted) monitoring offset values when a PDCCH monitoring periodicity
is one of 2 to 1280 slots
            sl2560      // a monitoring offset value when a PDCCH monitoring periodicity is 2560
slots
        }
        duration        // the number of slots where a search space exists for each occasion
수

        monitoringSymbolsWithinSlot
            // a position of a first symbol on which monitoring is to be performed within a PDCCH
monitoring slot
        nrofCandidates                              SEQUENCE {
            aggregationLevel1     // The number of PDCCH candidates in case of aggregation level 1
            aggregationLevel2     // The number of PDCCH candidates in case of aggregation level 2
            aggregationLevel4    // The number of PDCCH candidates in case of aggregation level 4
            aggregationLevel8    // The number of PDCCH candidates in case of aggregation level 8
            aggregationLevel16    // The number of PDCCH candidates in case of aggregation level
16
        }
        searchSpaceType                          CHOICE { // indicates a search space type
(common or UE-specific) and DCI formats
            common                                    SEQUENCE {
                dci-Format0-0-AndFormat1-0            SEQUENCE {
                    ...
                }
                dci-Format2-0                        SEQUENCE {
                    nrofCandidates-SFI                  SEQUENCE {
                        ...
                    },
                    ...
                }
                dci-Format2-1
                dci-Format2-2
                dci-Format2-3                        SEQUENCE {
                    dummy1
                    dummy2
                }
            },
```

```
            ue-Specific                          SEQUENCE {
                dci-Formats
                ...,
            }
        }
}
```

The terminal may refer to the following higher layer configurations for UE-specific PDCCH monitoring, identical or similar to those shown in Table 10.

[Table 10]

```
PDCCH-Config ::=                            SEQUENCE {
        controlResourceSetToAddModList
                // At most three CORESETs are configured by referring to CORESET
configuration
        controlResourceSetToReleaseList
        searchSpacesToAddModList
                // At most ten search spaces are configured by referring to search space
configuration
searchSpacesToReleaseList
        downlinkPreemption          // downlink preemption indicator
        tpc-PUSCH                   // configuraion of reception of a group TPC for PUSCH
transmission
        tpc-PUCCH                   // configuration of reception of a group TPC for PUCCH
transmission
        tpc-SRS                     // configuration of reception of a group TPC for SRS transmission
        ...,
}
```

The presence of one antenna port may mean a case in which a channel experienced by a symbol transmitted through the corresponding antenna port can be estimated or inferred from a channel experienced by another symbol transmitted through the same antenna port.

"Two different antenna ports are quasi co-located (QCLed)" may mean a case in which large-scale characteristics of a channel experienced by a symbol transmitted through one antenna port can be estimated or inferred from a channel experienced by a symbol transmitted through another antenna port. The large-scale characteristics of the channel may mean at least one of 'delay spread', 'Doppler spread', 'Doppler shift', 'average gain', 'average delay', and 'spatial Rx parameters'.

When time/frequency resources of a certain signal (e.g., QCL target RS) are insufficient and large-scale characteristics of a channel cannot be accurately measured with only the corresponding signal, information (i.e., QCL information) on another signal (e.g., QCL reference RS having sufficient time/frequency resources) having large-scale characteristics that can be reused for reception of the corresponding signal (i.e., QCL target RS) may be provided to the terminal to improve the channel measurement performance of the terminal. The NR communication system may support various QCL types as follows.

- QCL-Type A: including {Doppler shift, Doppler spread, average delay, delay spread}.
- QCL-Type B: including {Doppler shift, Doppler spread}
- QCL-Type C: including {Doppler shift, average delay}
- QCL-Type D: including {Spatial Rx parameters}

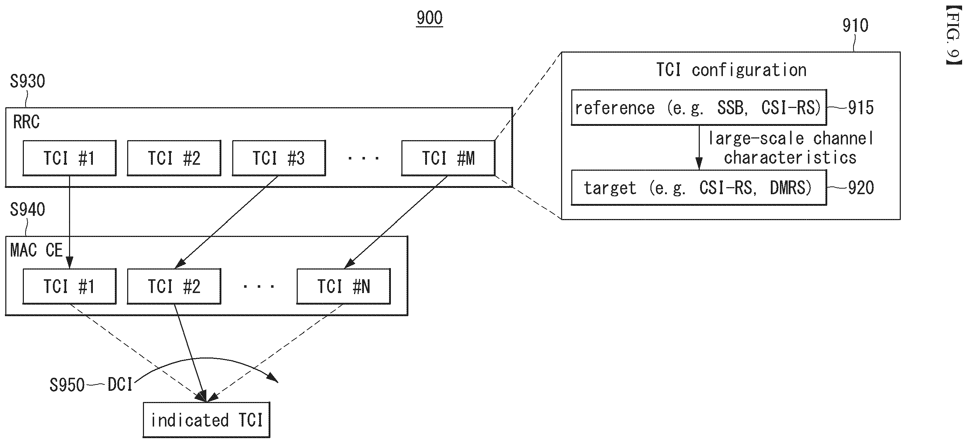

FIG. 9 is a conceptual diagram illustrating an exemplary embodiment of a QCL information transfer process through TCI state configuration and indication in a communication system.

Referring to FIG. 9, in a process of transmitting QCL information through TCI state configuration and indication in a communication system 900, a base station may configure at most M TCI states to a terminal through higher layer (i.e., RRC) signaling, in accordance with a UE capability report and a maximum value (e.g., 4, 8, 64, or 128 depending on a frequency band) defined in a technical specification (S930). In this case, each TCI state configuration 910 may include information on a signal or channel (i.e., QCL reference 915) that provides large-scale channel characteristics to a signal or channel (i.e., QCL target 920) referring to the TCI. One TCI state configuration 910 may include up to two references (i.e., qcl-Type1 and qcl-Type2), the first reference may be one of the QCL-Type A, QCL-Type B, and QCL-type C (i.e., qcl-type1∈{QCL-type A, QCL-type B, QCL-type C}), and the second reference may be the QCL-type D if present (i.e., qcl-type 2 = QCL-type D).

Allowing the base station to apply all the TCIs configured through the RRC signaling in real time may greatly increase implementation complexity of the terminal, the base station may transmit an activation message for some of the TCIs configured through the RRC signaling to the terminal through L2 signaling such as a MAC CE (S940). The base station may activate a maximum of N (<M) TCIs, and the terminal may receive a dynamic indication only for the activated TCI.

Thereafter, the base station may dynamically indicate to the terminal some of the activated N TCIs through L1 signaling such as a DCI (S950). The terminal may apply QCL information indicated by the corresponding TCI at a predetermined timing after receiving the L1 signaling, and may perform a reception operation for the signal or channel.

The TCI state indication steps including the 'RRC signaling (S930)', 'MAC CE signaling (S940)', and 'DCI signaling (S950)' of FIG. 9 may be partially omitted depending on a type of the QCL target RS. For example, when the QCL target is a PDSCH DMRS, and one or more TCI states are configured through RRC signaling, the base station may indicate the TCI state using all the steps of FIG. 9. However, when the QCL target is a PDSCH DMRS, and a single TCI state is configured through RRC signaling, the MAC CE signaling (S940) and the DCI signaling step (S950) may be omitted. Similarly, when the QCL target is a PDCCH DMRS, the DCI signaling step S940 may be omitted. Specifically, the terminal may obtain configuration information for the TCI states and QCL information with reference to the RRC signaling identical or similar to those shown in Table 11.

[Table 11]

```
TCI-State ::=                          SEQUENCE { // TCI configuration (I.1-00)
      tci-StateId        // TCI state ID
      qcl-Type1          // first QCL reference configured by referring to QCL information
      qcl-Type2          // second QCL reference configured by referring to QCL information
      ...
}

QCL-Info ::=                           SEQUENCE {
      cell                        // index of a cell in which QCL reference is transmitted
      bwp-Id                      // index of a BWP in which QCL reference is transmitted
      referenceSignal                      CHOICE {
          csi-rs                  // index of a CSI-RS to be referred when QCL reference is a CSI-
RS
          ssb                     // index of an SSB to be referred when QCL reference is an SSB
      },
      qcl-Type
         // QCL type to be applied to a QCL target (one of QCL-type A, QCL-type B, QCL-type C,
and QCL-type D)
      ...
}
```

The base station may instruct the terminal to activate or deactivate some of the TCI states configured by the RRC signaling through MAC CE signaling, or may instruct the terminal to apply a TCI state indicated by a MAC CE to the QCL target RS. For example, the base station may use the following MAC CE signaling according to the type of the QCL target RS.

- TCI state activation/deactivation MAC CE for a UE-specific PDSCH DMRS
- TCI state indication MAC CE for a UE-specific PDCCH DMRS
- TCI state activation/deactivation MAC CE for an enhanced UE-specific PDSCH DMRS

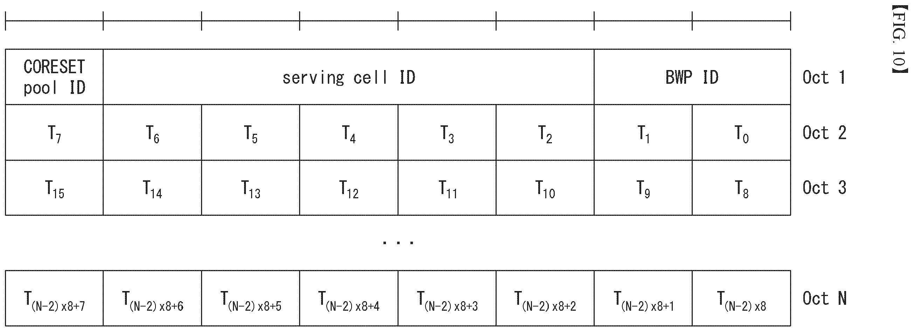

FIG. 10 is a conceptual diagram illustrating an exemplary embodiment of a TCI state activation/deactivation MAC CE in a communication system.

Referring to FIG. 10, a first octet (Oct 1) in a TCI state activation/deactivation MAC CE for a UE-specific PDSCH DMRS may include a COREST pool ID field 1010, a serving cell ID field 1020, and a BWP ID field 1030, and a second octet (Oct 2) to an N-th octet (OctN) may include Ti fields 1040 indicating TCI state IDs i. The detailed meaning of each field may be as follows, and the sizes thereof may be variable.

- Serving cell ID: a serving cell ID to which the MAC CE is applied
- BWP ID: BWP ID to which the MAC CE is applied, which indicates a BWP in association with a BWP indication field within the DCI
- Ti: indicates a TCI state ID i. When this value is set to 0, it may mean that a TCI state whose TCI state ID is i is deactivated, and when this value is set to 1, it may mean that a TCI state whose TCI state ID is i is activated. The TCI states activated by 1 may be sequentially mapped to TCI indication field code points within the DCI.
- CORESET pool ID: If a DCI scheduling a PDSCH is monitored in a CORESET that does not include a higher layer parameter *coresetPoolIndex*, the field may be ignored. If a DCI scheduling a PDSCH is monitored in a CORESET including the higher layer parameter *coresetPoolIndex*, Ti indication may be applied only when a value of the CORESET pool ID matches a value of *coresetPoolIndex* of the CORESET.

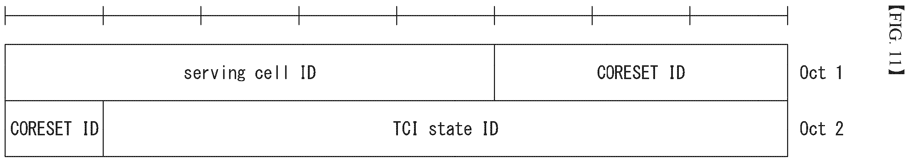

FIG. 11 is a conceptual diagram illustrating an exemplary embodiment of a TCI state indication MAC CE in a communication system.

Referring to FIG. 11, a first octet (Oct 1) in a TCI state activation/deactivation MAC CE for a UE-specific PDSCH DMRS may include a serving cell ID field 1110 and a CORESET ID field 1120, and a second octet (Oct 2) may include a CORESET ID field 1130 and a TCI state ID field 1140. The sizes thereof may be variable.

- Serving cell ID: a serving cell ID to which the corresponding MAC CE is applied.
- CORESET ID: indicates a CORESET to which the MAC CE is applied. If this value is set to 0, a CORESET configured through *controlResourceSetZero* may be a CORESET #0.
- TCI state ID: means a TCI state ID indicated by the corresponding MAC CE.

The base station may configure spatial relation information to the terminal through higher layer (e.g., RRC) signaling in order to indicate uplink beam information. The spatial relation information may mean a signaling structure for using spatial domain filters used for transmission and reception of a reference RS for spatial TX filters for uplink transmission of a target RS according to the corresponding spatial relation. The spatial reference RS may be a downlink signal such as SSB or CSI-RS, and may also be an uplink signal such as SRS. If the reference RS is a downlink signal, the terminal may use the spatial RX filter values used for receiving the reference RS as spatial TX filter values for transmitting the target RS according to the spatial relation. If the reference RS is an uplink signal, the terminal may use the spatial TX filter values used for transmitting the reference RS as the spatial TX filter values for transmitting the target RS according to the spatial relation.

The signaling structure for the spatial relation information may vary depending on the type of target RS. For example, when the target RS is an SRS, the base station may perform RRC configuration for each SRS resource based on message identical or similar to those shown in Table 12.

[Table 12]

```
SRS-SpatialRelationInfo ::=        SEQUENCE {
    servingCellId                    // index of a serving cell in which a reference RS is transmitted
    referenceSignal                          CHOICE {
        ssb-Index           // SSB index when a reference RS is SSB
        csi-RS-Index        // CSI-RS resource index when a reference RS is CSI-RS
        srs                                  SEQUENCE {
            resourceId      // SRS resource index when a reference RS is SRS
            uplinkBWP       // index of a UL BWP in which SRS is transmitted when a
reference RS is SRS
```

```
        }
    }
}
```

For example, when the target RS is an SRS, the base station may perform RRC configuration for each SRS resource, identical or similar to those shown in Table 13.

[Table 13]

```
PUCCH-SpatialRelationInfo ::=                SEQUENCE {
    pucch-SpatialRelationInfoId      // spatial relation information ID for PUCCH
    servingCellId                    // index of a serving cell in which a reference RS is
transmitted
    referenceSignal                              CHOICE {
        ssb-Index                    // SSB index when a reference RS is SSB
        csi-RS-Index                 // CSI-RS resource index when a reference RS is CSI-RS
        srs                          // specifiy a SRS resource by referring to PUCCH-SRS
configuration
},
    pucch-PathlossReferenceRS-Id
                // index of a RS resource to be used for measurement of a pathloss of a PUCCH
    p0-PUCCH-Id        // index of confuring p0 for PUCCH power control
    closedLoopIndex      // configuration value of closed-loop power control
}

PUCCH-SRS ::=   SEQUENCE {
    resource                         // SRS resource index
    uplinkBWP                        // index of a BWP in which SRS is transmitted
}
```

In the 5G NR communication system, a slot format may include downlink symbol(s), uplink symbol(s), and/or flexible symbol(s).

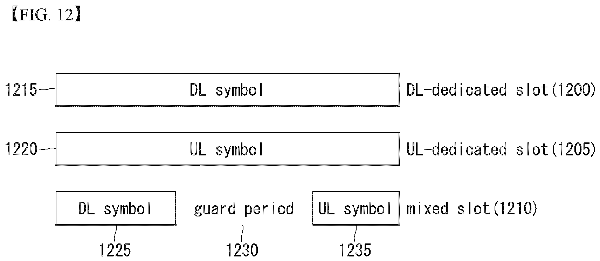

FIG. 12 is a conceptual diagram illustrating slot configurations according to slot formats in a communication system.

Referring to FIG. 12, in slot configurations according to slot formats in a communication system, a downlink dedicated slot 1200 may be a slot in which all symbols within the slot are configured only as downlink symbols 1215 according to a slot format. As another example, an uplink dedicated slot 1205 may be a slot in which all symbols within the slot are configured only as uplink symbols 1220 according to a slot format. As another example, in a downlink/uplink mixed slot 1210, some symbols within the slot may be configured as downlink symbols 1225, and some symbols within the slot may be configured as uplink symbols 1235 according to a slot format. In this case, specific symbols of the mixed slot 1210 including both the uplink and downlink symbols may be configured or indicated as a guard period 1230 for downlink-uplink switching, and the terminal may not perform transmission/reception during the guard period 1230.

In the 5G NR communication system, the base station may configure a 'slot format' over one or more slots for each serving cell to the terminal through a higher layer parameter *tdd-UL-DL-ConfigurationCommon.* In this case, the higher layer parameter *tdd-UL-DL-ConfigurationCommon* may include or refer to at least one of the following information.

- Reference subcarrier spacing: reference numerology $\mu_{ref}$
- Pattern 1: A first pattern.
- Pattern 2: A second pattern.

Here, the pattern 1 or pattern 2 may include at least one of the following configurations.

- Slot configuration periodicity (i.e., *dl-UL-TransmissionPeriodicity*): Slot configuration periodicity P expressed in units of msec
- Number of downlink dedicated slots (i.e., *nrofDownlinkSlots*): The number $d_{slots}$ of slots composed only of downlink symbols
- Number of downlink symbols (i.e., *nrofDownlinkSymbols*): The number $d_{sym}$ of downlink symbols
- Number of uplink dedicated slots (i.e., *nrofUplinkSlots*): The number $u_{slots}$ of slots composed only of uplink symbols
- Number of uplink symbols (i.e., *nrofUplinkSymbols*): The number $u_{sym}$ of uplink symbols

The slot configuration periodicity P msec of the first pattern may include $S = P \cdot 2^{\mu_{ref}}$ slots, and in this case, the numerology may follow $\mu_{ref}$. In addition, among the S slots, the first $d_{slots}$ slots may include only downlink symbols, and the last $u_{slots}$ slots may include only uplink symbols. In this case, $d_{sym}$ symbols after first $d_{slots}$ slots may be downlink symbols. In addition, $u_{sym}$ symbols before last $u_{slots}$ slots may be uplink symbols. The remaining symbols (i.e., (S - $d_{slots}$ -

$$u_{slots}) \cdot N_{symb}^{slot} - d_{sym} - u_{sym}$$

symbols) that are not designated as downlink symbols or uplink symbols in the pattern may be flexible symbols.

If the second pattern is configured and the slot configuration periodicity of the second pattern is $P_2$, a slot configuration periodicity $P + P_2$ msec configured with a combination of the first pattern and the second pattern may include first $S = P \cdot 2^{\mu ref}$ slots and second $S_2 = P_2 \cdot 2^{\mu ref}$ slots. In this case, the positions and numbers of downlink symbols, uplink symbols, and flexible symbols in the second pattern may be configured with reference to the description of the first pattern based on configuration information of the second pattern. In addition, when the second pattern is configured, the terminal may assume that $P+P_2$ is a divisor of 20 msec.

The base station may override direction(s) of 'flexible symbol(s)' among symbols configured through the higher layer parameter *tdd-UL-DL-ConfigurationCommon* by using the higher layer parameter *tdd-UL-DL-ConfigurationDedicated*) based on the following information.

- Slot configuration set (i.e., *slotSpecificConfigurationsToAddModList*): A set of slot configurations
- Slot index (i.e., slotIndex): An index of a slot included in the set of slot configurations
- Symbol directions (i.e., *symbols*): The directions of the symbols indicated by the slot index (i.e., *slotIndex*). If all symbol directions are downlink (symbols = allDownlink), all symbols within the corresponding slot are downlink symbols. If all symbol directions are uplink (symbols = allUplink), all symbols within the corresponding slot are uplink symbols. If the symbol directions are explicit (symbols = explicit), *nrofDownlinkSymbols* may indicate the number of downlink symbols located in the first part of the corresponding slot, and *nrofUplinkSymbols* may indicate the number of uplink symbols located in the last part of the corresponding slot. If the *nrofDownlinkSymbols* or the *nrofUplinkSymbols* is omitted, the corresponding parameter may be regarded as indicating a value of 0. The remaining symbols within the slot become flexible symbols.

In the 5G communication system, the base station may indicate a slot format to the terminal based on L1 signaling. For example, when the terminal receives a higher layer parameter *SlotFormatIndicator* from the base station, the terminal may obtain configuration information a slot format indication-RNTI (i.e., SFI-RNTI). Meanwhile, when the terminal receives a higher layer parameter *dci-PayloadSize* from the base station, the terminal may obtain configuration information of a payload size of the DCI format 2_0. In addition, the terminal may additionally receive, from the base station, information on PDCCH candidate(s), CCE aggregation level, and search space set(s) of a CORESET for monitoring the DCI format 2_0. Each slot format indication (SFI) index field in the DCI format 2_0 may indicate a slot format to be applied to each slot in a slot set of a DL BWP and a UL BWP from a slot in which the terminal has detected the corresponding DCI format 2_0. In this case, the size of the slot set may be equal to or greater than a PDCCH monitoring periodicity of the DCI format 2_0. For example, when the slot set is composed of N slots, the DCI format 2_0 may include N SFI index fields, and each SFI index field may indicate a format value of Table 14 and Table 15 below. In Tables 14 and 15, 'D' may mean a downlink symbol, 'U' may mean an uplink symbol, and 'F' may mean a flexible symbol.

[Table 14]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D D | | D | F | F | U | U | U | U | U | U | U | U | U |

[Table 15]

| | | | | | | | | | | | | | | |
|---|---|---|---|---|---|---|---|---|---|---|---|---|---|---|
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |

(continued)

| 48 | D | F | U | U | U | U | U | D | F | U | U | U | U | U |
|---|---|---|---|---|---|---|---|---|---|---|---|---|---|---|
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56-254 | Reserved |||||||||||||
| 255 | UE determines a slot format of a slot based on a higher layer parameter *tdd-UL-DL-ConfigurationCommon* or a higher layer parameter *tdd-UL-DL-ConfigurationDedicated*, and a detected DCI format (when exists). |||||||||||||

In the 5G NR communication system, it may be possible to support flexible and dense wireless backhaul links for each cell through the IAB feature, without support of a wired network.

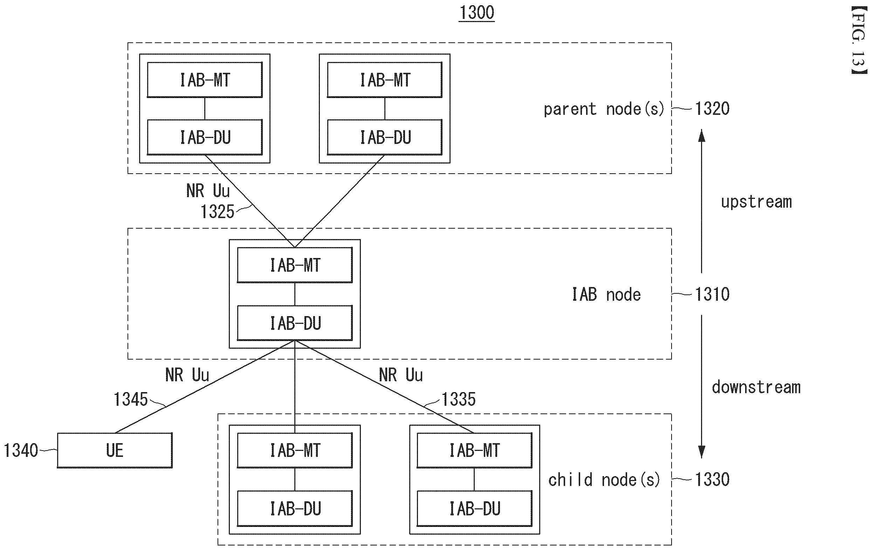

FIG. 13 is a conceptual diagram illustrating an exemplary embodiment of an IAB network in a communication system.

Referring to FIG. 13, a communication system 1300 may include one or more communication nodes. The communication nodes of the communication system 1300 may constitute an IAB network. For example, the communication system 1300 may include one or more IAB nodes. FIG. 13 shows an exemplary embodiment in which one IAB node communicates with one or more upper nodes and one or more lower nodes. However, this is only an example for convenience of description, and exemplary embodiments of the present disclosure are not limited thereto.

The communication system 1300 may include a plurality of IAB nodes. For example, the communication system 1300 may include a first IAB node 1310, one or more parent nodes 1320 corresponding to upper nodes of the first IAB node 1310, and/or one or more child nodes corresponding to lower nodes of the first IAB node 1310. Here, each of the one or more parent nodes 1320 may be referred to as a 'donor node'. The IAB node 1310, the one or more parent nodes 1320, and/or the one or more child nodes 1330 may constitute the IAB network. Each of the IAB nodes 1310, 1320, and 1330 constituting the IAB network may function as a type of repeater configured based on a front-haul structure. In the communication system 1300 to which the IAB network technology is applied, it is possible to support flexible and dense wireless backhaul links for each cell without support of a wired network.

Each of the IAB nodes 1310, 1320, and 1330 may include an IAB-DU and an IAB-MT. The IAB-MT may allow each IAB node to function as a terminal in communication with an upper node. For example, the first IAB node 1310 may communicate with the upper parent nodes 1320 through the IAB-MT. On the other hand, the IAB-DU may allow each IAB node to function as a base station or a cell in communication with a lower node. For example, the first IAB node 1310 may communicate with the lower child nodes 1330 or a terminal 1340 through the IAB-DU.

The IAB-MT of the first IAB node 1310 may be connected to the IAB-DUs of the parent nodes 1320 through Uu interfaces 1325. The IAB-DU of the first IAB node 1310 may be connected to the IAB-MTs of the child nodes 1330 through Uu interfaces 1335. The IAB-DU of the first IAB node 1310 may be connected to a terminal 1340 through a Uu interface 1345.

After the IAB node constituting the IAB network completely decodes a received signal, the IAB node may re-encode the decoded received signal, and amplify and transmit it. The IAB node may be classified as a type of regenerative relay. To this end, the IAB node may support a control plane (CP) and a user plane (UP) from the parent node to the terminal based on a protocol stack structure including the L1 and L2 layers, or higher layers.

The IAB node constituting the IAB network has an advantage of being able to perform various operations including operations as a base station and a terminal. On the other hand, the IAB node has disadvantages in that implementation complexity and production cost are relatively high, and a delay required for retransmission may be relatively large.

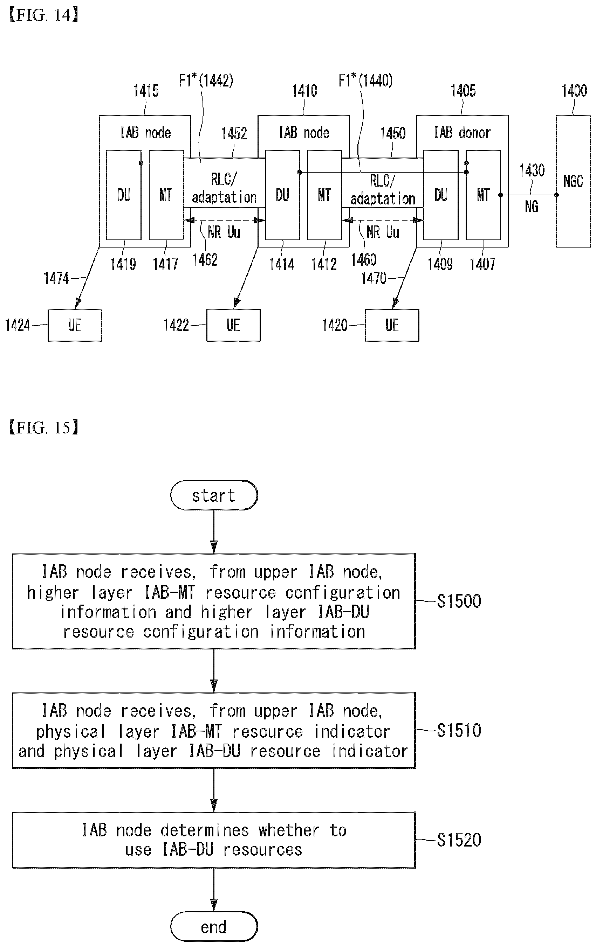

FIG. 14 is a block diagram illustrating an exemplary embodiment of a functional split structure of a central unit (CU) and a distributed unit (DU) in a communication system.

Referring to FIG. 14, in a CU-DU functional split structure in the IAB network, IAB nodes 1410 and 1415 in a two-hop chain are connected to an IAB donor 1405, and each of the IAB nodes 1410 and 1415 and terminals 1420, 1422, and 1424 may be connected to a next generation core (NGC) 1400 in a stand-alone (SA) mode. The IAB nodes 1410 and 1415 may include one DU and one MT, respectively. A certain IAB node (e.g., 1415) may be connected to the parent IAB node 1410 or the IAB donor 1405 via an MT 1417. As another example, a certain IAB node (e.g., 1410) may establish a RLC channel with the MT 1417 of the child IAB node 1415 through a DU 1414. In this case, the RLC channels 1450 and 1452 established for the MTs 1412 and 1417 may additionally include some information for IAB operations in addition to the existing components of a RLC channel for a terminal. Accordingly, the RLC channels 1450 and 1452 may be collectively referred to as 'modified RLC* (RLC*)'.

One IAB node may be connected to DUs of one or more parent IAB nodes or IAB donors. In this case, the IAB node may include a plurality of DUs, but each DU of the IAB node may have an F1-C connection 1440 or 1442 with a single IAB donor CU-CP. Even if the IAB node has a plurality of UP connections, the IAB node may operate based on a single CP connection (i.e., the IAB node may operate by being connected to a single IAB donor), so that no confusion occurs in operations of the IAB node.

The IAB donor 1405 may include the DU for supporting MTs of terminals and child IAB nodes. The IAB donor 1405 may include the CU 1407 for DUs 1409, 1414, and 1419 of itself and all child IAB nodes. It may be assumed that a certain IAB donor has a single IAB donor, and an IAB donor that manages the corresponding IAB donor may be changed by a topology adaptation function. A DU of an IAB node may be connected to a CU of the corresponding IAB donor through an F1 interface or a modified F1 interface (modified F1, F1*) (e.g., 1440, 1442). F1*-user plane (U) may be operated on the RLC channels 1450 and 1452 between the corresponding IAB-MTs 1417 and 1412 and the DUs 1414 and 1409 of the parent IAB node or donor.

Hereinafter, for convenience of description, in the present disclosure, higher layer parameters or higher layer configurations may not be limited to the above-described L2 and L3 signaling, and may collectively include information transmitted or configured through the F1 interfaces 1440 and 1442, the NG interface 1430 for connecting the CU to the NGC, the X2 interface, and the like.

Although it may seem that the slot format configuration and indication methods described with reference to FIGS. 11 and 12 are limited to terminals performing communication with the base station, this is only an example for convenience of description, and exemplary embodiments of the present disclosure are not limited thereto. For example, the slot format configuration and indication methods described with reference to FIGS. 11 and 12 may be similarly applied to the case of IAB-DU and/or IAB-MT. For example, for each serving cell of the IAB-DU, the IAB-DU may receive a higher layer parameter *IAB-DU-Resource-Configuration* for IAB-DU resource configuration, thereby configuring a slot format in each slot set. On the other hand, the IAB-MT may receive configuration information of 'slot format' over one or more slots for each serving cell through a higher layer parameter *tdd-UL-DL-ConfigurationDedicated-IAB-MT* from at least one upper node of the IAB-MT. When the IAB-MT receives the higher layer parameter *tdd-UL-DL-ConfigurationDedicated-IAB-MT,* the received higher layer parameter may substitute the higher layer parameter *tdd-UL-DL-ConfigurationDedicated* in the above-described slot format configuration and indication method. Specifically, the higher layer parameter *tdd-UL-DL-ConfigurationDedicated-IAB-MT* may include the following information.

☐ IAB-MT slot configuration set (i.e., *slotSpecificConfigurationsToAddModList-IAB-MT*): A set of slot configurations
☐ Slot index (i.e., *sloIndex*): Index of a slot included in the set of slot configurations
☐ IAB-MT symbol directions (i.e., *symbols-IAB-MT*): The direction of the slot indicated by the slot index.
☐ If the IAB-MT symbol directions are all downlink (*symbols-IAB-MT*= allDownlink), all symbols within the corresponding slot are downlink symbols.
☐ If the IAB-MT symbol directions are all uplink (*symbols-IAB-MT* = allUplink), all symbols within the corresponding slot are uplink symbols.
☐ If the IAB-MT symbol directions are explicit (*symbols-IAB-MT* = explicit), the *nrofDownlinkSymbols* may indicate the number of downlink symbols located in the first part of the slot, and the *nrofUplinkSymbols* may indicate the number of uplink symbols located in the last part of the corresponding slot. If the *nrofDownlinkSymbols* or the *nrofUplinkSymbols* is omitted, the corresponding parameter may be regarded as indicating a value of 0. The remaining symbols within the slot become flexible symbols.
☐ If the IAB-MT symbol directions are IAB-MT explicit (*symbols-IAB-MT = explicit-IAB-MT*), the *nrofDownlinkSymbols* may indicate the number of downlink symbols located in the first part of the slot, and the *nrofUplinkSymbols* may indicate the number of uplink symbols located in the last part of the corresponding slot. If the *nrofDownlinkSymbols* or the *nrofUplinkSymbols* is omitted, the corresponding parameter may be regarded as indicating a value of 0. The remaining symbols within the slot become flexible symbols.

Similarly to the above-mentioned normal terminal, the IAB-MT may also receive the DCI format 2_0, and through this, may receive configuration information of a slot format from the base station of the LAB-DU of the parent node. In the case of DCI format 2_0 received by the IAB-MT, candidate values of each SFI field may not be limited to the values shown in Table 14. For example, the candidate values of each SFI field of the DCI format 2_0 received by the IAB-MT may further include values shown in Table 16.

[Table 16]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 | U | U | U | U | U | U | U | U | U | U | U | U | U | F |
| 57 | U | U | U | U | U | U | U | U | U | U | U | U | F | F |
| 58 | U | U | U | U | U | U | U | U | U | U | U | F | F | F |
| 59 | U | U | U | U | U | U | U | U | U | U | F | F | F | F |
| 60 | U | U | U | U | U | U | U | U | U | F | F | F | F | F |
| 61 | U | U | U | U | U | U | U | U | F | F | F | F | F | F |
| 62 | U | U | U | U | U | U | U | F | F | F | F | F | F | F |
| 63 | U | U | U | U | U | U | F | F | F | F | F | F | F | F |
| 64 | U | U | U | U | U | F | F | F | F | F | F | F | F | F |
| 65 | U | U | U | U | F | F | F | F | F | F | F | F | F | F |
| 66 | U | U | U | F | F | F | F | F | F | F | F | F | F | F |
| 67 | U | U | F | F | F | F | F | F | F | F | F | F | F | F |
| 68 | U | F | F | F | F | F | F | F | F | F | F | F | F | F |
| 69 | U | F | F | F | F | F | F | F | F | F | F | F | F | D |
| 70 | U | U | F | F | F | F | F | F | F | F | F | F | F | D |
| 71 | U | U | U | F | F | F | F | F | F | F | F | F | F | D |
| 72 | U | F | F | F | F | F | F | F | F | F | F | F | D | D |
| 73 | U | U | F | F | F | F | F | F | F | F | F | F | D | D |
| 74 | U | U | U | F | F | F | F | F | F | F | F | F | D | D |
| 75 | U | F | F | F | F | F | F | F | F | F | F | D | D | D |
| 76 | U | U | F | F | F | F | F | F | F | F | F | D | D | D |
| 77 | U | U | U | F | F | F | F | F | F | F | F | D | D | D |
| 78 | U | U | U | U | U | U | U | U | U | U | U | U | F | D |
| 79 | U | U | U | U | U | U | U | U | U | U | U | F | F | D |
| 80 | U | U | U | U | U | U | U | U | U | U | F | F | F | D |
| 81 | U | U | U | U | U | U | U | U | U | U | U | F | D | D |
| 82 | U | U | U | U | U | U | U | U | U | U | F | F | D | D |
| 83 | U | U | U | U | U | U | U | U | U | F | F | F | D | D |
| 84 | U | F | D | D | D | D | D | D | D | D | D | D | D | D |
| 85 | U | U | F | D | D | D | D | D | D | D | D | D | D | D |
| 86 | U | U | U | F | D | D | D | D | D | D | D | D | D | D |
| 87 | U | F | F | D | D | D | D | D | D | D | D | D | D | D |
| 88 | U | U | F | F | D | D | D | D | D | D | D | D | D | D |
| 89 | U | U | U | F | F | D | D | D | D | D | D | D | D | D |
| 90 | U | F | F | F | D | D | D | D | D | D | D | D | D | D |
| 91 | U | U | F | F | F | D | D | D | D | D | D | D | D | D |
| 92 | U | U | U | F | F | F | D | D | D | D | D | D | D | D |
| 93 | U | U | U | U | U | U | U | U | U | F | F | F | F | D |

27

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 94 | U | U | U | U | U | U | F | F | F | F | F | F | D | D |
| 95 | U | U | U | U | U | U | F | F | D | D | D | D | D | D |
| 96 | U | U | U | U | U | U | U | D | D | D | D | D | D | D |

The IAB-MT may receive information on symbols not to be used by the IAB-MT for a certain serving cell through a higher layer parameter (e.g., *Provided Guard Symbols* MAC CE). The IAB-MT may perform a transition (i.e., operation change) between the IAB-MT and the IAB-DU of the IAB node during a time period including the symbols not used by the IAB-MT. The base station may signal a numerology for the symbols to the terminal through a higher layer parameter (e.g., *Provided Guard Symbols* MAC CE).

In a cell of a certain IAB-DU, a symbol within a slot may be configured as one of three types: 'hard', 'soft', and 'unavailable (or not-available)' (HSNA).

If a certain downlink, uplink, or flexible symbol is configured as the hard type, the cell of the IAB-DU may perform a signal transmit and/or reception operation in the corresponding symbol. This may mean that the fact that a certain symbol is configured as the hard type guarantees the reflection of the downlink, uplink, or flexible symbol configuration of the IAB-DU for the corresponding symbol.

Specifically, in an exemplary embodiment of the communication system, an F1 application protocol (F1AP) signaling as shown in Table 16 may be provided, and the upper IAB node (e.g., IAB donor, parent node, core network, etc.) may configure a DU resource type of the lower IAB node (e.g., IAB node, child node). Referring to Table 17, information of the DU resource type may include one HSNA slot configuration list consisting of one or more HSNA slot configurations. In this case, one HSNA slot configuration list may include HSNA slot configurations according to the maximum number of HSNAs (e.g., *maxnoofHSNA*). The n-th HSNA slot configuration included in the HSNA slot configuration list may include information on whether to apply the hard type, soft type, or not-available type to each of downlink symbols, uplink symbols, and flexible symbols of the n-th slot according to an application periodicity and a starting time of the HSNA slot configuration list.

[Table 17]

| IE/group name | range | IE type and reference | liminality |
|---|---|---|---|
| HSNA slot configuration list | 0..1 | | |
| >HSNA slot configuration item | 1 .. *<maxnoofHSNASlo ts>* | | |
| »HSNA (Downlink) | | Enumerated (H, S, NA) | HSNA value for a downlink symbol of a slot |
| »HSNA (Uplink) | | Enumerated (H, S, NA | HSNA value for a uplink symbol of a slot |
| »HSNA (Flexible) | | Enumerated (H, S, NA | HSNA value for a flexible symbol of a slot |

If a certain downlink, uplink, or flexible symbol is configured as the soft type, the IAB-DU cell may perform a signal transmission and reception operation in the symbol when at least one of the following conditions is satisfied.

- Condition 1: The IAB-MT (co-located/associated with the IAB-DU) does not perform transmission or reception in the corresponding symbol.

- Condition 2: The IAB-MT (co-located/associated with the IAB-DU) can perform transmission or reception in the corresponding symbol, but the transmission/reception operation of the IAB-MT does not change due to the use of the symbol at the IAB-DU.

- Condition 3: The IAB-MT (co-located/associated with the IAB-DU) receives a DCI format 2_5 indicating the corresponding soft symbols as 'available'.

If a certain downlink, uplink, or flexible symbol is configured as the 'unavailable (or not-available (NA)) type', the IAB-DU (i.e., cell) may not perform transmission or reception in the symbol.

If the IAB-DU transmits one of a cell-specific, periodic, or semi-static signal or channel included in the following list in symbol(s) of a certain slot, the IAB-DU may perform a transmission/reception operation by assuming that the corresponding symbol(s) in the corresponding slot are configured as the hard type regardless of the configured resource type.

- SS/PBCH block, CSS set for a type0-PDCCH configured by a system information block 1 (SIB1) for PDCCH configuration (i.e., PDCCHs for a type0-PDCCH CSS sets configured by *pdcchConfigSIB1*), periodic CSI-RS, and/or the like

If the IAB-DU receives one of a cell-specific, periodic, or semi-static signal or channel included in the following list in symbol(s) of a certain slot, the IAB-DU may perform a transmission/reception operation by assuming that the corresponding symbol(s) in the corresponding slot are configured as the hard type regardless of the configured resource type.

□ PRACH, scheduling request (SR)

- Following information may be configured for each cell in the set of cells of the IAB-DU.

□ IAB-DU cell identifier (i.e., *iabDuCellId-AI*): Identifier of the IAB-DU cell
□ AI position within DCI format (i.e., *positionInDCI-AI*): Position of an availability identifier (AI) index field within the DCI format 2_5.
□ Availability combinations (i.e., *availabilityCombinations*): includes a list of the following two pieces of information for availability combinations.

- Resource availability (i.e., *resourceAvailability*): indicates resource availability for soft symbols included in one or more slots of the IAB-DU cell. The availability of soft symbols within one slot may be determined by referring to values in Table 17.
- Availability combination identifier (i.e., *availabilityCombinationId*): indicates a mapping between the resource availability (i.e., *resourceAvailability*) and the AI index field in the DCI format 2_5.

As described above, in the DCI format 2_5, one AI index field may indicate to the IAB-DU the availability of soft symbols included in each slot in a certain slot set. In this case, the slot set may start from the earliest slot among the slots of the IAB-DU overlapping in the time axis with the slot in which the IAB-MT detects the corresponding DCI format 2_5. In addition, the size of the slot set may be greater than or equal to a PDCCH monitoring periodicity of the DCI format 2_5 given from a higher layer parameter *SearchSpace*. The AI index field of the DCI format 2_5 may include $\max\{\lceil \log_2(maxAIindex) \rceil, 1\}$ bits and may be mapped to one of the values of Table 18. In this case, the maximum value of the AI index (i.e., *maxAIindex*) may mean a maximum value among the provided availability combination identifiers (i.e., *availabilityCombinationId*). Table 18 may indicate a mapping relationship between the resource availability value and the soft symbol type within one slot.

[Table 18]

| Value | Indication |
|-------|-----------|
| 0 | No indication of availability for soft symbols |
| 1 | Indicates that downlink symbols are available. No indication of availability for uplink and flexible soft symbols |
| 2 | Indicates that uplink symbols are available. No indication of availability for downlink and flexible soft symbols |
| 3 | Indicates that downlink and uplink soft symbols are available. No indication of availability for flexible soft symbols |

(continued)

| Value | Indication |
|---|---|
| 4 | Indicates that flexible soft symbols are available. No indication of availability for downlink and uplink soft symbols |
| 5 | Indicates that downlink and flexible soft symbols are available. No indication of availability for uplink soft symbols |
| 6 | Indicates that uplink and flexible soft symbols are available. No indication of availability for downlink soft symbols |
| 7 | Indicates that downlink, uplink, and flexible soft symbols are available |

As described above, the upper IAB node including the IAB donor may indicate whether the lower IAB node uses the soft symbols based on the DCI format 2_5 and the contents of Table 17. On the other hand, such the function may be designed assuming that the IAB node operates in a half-duplex manner. In other words, such the function may be designed mainly assuming that the MT and DU of the IAB node operate in a time division multiplexing (TDM) scheme or time division duplexing (TDD) scheme.

In an exemplary embodiment of the communication system, the F1AP signaling as shown in Table 19 may be used. Through this, the IAB node may report or deliver, to the upper IAB node (e.g., IAB donor or parent node), multiplexing information on a multiplexing capability between the IAB-DU of the IAB node (or, cell of a gNB-DU) and the IAB-MT of the IAB node (or, a cell configured in a co-located IAB-MT). Referring to Table 19, the multiplexing information may include one IAB-MT cell list composed of information on one or more IAB-MT cells. In this case, one IAB-MT cell list may include IAB-MT cell information according to the maximum number of serving cells (i.e., *maxnoofServingCells*). The n-th IAB-MT cell information included in the IAB-MT cell list may include a NR cell identity (ID) information of the corresponding cell and information on whether the following four types of multiplexing are supported.

- DU_RX/MT_RX multiplexing: informs whether the IAB node supports simultaneous receptions in the DU and the MT
- DU_TX/MT_TX multiplexing: informs whether the IAB node supports simultaneous transmissions in the DU and the MT
- DU_TX/MT_RX multiplexing: informs whether the IAB node can simultaneously perform transmission in the DU and reception in the MT
- DU_RX/MT_TX multiplexing: informs whether the IAB node can simultaneously perform reception in the DU and transmission in the MT

[Table 19]

| IE/group name | range | IE type and reference | liminality |
|---|---|---|---|
| IAB-MT cell list | 1 | | |
| >IAB-MT cell item | 1.. <maxnoofSer-vingC ells> | | |
| >>NR cell iden-tity | | Bit string (size: 36) | Identity of a serving cell configured for a co-located IAB-MT |
| >>DU_RX/MT_ RX | | Enumerated (sup-ported, not-sup-ported) | Indicates whether the IAB node supports simultaneous receptions in DU and MT |
| >>DU_TX/MT_ TX | | Enumerated (sup-ported, not-sup-ported) | Indicates whether the IAB node supports simultaneous transmissions in DU and MT |
| >>DU_TX/MT_ RX | | Enumerated (sup-ported, not-sup-ported) | Indicates whether the IAB node simultaneously supports transmission in DU and reception in MT |
| >>DU_RX/MT_ TX | | Enumerated (sup-ported, not-sup-ported) | Indicates whether the IAB node simultaneously supports reception in DU and transmission in MT |

According to Table 19, the IAB node may semi-statically report the DU/MT multiplexing capability or whether to support the DU/MT simultaneous operations for each cell, but whether the IAB node supports the DU/MT simultaneous operations may depend entirely on the corresponding IAB node itself. The upper IAB node may not support controlling the DU/MT simultaneous operations of the lower IAB node dynamically or semi-statically depending on a situation.

FIG. 15 is a flowchart illustrating a first exemplary embodiment of a method for resource management of an IAB node in a communication system.

FIG. 15 shows a first exemplary embodiment of the method for resource management of an IAB node by taking the operation of the IAB node determining whether to use the IAB-DU resources as an example. However, this is only an example for convenience of description, and exemplary embodiments of the present disclosure are not limited thereto. For example, in the present disclosure, configurations described for 'whether to use IAB-DU resources' may be applied similarly or identically also to 'whether to use IAB node resources', 'whether to use IAB-MT resources', 'whether to use DU/MT simultaneous operation resources', and the like.

Referring to FIG. 15, in the order of determining whether to use the IAB-DU resources of the IAB node, the IAB node may identify whether the corresponding IAB-DU resources are available, and in order to determine whether to use the IAB-DU resources, may receive, from the upper IAB node, at least one of higher layer IAB-MT resource configuration information and higher layer IAB-DU resource configuration information (S 1500). As an example, the higher layer IAB-MT resource configuration information may include slot configuration (i.e., downlink/uplink/flexible (DUF)) information and symbol configuration information for a cell (or cell group) of the IAB-MT. As another example, the higher layer IAB-DU resource configuration information may include slot configuration (i.e., downlink/uplink/flexible (DUF)) information and symbol configuration information for a cell (or cell group) of the IAB-DU.

The higher layer IAB-DU resource configuration information may include type (i.e., hard, soft, or not-available) information of the IAB-DU resources configured by the upper IAB node. The higher layer IAB-DU resource configuration information may include a part or all of cell-specific/semi-static downlink signals and channels such as SSB(s), type 0-PDCCH CSS set configured by a SIB1 for PDCCH configuration, CSI-RS, etc. configured in a cell (or cell group) configured to the IAB-DU. The higher layer IAB-DU resource configuration information may include a part or all of cell-specific/semi-static downlink signals and channels such as PRACH, SR, etc. configured in a cell (or cell group) configured to the IAB-DU.

In addition to the above-described higher layer configuration, the IAB node may receive at least one of a physical layer (L1 signaling) IAB-MT resource indicator and a physical layer IAB-DU resource indicator from the upper IAB node (S1510). As an example, the physical layer IAB-MT resource indicator may be a DCI format 2_0 including a slot format indicator for a cell (or a set of cells) which is configured to the IAB-MT. As another example, the physical layer IAB-DU resource indicator may be a DCI format 2_5 including a soft resource AI of the IAB-DU.

Finally, the IAB node may finally determine whether to use the IAB-DU resources based on the higher layer signaling (S1500) and the L1 signaling (S1510) (S1520).

Meanwhile, in general, it may not be possible to force all terminals to implement the same feature. The UE capability report may enable an expensive terminal to implement a large amount of features with high performance, and may enable a low-cost terminal to implement a small amount of features with low performance. The UE capability report may make it possible to secure the degree of freedom in terminal implementation for various situations, and when the capability information is reported to the network, the base station may configure each function within the limits supported by each terminal. Certain functions may be promised to be mandatory for all terminals to implement, and in this case, it may be possible to omit the UE capability report for the mandatory functions.

It may be possible for the terminal to perform UE capability reporting of different values for one function for each frequency band or for each duplex scheme. For example, the terminal may support a specific function for a frequency range 1 (FR1), which means a band below 6 GHz, but may report to the base station that the terminal does not support a specific function for a frequency range 2 (FR2), which means a band above 6 GHz. As another example, the terminal may report to the base station that a specific function is supported in the TDD scheme but not supported in the FDD scheme.

When the terminal performs the UE capability reporting, the base station should follow (should not violate) the content of the UE capability report when perform configuration, indication, or scheduling on the terminal. If the base station indicates, to the terminal, configuration, indication or scheduling contrary to the UE capability report, the terminal may ignore it.

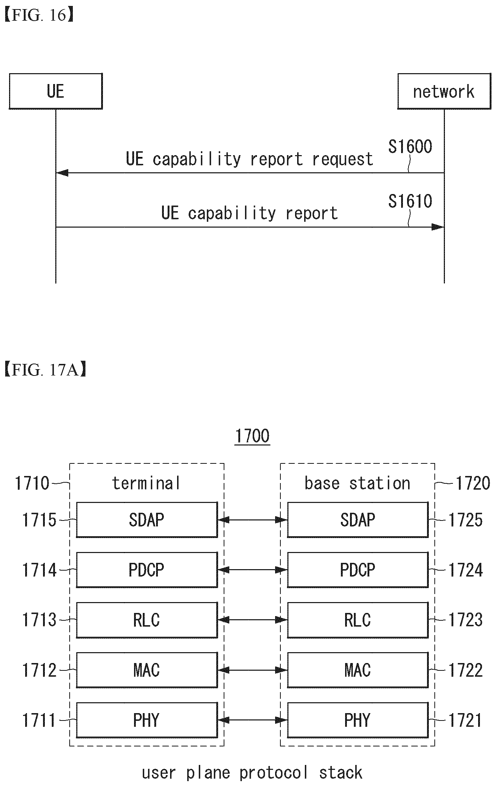

FIG. 16 is a flowchart illustrating an exemplary embodiment of a UE capability reporting procedure in a communication system.

Referring to FIG. 16, in the UE capability reporting procedure, the base station may transmit a UE capability report request signal to the terminal through a higher layer parameter *UECapabilityEnquiry* when the terminal is in RRC connected mode (i.e., RRC_CONNECTED state) (S 1600). In this case, the network may refer to only the UE capability report after access stratum (AS) security activation, and may not retransmit or report the UE capability report before the AS security activation to the core network (CN). Upon receiving the UE capability report request signal, the terminal may compile UE capability information according to a specific procedure, and report it to the base station through a UE capability information signal (e.g., *UECapabilityInformmation*) (S1610).

The specific procedure for compiling the UE capability information signal may include a procedure of generating at least one of a list (i.e., *supportedBandCombinationList*) of band(s) or band combination(s) (BC(s)) supported by the terminal, feature set (FS) information related to feature sets supported by the terminal, or feature set combination (FSC) information related to feature set combinations supported by the terminal. For example, when the base station requests a UE capability report from the terminal in order to obtain information on band(s) or band combination(s) supported by the terminal, the terminal may report which band(s) it supports for each radio access technology (RAT). To this end, the base station may set a RAT-type in a UE RAT capability report request signal (e.g., *UE-CapabilityRAT-Request*), which is included in a UE RAT capability report request list signal (e.g., *ue-CapabilityRAT RequestList*) that is a higher layer message, to one of 'nr', 'eutra-nr', 'eutra', and 'eutra-fdd'. This may mean that the base station may request a UE capability report for one or more RATs or RAT combinations from the terminal, and in this case, the terminal may respond to each request for a list of support bands for a plurality of RATs or RAT combinations. For example, if the RAT-type is set to 'nr', the terminal may include a list of bands or band combinations to which NR-DC can be applied in the UE capability report. As another example, if the RAT-type is set to 'eutra-nr', the terminal may include a list of bands or band combinations applicable to multi-RAT DC (MR-DC) such as EN-DC, NGEN-DC, NE-DC, or the like in the UE capability report. In addition, when the base station requests a UE capability report, the base station may provide, to the terminal, a list of bands for which the terminal determines whether support is provided, through a higher layer parameter *frequencyBandListFilter.* For the bands included in the higher layer parameter *frequencyBandListFilter,* the terminal may determine a candidate band combination by considering 'predetermined RAT types supported for each band', 'information on RAT-types requested by the base station', etc., and may include the candidate band combination in the UE capability report.

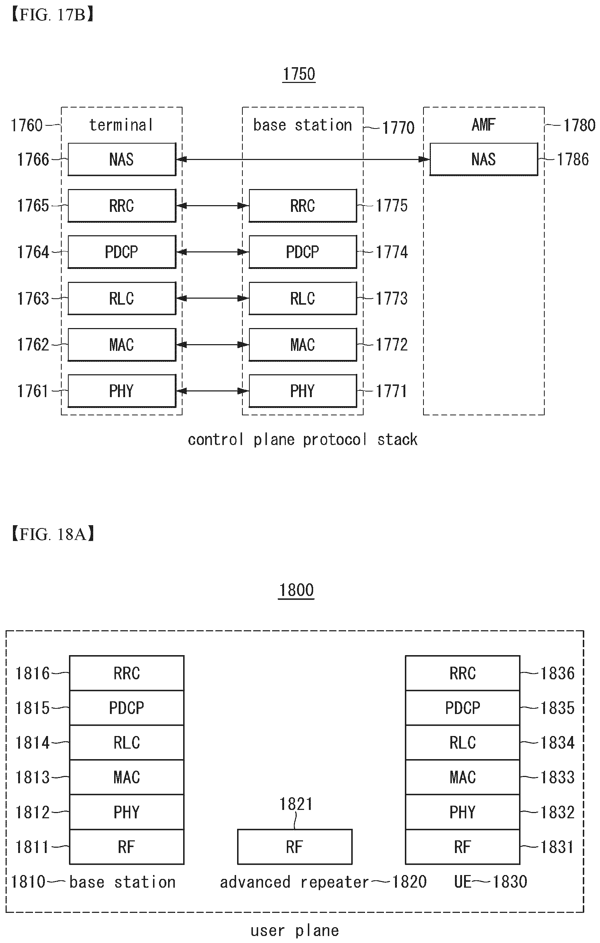

FIGS. 17A and 17B are conceptual diagrams for describing a first exemplary embodiment of a user plane protocol stack structure and a control plane protocol stack structure in a communication system.

Referring to FIGS. 17A and 17B, a radio interface protocol stack or radio interface protocol stack structures 1700 and 1750 may be defined in a radio connection section between communication nodes. For example, the radio interface protocol stack may be divided into a physical layer, a data link layer, a network layer, and the like, which are vertically configured.

The radio interface protocol stack may be divided into the user plane protocol stack 1700 and the control plane protocol stack 1750. Here, the control plane may be a plane for transmitting a control signal. The control signal may be referred to as a signaling signal. The user plane may be a plane for transmitting user data.

Referring to FIG. 17A, the communication system may include a terminal 1710 and a base station 1720. The terminal 1710 may be referred to as a user equipment (UE). The base station 1720 may correspond to an eNB, a gNB, or the like. The terminal 1710 and the base station 1720 may perform mutual data signal transmission/reception based on the user plane protocol stack structure 1700 shown in FIG. 17A.

In the user plane air interface protocol stack structure 1700 of the communication system, the terminal 1710 and the base station 1720 may include PHY layers 1711 and 1721 included in L1, MAC layers 1712 and 1722, RLC layers 1713 and 1723, and packet data convergence protocol (PDCP) layers 1714 and 1724 included in L2, service data adaptation protocol (SDAP) layers 1715 and 1725 included in L3, and the like.

Referring to FIG. 17B, the communication system may include a terminal 1760 and a base station 1770. The terminal 1760 and the base station 1770 may perform mutual control signal transmission/reception based on the control plane protocol stack structure 1750 shown in FIG. 17B.

In the control plane protocol stack structure 1750 of the communication system, the terminal 1760 and the base station 1770 may include PHY layers 1761 and 1771 included in L1, MAC layers 1762 and 1772, RLC layers 1763 and 1773, and PDCP layers 1764 and 1774 included in L2, and RRC layers 1765 and 1775 included in L3, and the like.

The communication system may further include an Access and Management Mobility Function (AMF) 1780. In the control plane protocol stack structure 1750, the terminal 1760 and the AMF 1780 may include non-access stratum (NAS) layers 1766 and 1786. The base station 1770 may not include a NAS layer. In other words, in the control plane protocol stack structure 1750, the NAS layer of the base station 1770 may be transparent.

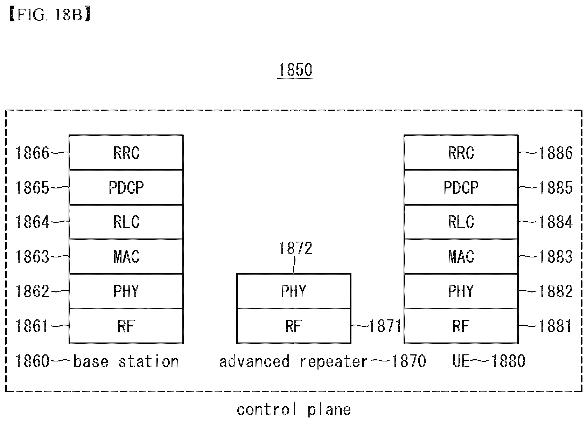

FIGS. 18A and 18B are conceptual diagrams for describing a second exemplary embodiment of a user plane protocol structure in a communication system.

Referring to FIGS. 18A and 18B, a radio interface protocol stacks or radio interface protocol stack structures 1800 and 1850 may be defined in a radio connection section between communication nodes. For example, in the radio connection section between communication nodes, the user plane protocol stack structure 1800 for carrier aggregation (CA) may be defined. Alternatively, in the radio connection section between communication nodes, the user plane protocol stack structure 1850 for dual connectivity (DC) may be defined.

Referring to FIG. 18A, the communication system may include a base station 1820. The base station 1820 may correspond to an eNB, a gNB, or the like. The base station 1820 may perform CA-based data communications with a lower node, such as a terminal, based on the user plane protocol stack structure 1800 for CA shown in FIG. 18A. In the user plane radio interface protocol stack structure 1800 for CA, the base station 1820 may include a plurality of PHY layers 1821-1 and 1821-2 included in L1, a MAC layer 1822, RLC layer 1823, and PDCP layer 1824 included in L2, and an SDAP layer 1825 included in L3, and the like.

Referring to FIG. 18B, the communication system may include a master cell group (MCG 1870) and a secondary cell group (SCG) 1880. A cell or base station of the MCG 1870 and SCG 1880 may configure a DC with a lower node such as a terminal based on the user plane protocol stack structure 1850 for DC. In the user plane radio interface protocol stack structure 1850 for DC, the cell or base station of the MCG 1870 may include a PHY layer 1871 included in L1, a MAC layer 1872, RLC layer 1873, and PDCP layer 1874 included in L2, a SDAP layer 1875 included in L3, and the like. Meanwhile, the cell or base station of the SCG 1880 may include a PHY layer 1881 included in L1, a MAC layer 1882 and RLC layer 1883 included in L2, and the like.

An exemplary embodiment of the communication system supporting 5G wireless communication may support the following various DC types.

☐ EUTRA-NR DC (EN-DC): DC in which the MCG is configured based on 4G Evolved Universal Terrestrial Radio Access (E-UTRA), and the SCG is configured based on the 5G NR. Here, a control plane of the MCG may be configured through a 4G core (i.e., Evolved Packet Core (EPC)).

☐ Next Generation-RAN E-UTRA-NR DC (NGEN-DC): DC in which the MCG is configured based on the E-UTRA and the SCG is configured based on the NR. In this case, a control plane of the MCG may be configured through a 5G core (i.e., Next Generation Core (NGC)).

☐ NR-EUTRA DC (NE-DC): DC in which the MCG is configured based on the NR and the SCG is configured based on the E-UTRA

☐ NR DC: DC in which both the MCG and the SCG are configured based on the NR

The base station may perform DC-related configuration for the terminal (i.e., UE, MT, etc.) using one or more higher layer parameters. For example, higher layer parameters used by the base station for the DC-related configuration may include at least some of *CellGroupConfig, SpCellConfig, ReconfigurationWithSync,* and *SCellConfig.* The higher layer parameter *CellGroupConfig* may be the same as or similar to that shown in Table 20.

[Table 20]

```
CellGroupConfig ::=                              SEQUENCE {
     cellGroupId          // cell group ID. 0 indicates MCG, and a value of 1 or more indicates
SCG
     rlc-BearerToAddModList   //configure a relation list of MAC logical channel, RLC entity,
and radio bearer
     rlc-BearerToReleaseList    //release a relation list of MAC logical channel, RLC entity, and
radio bearer
     mac-CellGroupConfig       //MAC parameters applicable to the corresponding cell group
     physicalCellGroupConfig
        //configuration of common PHY layer parameters such as HARQ, power control, etc. within
a cell group
     spCellConfig                //configure a SpCell of a cell group by referring to SpCellConfig
     sCellToAddModList          //configure a list of SCells included in a cell group by referring to
SCellConfig
     sCellToReleaseList          //exclude the Scell from a cell group by referring to SCellIndex
```

```
...,
[[
reportUplinkTxDirectCurrent     //configure whether a UE reports a uplink DC position
]],
[[
bap-Address-r16     //configure a backhal adaptation protocol (BAP) address of a parent node
in a cell group
        bh-RLC-ChannelToAddModList-r16    //configure backhaul RLC entities and a list of
corresponding MAC logical channels
        bh-RLC-ChannelToReleaseList-r16     //release backhaul RLC entities and a list of
corresponding MAC logical channels
        f1c-TransferPath-r16    //configure a F1-C transfer path to be used by EN-DC IAB-MT
        simultaneousTCI-UpdateList1-r16    //a list 1 of serving cells for which TCI updata can be
simultaneously performed through a single MAC CE (corresponding to coresetPoolIndex =0, i.e.,
corresponding to serving cells of a first TRP for which TCI update can be simultaneouly
performed)
        simultaneousTCI-UpdateList2-r16       //a list 2 of serving cells for which TCI updata can be
simultaneously performed through a single MAC CE (corresponding to coresetPoolIndex =0, i.e.,
corresponding to serving cells of a first TRP for which TCI update can be simultaneouly
performed)
        simultaneousSpatial-UpdatedList1-r16 //a list 1 of serving cells for which spatial relation
update can be simultaneously performed through a single MAC CE (corresponding to
coresetPoolIndex =0, i.e., corresponding to serving cells of a first TRP for which spatial relation
update can be simultaneouly performed)
        simultaneousSpatial-UpdatedList2-r16 //a list 2 of serving cells for which spatial relation
update can be simultaneously performed through a single MAC CE (corresponding to
coresetPoolIndex =0, i.e., corresponding to serving cells of a first TRP for which spatial relation
update can be simultaneouly performed)
        uplinkTxSwitchingOption-r16      //configure a UL TX switching option for inter-band UL CA
or (NG)EN-DC
        uplinkTxSwitchingPowerBoosting-r16 //configure whether a UE can perform 3dB power
boosting for a second carrier when applying inter-band UL CA
]]
}
```

Meanwhile, the higher layer parameter SpCellConfig may be the same as or similar to that shown in Table 21.

[Table 21]

```
SpCellConfig ::=                              SEQUENCE {
        servCellIndex      // servince cell ID of PSCell. PCell of MCG uses ID=0
        reconfigurationWithSync    //configuration values used for synchronous reconfiguration of a
target SpCell
        rlf-TimersAndConstants      //configuration of a timer and a constant value for detecting and
triggerig cell-level radio link failure
        rlmInSyncOutOfSyncThreshold
        spCellConfigDedicated       //ServingCellConfig of SpCell
        ...
}
```

Meanwhile, the higher layer parameter Reconfiguration With Sync may be the same as or similar to that shown in Table 22.

[Table 22]

```
ReconfigurationWithSync ::=            SEQUENCE {
    spCellConfigCommon        // ServingCellConfigCommon of SpCell
    newUE-Identity            // New RNTI value configuration
    t304                      // configure a t304 timer value
    rach-ConfigDedicated              CHOICE {
                    // RACH configuration used for Reconfiguration with sync
        uplink
        supplementaryUplink
    }
OPTIONAL,    -- Need N
    ...,
    [[
    smtc      //configure a periodicity, offset, and duration of SSB to be used for change of PSCell
or PCell, or addition of PSCell
]],
    [[
    daps-UplinkPowerConfig-r16
    ]]
}
```

Meanwhile, the higher layer parameter *SCellConfig* may be the same as or similar to that shown in Table 23.

[Table 23]

```
SCellConfig ::=                    SEQUENCE {
    sCellIndex                 // SCell index
    sCellConfigCommon          // ServingCellConfigCommon of SCell
    sCellConfigDedicated       // ServingCellConfig of SCell

    ...,
    [[
    smtc      //configure a periodicity, offset, and duration of SSB to be used for addition of SCell
    ]],
    [[
    sCellState-r16             // configure whether to activate SCell
    secondaryDRX-GroupConfig-r16
    ]]
}
```

Meanwhile, cell-specific configurations of a serving cell configured as a SpCell or SCell in the MCG or SCG may be performed with reference to a higher layer parameter *ServingCellConfigCommon*. The higher layer parameter *ServingCellConfigCommon* may be the same as or similar to that shown in Table 24.

[Table 24]

```
ServingCellConfigCommon ::=            SEQUENCE {
```

```
        physCellId                  // physical cell ID of the corresponding serving cell
        downlinkConfigCommon        // cell-specific downlink configuration of the corresponding
serving cell
        uplinkConfigCommon          // cell-specific uplink configuration of the corresponding
serving cell
        supplementaryUplinkConfig   // cell-specific SUL configuration of the corresponding
serving cell
        n-TimingAdvanceOffset         // timing advanced offset configuration
        ssb-PositionsInBurst                    CHOICE {
            shortBitmap                 // 4-bit SSB position configuration
            mediumBitmap                // 8-bit SSB position configuration
            longBitmap                  // 64-bit SSB position configuration
        }
        ssb-periodicityServingCell      // SSB periodicity configuration
        dmrs-TypeA-Position             // first DMRS symbol configuration for Type A DMRS
        lte-CRS-ToMatchAround           // LTE CRS rate matching configuration
        rateMatchPatternToAddModList    // rate matching pattern list additional/new configuration
        rateMatchPatternToReleaseList   // rate matching pattern list release
        ssbSubcarrierSpacing            // subcarrier spacing configuration for SSB
        tdd-UL-DL-ConfigurationCommon   // cell-specific D/F/U configuration for a TDD cell
(refer to detail description on slot formats)
        ss-PBCH-BlockPower              // SSB transmission power (-60dBm ~ 50dBm)
        ...,
        [[
        channelAccessMode-r16                   CHOICE {
            dynamic
            semiStatic
        }
        discoveryBurstWindowLength-r16
        ssb-PositionQCL-r16             // configure QCL relation between SSB positions
        highSpeedConfig-r16
        ]]
}
```

Meanwhile, UE-specific configurations or cell-specific configurations of a serving cell configured as a SpCell or SCell in the MCG or SCG may be performed with reference to a higher layer parameter *ServingCellConfig.* The higher layer parameter *ServingCellConfig* may be the same as or similar to that shown in Table 25.

[Table 25]

```
ServingCellConfig ::=                   SEQUENCE {
        tdd-UL-DL-ConfigurationDedicated      // UE-specific D/F/U configuration for a TDD cell
(refer to detail description on slot formats)
        initialDownlinkBWP              // UE-specific configuration for an initial BWP (BWP #0)
        downlinkBWP-ToReleaseList       // a list of BWPs to be released
        downlinkBWP-ToAddModList        // a list of new BWPs or BWPs to be added
        firstActiveDownlinkBWP-Id
        bwp-InactivityTimer
        defaultDownlinkBWP-Id
        uplinkConfig
        supplementaryUplink
        pdcch-ServingCellConfig
```

```
        pdsch-ServingCellConfig
        csi-MeasConfig
        sCellDeactivationTimer
        crossCarrierSchedulingConfig
        tag-Id
        dummy
        pathlossReferenceLinking
        servingCellMO
        ...,
        [[
        lte-CRS-ToMatchAround
        rateMatchPatternToAddModList
        rateMatchPatternToReleaseList
        downlinkChannelBW-PerSCS-List
        ]],
        [[
        supplementaryUplinkRelease
        tdd-UL-DL-ConfigurationDedicated-IAB-MT-r16      // IAB-MT-specific D/F/U configuration
for a TDD cell (refer to detail description on slot formats)
        dormantBWP-Config-r16
        ca-SlotOffset-r16                          CHOICE {
            refSCS15kHz
            refSCS30KHz
            refSCS60KHz
            refSCS120KHz
        }
        channelAccessConfig-r16
        intraCellGuardBandsDL-List-r16
        intraCellGuardBandsUL-List-r16
        csi-RS-ValidationWith-DCI-r16
        lte-CRS-PatternList1-r16
        lte-CRS-PatternList2-r16
        crs-RateMatch-PerCORESETPoolIndex-r16
        enableTwoDefaultTCI-States-r16
        enableDefaultTCI-StatePerCoresetPoolIndex-r16
        enableBeamSwitchTiming-r16
        cbg-TxDiffTBsProcessingType1-r16
        cbg-TxDiffTBsProcessingType2-r16
        ]]
    }
```

The DC or CA may be defined within a specific frequency resource. The DC or CA may operate within one band (e.g., 4G band or 5G band) including one or more CCs. The DC or CA operating within one band may be referred to as 'intra-band DC' or 'in-band CA'. On the other hand, the DC or CA may be applied across one or more bands or may be applied across a band combination configured as a combination of one or more bands. The DC or CA applied across one or more bands or a band combination may be referred to as 'inter-band DC' or 'inter-band CA'.

Meanwhile, the DC or CA may operate within one CC. The DC or CA operating within one CC may be referred to as 'intra-carrier DC' or 'intra-carrier CA'. On the other hand, the DC or CA may be applied across one or more CCs. The DC or CA applied across one or more CCs may be referred to as 'inter-carrier DC' or 'inter-carrier CA'.

Meanwhile, the DC or CA may operate within one frequency range (FR). The DC or CA applied within one FR may be referred to as 'intra-FR DC' or 'intra-FR CA'. On the other hand, the DC or CA may be applied across one or more FRs. For example, some cell groups or CCs may exist in the FR1, and the remaining cell groups or CCs may be configured to exist in the FR2. They may be applied across one or more FRs. The DC or CA may be referred to as 'inter-FR DC' or 'inter-FR CA'.

The intra-FR DC/CA, inter-FR DC/CA, intra-band DC/CA, inter-band DC/CA, intra-carrier DC/CA, inter-carrier DC/CA, or the like may be configured according to how far or close a frequency axis distance between one or more CCs or serving cells is. Hardware of a communication node such as a terminal or a base station may be implemented differently depending on which combination of the DCs/CAs should be supported.

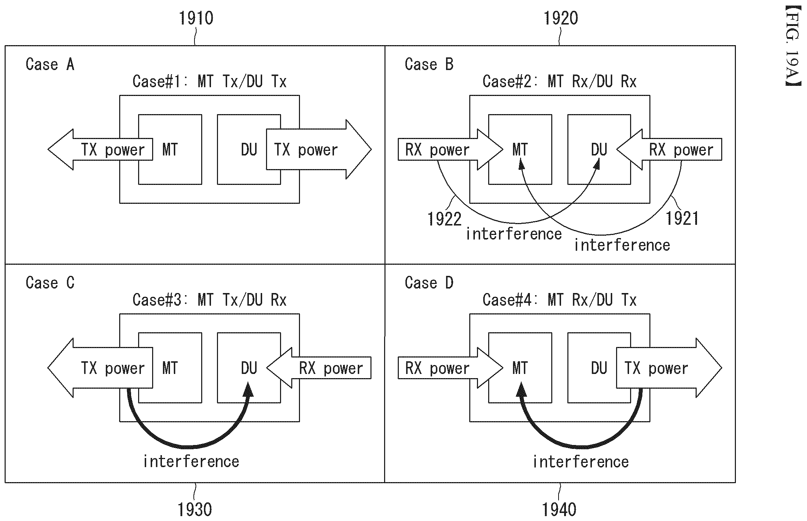

FIG. 19A is a conceptual diagram for describing an exemplary embodiment of a method for measuring and reporting cross link interference (CLI) in an IAB node supporting a simultaneous DU/MT operation mode in a communication system.

In an exemplary embodiment of the communication system, an IAB-DU and an IAB-MT within one IAB node may perform simultaneous transmission and reception based on a predetermined multiplexing mode (e.g., non-TDM mode, simultaneous DU/MT operation mode, etc.). When the IAB node supports the simultaneous DU/MT operation mode, the transmission/reception of the IAB-DU and the transmission/reception of the IAB-MT may cause interference (i.e., self-interference).

In other words, cross link interference (CLI) may occur due to the simultaneous transmission/reception operation of uplink and/or downlink in the IAB node performing simultaneous transmission/reception based on the multiplexing mode. The IAB node may measure the CLI that occurs due to the simultaneous transmission and reception operation. The IAB node may report the measured CLI to an upper node (e.g., parent node, base station, core network, etc.).

In an exemplary embodiment of the communication system, a scheme in which a communication node measures and reports CLI occurring in a dynamic time division duplexing (TDD) environment may be used. However, the CLI measurement and reporting scheme assuming the dynamic TDD environment as described above may not be suitable to be applied to a communication node (e.g., IAB node) that further supports various multiplexing modes other than the dynamic TDD. Accordingly, a technique capable of improving interference control performance through CLI measurement and reporting suitable for the communication node that further supports multiplexing modes other than dynamic TDD may be required.

In an exemplary embodiment of the IAB node designed to support simultaneous operations of the IAB-MT and the IAB-DU, the IAB-MT and the IAB-DU may operate based on one simultaneous operation scheme among the following Cases A to F.

- Case A (DU Tx / MT Tx): The IAB-DU performs downlink transmission and the IAB-MT performs uplink transmission at the same time point (symbol).
- Case B (DU Rx / MT Rx): The IAB-DU performs uplink reception and the IAB-MT performs downlink reception at the same time point (symbol).
- Case C (DU Rx / MT Tx): The IAB-DU performs uplink reception and the IAB-MT performs uplink transmission at the same time point (symbol).
- Case D (DU Tx / MT Rx): The IAB-DU performs downlink transmission and the IAB-MT performs downlink reception at the same time point (symbol).
- Case E (DU/MT FDM required): For the simultaneous operations of the IAB-DU and the IAB-MT, radio resources of the IAB-DU and the IAB-MT are required to be FDMed.
- Case F (DU/MT SDM required): For the simultaneous operations of the IAB-DU and the IAB-MT, radio resources of the IAB-DU and the IAB-MT are required to be SDMed.

The IAB-DU and the IAB-MT operating simultaneously based on one of Cases A to F may be included in one IAB node, or may be considered to constitute one IAB node. In other words, the IAB-DU and the IAB-MT operating simultaneously based on one of Cases A to F may be regarded as being co-located. Here, when the interference control capability of the IAB-DU and/or IAB-MT is relatively limited, Case E may be applied, and when the interference control capability of the IAB-DU and/or IAB-MT is relatively excellent, Case F may be applied.

In an exemplary embodiment of the communication system, the IAB node (or IAB-DU and IAB-MT) may support at least one or more of the four simultaneous operation schemes of Cases A to D. The IAB node (or IAB-DU and IAB-MT) may report information on the one or more simultaneous operation schemes supported by the IAB node to an upper node of the IAB node. Alternatively, the IAB node (or IAB-DU and IAB-MT) may report information on one or more combinations of a plurality of simultaneous operation schemes supported by the IAB node to an upper node of the IAB node. Here, the 'upper node of the IAB node' may correspond to an upper IAB node, an IAB donor node, a parent node, a central unit (CU), or a core network. The reporting may be performed identically or similarly to that shown in Table 19.

Meanwhile, in another exemplary embodiment of the communication system, the IAB node (or IAB-DU and IAB-MT) may support at least one or more of the six simultaneous operation schemes of Cases A to F. The IAB node (or IAB-DU and IAB-MT) may report information on one or more simultaneous operation schemes supported by the IAB node to the upper node. Alternatively, the IAB node (or IAB-DU and IAB-MT) may report information on one or more combinations of a plurality of simultaneous operation schemes supported by the IAB node to the upper node. The reporting may be performed identically or similarly to that shown in Table 29.

[Table 26]

| IE/group name | range | IE type and reference | liminality |
|---|---|---|---|
| IAB-MT cell list | 1 | | |
| >IAB-MT cell item | 1.. <maxnoofServin gCells> | | |
| >>NR cell identity | | Bit string (size: 36) | Identity of a serving cell configured for a co-located IAB-MT |
| >>DU_RX/MT_RX | | Enumerated (supported, not-supported) | Indicates whether the IAB node supports simultaneous receptions in DU and MT |
| >>DUTX/MT TX | | Enumerated (supported, not-supported) | Indicates whether the IAB node supports simultaneous transmissions in DU and MT |
| >>DU_TX/MT_RX | | Enumerated (supported, not-supported) | Indicates whether the IAB node simultaneously supports transmission in DU |
| | | | and reception in MT |
| >>DU_RX/MT_TX | | Enumerated (supported, not-supported) | Indicates whether the IAB node simultaneously supports reception in DU and transmission in MT |
| » DU/MT FDM required | | Enumerated (supported, not-supported) | Indicates whether the IAB node supports (or requires) the FDM scheme |
| » DU/MT SDM required | | Enumerated (supported, not-supported) | Indicates whether the IAB node supports (or requires) the SDM scheme |

The report according to Table 26 may further include elements corresponding to Cases E and F in addition to the elements constituting the report according to Table 19.

Meanwhile, the upper node (or CU) of the IAB node may identify information on the simultaneous operation scheme (or combination of the simultaneous operation schemes) supported by the IAB node through the reporting according to Table 19 or the reporting according to Table 26. The upper node (or CU) of the IAB node may configure through higher layer signaling or dynamically indicate through L1/L2 signaling which simultaneous operation scheme (or combination of simultaneous operation schemes) to apply in which time-frequency resources to the IAB node.

Hereinafter, 'Case A', 'Case B', 'Case C', 'Case D', 'Case E', or 'Case F' in the present disclosure means the aforementioned Case A, Case B, Case C, Case D, case E, or case F. Meanwhile, the aforementioned Case A, Case B, Case C, Case D, Case E, and Case F may be referred to as 'Case #1', 'Case #2', 'Case #3', 'Case #4', 'Case # 5', or 'Case #6', respectively.

Referring to FIG. 19A, in an exemplary embodiment of the communication system, an IAB node 1900 may support simultaneous operation modes such as Case A 1910, Case B 1920, Case C 1930, and Case D 1940. Here, self-interference and/or CLI may occur according to the simultaneous DU/MT operation (i.e., simultaneous DU/MT transmission/reception) in the IAB node 1900.

For example, when the IAB node 1900 operates according to Case A 1910, self-interference may not occur because both the MT (i.e., IAB-MT) and the DU (i.e., IAB-DU) perform only transmission operations. Therefore, in this case, a nominal maximum transmission power of the MT may be set to be the same as a nominal maximum transmission power when the simultaneous DU/MT operation (i.e., TDM mode) is not performed. On the other hand, when the IAB node 1900 operates according to Case C 1930, a transmission signal of the MT may leak to a reception antenna of the DU, resulting in self-interference. In this case, the nominal maximum transmission power of the MT may be set to be less than or equal to the nominal maximum transmission power in the case of not performing the simultaneous DU/MT operation (i.e., TDM mode). In this manner, uplink power control may be differently performed for each simultaneous DU/MT operation mode.

On the other hand, when the IAB node 1900 operates according to Case A 1910, the MT may perform uplink transmission and the DU may perform downlink transmission so that CLI may occur between uplink and downlink. In this case, since both the MT and the DU of the IAB node 1900 are performing transmissions, the CLI occurring in Case A 1910 may need to be measured by another communication node.

On the other hand, when the IAB node 1900 operates according to Case B 1920, the MT may perform downlink reception and the DU may perform downlink reception so that CLI may occur between uplink and downlink. That is, an uplink signal received at the DU may act as interference 1921 to a downlink signal reception operation in the MT. Alternatively, a downlink signal received at the MT may act as interference 1922 to an uplink signal reception operation in the DU.

Based on the self-interference and/or CLI occurring according to the simultaneous DU/MT operation in the IAB node 1900, transmission/reception power control and/or interference management for the IAB node 1900 may be performed. To this end, the IAB node 1900 may measure the self-interference and/or CLI. The IAB node 1900 may report information on the measured self-interference and/or CLI to an upper node. A technique for the IAB node 1900 to efficiently perform the measurement and reporting of the self-interference and/or CLI may be required.

An exemplary embodiment of the communication system supporting 5G or B5G may support a dynamic TDD, full-duplex mode, IAB DU/MT simultaneous operation mode, and the like. Due to this, CLI may occur between uplink and downlink. An exemplary embodiment of the communication system may support a measurement function and a reporting function for the CLI.

For example, an exemplary embodiment of the communication system may support a CLI measurement scheme such as a CLI-received signal strength indicator (CLI-RSSI) measurement scheme and an SRS-reference signal received power (SRS-RSRP) measurement scheme. L3 filtering may be applied to the CLI-RSSI measurement scheme and the SRS-RSRP measurement scheme. Reporting of information on the measured CLI may be triggered by a predetermined event or performed periodically. The reporting of the CLI may support an event triggered type or periodic reporting. The CLI measurement and/or reporting may be applied during multi-cell operations such as CA and DC. Configuration information related to the CLI measurement and/or reporting may be indicated or delivered based on a higher layer parameter *MeasObjectCLI* or the like. The higher layer parameter *MeasObjectCLI* may be the same as or similar to that shown in Table 27.

[Table 27]

```
MeasObjectCLI-r16 ::=                    SEQUENCE {
        cli-ResourceConfig-r16                    CLI-ResourceConfig-r16,
        ...
}

CLI-ResourceConfig-r16 ::=               SEQUENCE {
        srs-ResourceConfig-r16                   SetupRelease { SRS-ResourceListConfigCLI-r16 }
        rssi-ResourceConfig-r16                  SetupRelease { RSSI-ResourceListConfigCLI-r16 }
}

SRS-ResourceListConfigCLI-r16 ::=    SEQUENCE (SIZE (1.. maxNrofCLI-SRS-Resources-
r16)) OF SRS-ResourceConfigCLI-r16

RSSI-ResourceListConfigCLI-r16 ::=   SEQUENCE (SIZE (1.. maxNrofCLI-RSSI-Resources-
r16)) OF RSSI-ResourceConfigCLI-r16

SRS-ResourceConfigCLI-r16 ::=            SEQUENCE {
        srs-Resource-r16                          SRS-Resource,
        srs-SCS-r16                               SubcarrierSpacing,
        refServCellIndex-r16                    ServCellIndex
        refBWP-r16                                 BWP-Id,
        ...
}

RSSI-ResourceConfigCLI-r16 ::=           SEQUENCE {
        rssi-ResourceId-r16                       RSSI-ResourceId-r16,
        rssi-SCS-r16                              SubcarrierSpacing,
        startPRB-r16                              INTEGER (0..2169),
        nrofPRBs-r16                              INTEGER
(4..maxNrofPhysicalResourceBlocksPlus1),
        startPosition-r16                        INTEGER (0..13),
        nrofSymbols-r16                          INTEGER (1..14),
        rssi-PeriodicityAndOffset-r16         RSSI-PeriodicityAndOffset-r16,
        refServCellIndex-r16                    ServCellIndex
        ...
}

RSSI-ResourceId-r16 ::=                   INTEGER (0.. maxNrofCLI-RSSI-Resources-r16-1)

RSSI-PeriodicityAndOffset-r16 ::=    CHOICE {
        sl10                                      INTEGER(0..9),
        sl20                                      INTEGER(0..19),
        sl40                                      INTEGER(0..39),
        sl80                                      INTEGER(0..79),
        sl160                                     INTEGER(0..159),
        sl320                                     INTEGER(0..319),
        s1640                                     INTEGER(0..639),
        ...
}
```

In an exemplary embodiment of the communication system, F1AP signaling identical or similar to Table 28 may be used for CLI measurement, reporting, and additional operations accordingly. For example, in an exemplary embodiment of the communication system, the gNB-DU may use the F1AP signaling as shown in Table 28 to report and/or deliver 'intended TDD DL-UL configuration information' including information to be considered for CLI mitigation to the gNB-CU. Alternatively, in an exemplary embodiment of the communication system, the gNB-DU may deliver the intended TDD DL-UL configuration information to another gNB-DU by using the F1AP signaling as shown in Table 28. Alternatively, in an exemplary embodiment of the communication system, the gNB-CU may deliver the intended TDD DL-UL configuration information to the gNB-DU by using the F1AP signaling as shown in Table 28.

[Table 28]

| IE/group name | range | IE type and reference | Description |
|---|---|---|---|
| NR SCS | | Enumerated (scs15, scs30, scs60, scs120, ...) | Values such as scs15, scs30, scs60, and scs120 correspond to subcarrier spacings. |
| NR cyclic prefix | | Enumerated (normal, extended, ...) | Type of cyclic prefix determining the number of symbols within one slot |
| NR DL-UL transmission periodicity | | Enumerated (ms0p5, ms0p625, ms1, mslp25, ms2, ms2p5, ms3, ms4, ms5, ms10, ms20, ms40, ms60, ms80, ms100, ms120, ms140, ms160, ...) | Periodicity is expressed in a format of msXpYZ, and corresponds to X.YZ milliseconds |
| Slot configuration list | 1 | | |
| >Slot configuration item | 1..<maxnoofSlots> | | |
| >>Slot index | | Integer (0..5119) | |
| >> CHOICE Symbol Allocation in | | | |
| Slot | | | |
| >>> All DL | | NULL | This means that all symbols within the slot are DL symbols |
| >>> All UL | | NULL | This means that all symbols within the slot are UL symbols |
| >>> Both DL and UL | | | |
| >>>> Number of DL symbols | | Integer (0..13) | |
| >>>> Number of UL symbols | | Integer (0..13) | |

Referring to Table 28, the intended TDD DL-UL configuration information delivered using the F1AP signaling shown in Table 28 may include information related to a subcarrier spacing, cyclic prefix, TDD UL-DL slot configuration, and the like. Referring to Table 28, the intended TDD DL-UL configuration information may include 'slot configuration list' information including DL/UL symbol information for one or more slots, that is, TDD DL-UL pattern information. When a certain slot includes both DL symbols and UL symbols, the number of DL symbols from a starting part of the corresponding slot and the number of UL symbols from an ending part of the corresponding slot may be indicated by the parameters 'Number of DL symbols', 'Number of UL Symbols', and the like.

Meanwhile, in an exemplary embodiment of the communication system, F1AP signaling identical or similar to Table 29 may be used to deliver information related to resource configuration of the IAB node. For example, in an exemplary embodiment of the communication system, the IAB node may use the F1AP signaling shown in Table 29 to deliver resource configuration information for cell(s) supported by the gNB-DU of the IAB ode (hereinafter, gNB-DU cell resource configuration) to an upper node (e.g., upper IAB node, IAB donor, parent node, gNB-CU, etc.). Alternatively, in an exemplary embodiment of the communication system, the IAB node may deliver the gNB-DU cell resource configuration information to another IAB node by using the F1AP signaling shown in Table 29. Here, the gNB-DU cell resource configuration information may include information on TDD/FDD resource parameters for each active cell.

[Table 29]

| IE/group name | range | IE type and reference | Description |
|---|---|---|---|
| Subcarrier spacing | | Enumerated (kHz15, kHz30, kHz60, kHz120, kHz240, spare3, spare2, spare1, ...) | The subcarrier spacing is used for a reference of TDD/FDD slot configuration. |
| DUF transmission periodicity | | Enumerated (ms0p5, ms0p625, ms1, ms1p25, ms2, ms2p5, ms5, ms10, ...) | |
| DUF slot configuration list | 0..1 | | |
| >DUF slot configuration item | 1..<maxnoof DUFSlots> | | Corresponds to 'maxN rof-Slots' |
| » CHOICE DUF Slot Configuration | | | |
| >>> explicit format | | | |
| >>>> permutation | | Enumerated (DFU, UFD, ...) | |
| >>>> Number of DL symbols | | Integer (0 .. 14) | |
| >>>> Number of UL symbols | | Integer (0 .. 14) | |
| >>> Implicit format | | | |
| >>>>DUF slot format index | | Integer (0..254) | Corresponds to an index of a preconfigured table |
| HSNA transmission periodicity | | Enumerated (ms0p5, ms0p625, ms1, ms0p5, ms0p625, ms1, mslp25, ms2, ms2p5, ms5, ms10, ms20, ms40, ms80, ms160, ...) | |
| HSNA slot configuration list | 0..1 | | |
| >HSNA slot configuration item | 1. <maxnoof HSNASlots> | | |
| >>HSNA Downlink | | Enumerated (H, S, NA) | HSNA value for DL symbol of a slot |
| >>HSNA Uplink | | Enumerated (H, S, NA) | HSNA value for UL symbol of a slot |
| >>HSNA Flexible | | Enumerated (H, S, NA) | HSNA value for flexible symbol of a slot |

Referring to Table 29, the gNB-DU cell resource configuration information may include downlink/uplink/flexible (DUF) configuration information for one or more slot lists that are repeated based on a DUF transmission periodicity. Referring to Table 29, the gNB-DU cell resource configuration information may include 'DUF slot configuration list' information including information on a TDD DL-UL pattern related to DUF configuration. In Table 29, *maxnoofDUFSlots* may mean the maximum number of slots within 10 ms, and *maxnoofHSNASlots* may mean the maximum number of H/S/NA slots within 160 ms. In Table 29, *maxnoofDUFSlots* may be defined as 320, and *maxnoofHSNASlots* may be defined as 5120. The number of downlink symbols and the number of uplink symbols within one slot may be configured based on the parameter 'Number of Downlink Symbols' and the parameter 'Number of Uplink Symbols', respectively. In Table 29, when the parameter 'permutation' is set to 'DFU', downlink symbols may be positioned at the starting part of the slot and uplink symbols may be positioned at the ending part of the slot. In Table 29, when the parameter 'permutation' is set to 'UFD', uplink symbols may be positioned at the starting part of the slot and the downlink symbols may be positioned at the ending part of the slot.

Referring to Tables 28 and 29, the 'intended TDD DL-UL configuration' information delivered based on Table 28 and the 'gNB-DU cell resource configuration' information delivered based on Table 29 may indicate TDD DL-UL pattern information, respectively. Here, the TDD DL-UL pattern information indicated by the intended TDD DL-UL configuration information may be referred to as 'first TDD DL-UL pattern information', and the TDD DL-UL pattern information indicated by the gNB-DU cell resource configuration information may be referred to as 'second TDD DL-UL pattern information'. The first TDD DL-UL pattern information indicated by the intended TDD DL-UL configuration information and the second TDD DL-UL pattern information indicated by the gNB-DU cell resource configuration information may not be identical to each other. In other words, the intended TDD DL-UL configuration information and the gNB-DU cell resource configuration information may indicate different TDD DL-UL pattern information. When different TDD DL-DL patterns are configured for one IAB node or gNB-DU, the CLI measurement and/or reporting operation described with reference to FIG. 19A may not be normally performed. For example, when the parameter 'permutation' indicated by the gNB-DU cell resource configuration information is set to 'UFD', uplink symbols may be positioned at the starting part of the corresponding slot and downlink symbols may be positioned at the ending part of the corresponding slot. The TDD DL-UL pattern of the UFD type as described above cannot be configured by the intended TDD DL-UL configuration information that does not support such the DL-UL pattern. That is, a collision may occur in relation to the configuration of the TDD DL-UL pattern. As described above, a technique for solving a collision occurring in relation to the configuration of the TDD DL-UL pattern and for improving the efficiency of the CLI measurement and/or reporting operation may be required.

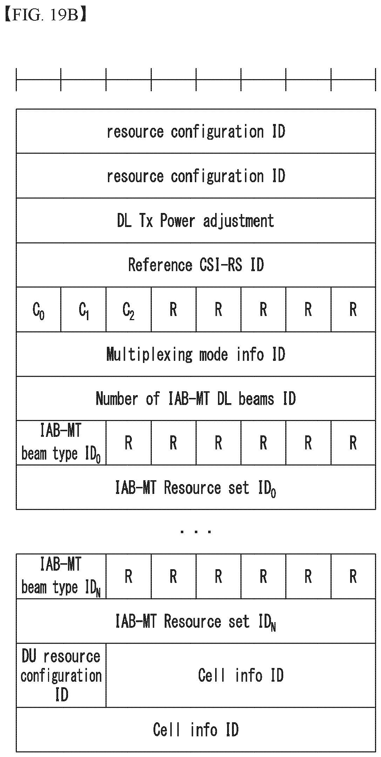

FIG. 19B is a conceptual diagram for describing an exemplary embodiment of signaling for configuring a multiplexing operation mode in a communication system.

In an exemplary embodiment of the communication system, a base station (or IAB node, relay station, etc.) may instruct a UE (or, MT, etc.) to report channel state information (CSI) using a specific time/frequency resource. For convenience of description below, communication devices such as communication devices (e.g., eNB, gNB, etc.) having base station functions and communication devices such as IAB nodes (or IAB-DU, IAB-MT, etc.), repeaters, or relay stations having some or all of base station functions may be collectively referred to as 'relay station' or 'base station'. For convenience of description below, all communication devices corresponding to a terminal such as a UE, a UE composed of a mobile equipment (ME) and a UMTS subscriber identity module (USIM), an ME composed of an MT and a terminal equipment (TE), and an MT including a mobile communication functional unit may be collectively referred to as 'terminal' or 'UE'.

In the present disclosure, 'channel state information (CSI)' may include all or some of a channel quality indicator (CQI), precoding matrix indicator (PMI), CSI-RS resource indicator (CRI), SS/PBCH block resource indicator (SSBRI), layer indicator (LI), rank indicator (RI), layer-1 reference signal received power (L1-RSRP), and layer-1 signal-to-noise and interference ratio (L1-SINR). For CSI reporting, N report configurations (e.g., *CSI-ReportConfig* Reporting Settings), M resource configurations (e.g., *CSI ResourceConfig* Resource Settings), and P trigger configurations (e.g., *CSI-AperiodicTriggerStateList*, *CSI-SemiPersistentOnPUSCH-TriggerStateList,* or the like) including a list of one or more trigger states may be configured by a higher layer or an upper node to the terminal. In other words, a relay station (or upper node, etc.) may transmit configuration information on N report configurations, M resource configurations, P trigger configurations, and/or the like to the terminal for CSI reporting. Here, N, M, and P may be natural numbers.

In an exemplary embodiment of the communication system, in order to support simultaneous operations of a base station (or IAB-DU) and a terminal (or IAB-MT) (e.g., in order to support IAB-DU resources and IAB-MT resources to be not only TDMed but also FDMed or SDMed), the HSNA slot configurations in Table 29 may be extended to the frequency domain. For example, the HSNA slot configurations in Table 29 may be extended to the frequency domain as shown in Table 30.

[Table 30]

| IE/group name | range | IE type and reference | Description |
|---|---|---|---|
| RB set configuration | | 9.3.1.230 | |

44

(continued)

| IE/group name | range | IE type and reference | Description |
|---|---|---|---|
| Frequency-domain HSNA configuration list | 0..1 | | |
| > Frequency-domain HSNA configuration item | 1..*\<maxnoofRBsetsPerCell\>* | | |
| >>RB set index | | Integer (0 .. maxnoofRBsetsPer-Cell-1, ...) | It indicates an RB set defined by RB set configuration. The RB set indexes start from 0, and are continuous (increasing) |
| >>Frequency-domain HSNA slot configuration list | 1 | | |
| >>> Frequency-domain HSNA slot configuration item | 1..*\<maxnoofHSNASlots\>* | | |
| >>>> Slot index | | Integer (0 .. 519) | It indicates an index of a slot within a HSNA transmission period |
| >>>> HSNA downlink | | Integer (0 .. 14) | |
| >>>> Number of UL symbols | | Integer (0 .. 14) | |
| >>> Implicit format | | | |
| >>>>DUF slot format index | | Integer (0..254) | Corresponds to an index of a preconfigured table |
| HSNA transmission periodicity | | Enumerated (ms0p5, ms0p625, ms1, ms0p5, ms0p625, ms1, ms1p25, ms2, ms2p5, ms5, ms10, ms20, ms40, ms80, ms160, ...) | |
| HSNA slot configuration list | 0..1 | | |
| >HSNA slot configuration item | 1..*\<maxnoofHSNASlots\>* | | |
| >>HSNA Downlink | | Enumerated (H, S, NA) | HSNA value for DL symbol of a slot for one |
| | | | RB set |
| >>HSNA Uplink | | Enumerated (H, S, NA) | HSNA value for UL symbol of a slot for one RB set |
| >>HSNA Flexible | | Enumerated (H, S, NA) | HSNA value for flexible symbol of a slot for one RB set |

An exemplary embodiment of the communication system may support the same or similar frequency-domain HSNA configurations as shown in Table 30. For this, an upper node (or base station, relay station, etc.) may configure or indicate one or more RB sets (or additional RB set groups) to which a certain frequency-domain HSNA configuration is applied. A relay station may use an extended availability indicator to inform to a lower node (or IAB-MT of the lower node) whether one or more frequency-domain soft resources configured for one or more RB sets (or RB set groups) within a certain time resource are available through a DCI format 2_5. When an IAB-node receives the DCI format 2_5, the IAB-node may use the RB set, RB set group, or slots indicated by the corresponding indicator as 'available' as IAB-DU resources of the IAB-node.

In order to support simultaneous operations of a base station (or IAB-DU) and a terminal (or IAB-MT) (e.g., in order to support IAB-DU resources and IAB-MT resource to be not only TDMed but also FDMed or SDMed), an exemplary embodiment of the communication system may support the following configurations.

- Timing configurations according to cases of simultaneous operation schemes (e.g., Cases #1, #6 and #7, etc.)
- FDM through frequency-domain resource allocation
- In addition to PDSCH power configuration through a higher layer parameter (e.g., *powerControlOff* set, etc.), an additional PDSCH power adjustment scheme. For example, DL Tx power adjustment, desired uplink power spectral density (PSD) reporting, or the like

In an exemplary embodiment of the communication system, a base station (or gNB, etc.) may determine a desired timing advance (TA) configuration and may provide it to a terminal (or UE, IAB-MT, etc.). The terminal may determine a UL transmission timing based on a DL reception timing observed by the terminal using the provided TA.

The IAB node may support the following additional modes for UL timing.

- The IAB-MT may determine a UL transmission timing using the provided TA and a provided additional offset. Through this, multiplexing of IAB-MT Rx/IAB-DU Rx by a parent node may be facilitated.
- The IAB-MT may facilitate multiplexing of IAB-MT Tx/IAB-DU Tx by matching a UL transmission timing to a IAB-DU DL transmission timing.

The IAB node UL timing mode may be indicated by an upper node through a MAC-CE.

When a half-duplex constraint is applied to the IAB-DU and IAB-MT of the IAB node (such as operations collocated in the same frequency), a proper transmission and reception may not be guaranteed in one side during transmission and reception in the other side. When the IAB node supports enhanced frequency or spatial multiplexing functions, additional multiplexing modes (e.g., IAB-MT Rx/IAB-DU Rx, IAB-MT Tx/IAB-DU Tx, IAB-MT Rx/IAB-DU Tx, IAB-MT Tx/IAB-DU Rx, and the like) may be supported. The IAB node may report information on duplex constraints between IAB-MT and IAB-DU through an F1AP. The IAB node may indicate whether FDM is required for an enhanced multiplexing operation through the F1AP.

A scheduler of the IAB-DU (or IAB-donor-DU) may conform to a resource configuration (e.g., gNB-DU resource configuration) received through the F1AP, which defines uses of scheduled resources, to take into account the aforementioned duplex constraints.

The resource configuration may assign 'hard', 'soft' or 'unavailable' to each symbol of each DU cell. While transmission and reception are possible in symbols configured as 'hard', scheduling may not be possible in symbols configured as 'unavailable' except for some special cases. In the case of symbols configured as 'soft', scheduling may be performed conditionally according to an explicit availability indication of an upper node through a DCI format 2_5 or an implicit availability determination of the IAB node. The implicit determination of availability may be performed by the IAB node depending on whether the operation of the IAB-DU affects the collocated IAB-MT.

The resource configuration may be shared between adjacent IAB nodes and IAB donors to facilitate interference management, dual connectivity, and enhanced multiplexing. To facilitate transition from IAB-MT operation to IAB-DU operation (or from IAB-DU operation to IAB-MT operation and vice versa), a potentially-misaligned symbol boundary between the IAB-MT domain and the IAB-DU domain may be overcome by using guard symbol(s). The potentially-misaligned symbol boundary between the IAB-MT domain and the IAB-DU domain may correspond to, for example, a case where a boundary of the IAB-MT Rx is not aligned with a boundary of the IAB-DU Tx. The IAB node may report or inform the parent node of the number of desired guard symbols, and the parent node may indicate to the IAB node the number of guard symbols actually provided for a particular transition.

The IAB node supporting advanced multiplexing functions (e.g., IAB-MT Rx/IAB-DU Rx, IAB-MT Tx/IAB-DU Tx, IAB-MT Rx/IAB-DU Tx, IAB-MT Tx/IAB-DU Rx, and/or the like) may provide information to the parent node through a MAC-CE to facilitate scheduling of enhanced multiplexing operations by the IAB node. For example, the IAB node may provide the parent node with the following information.

- Recommended Tx/Rx beams of the IAB-MT

- Desired PSD range of the IAB-MT
- Desired IAB-DU Tx power adjustment of the parent node
- Required UL transmission timing mode of the IAB-MT

Accordingly, the parent node may provide the following information to the IAB node through a MAC-CE to facilitate enhanced multiplexing at the IAB node and/or the parent node.

- Restricted Tx beams of the IAB-DU
- Actual Tx power adjustment of the IAB-DU of the parent node
- UL transmission timing mode of the IAB-MT

Regarding the transmission timing adjustment schemes according to whether or not timing according to the cases of the simultaneous operation schemes (e.g., Case #1, Case #6, and Case #7) described above, the communication system may support the following configurations.

In case that the IAB-node is provided with an index $T_{delta}$ of a timing delta MAC CE from a serving cell, if a first value determined based on $T_{delta}$ is greater than 0, the IAB-node may assume the first value as a time difference between a transmission timing at the DU and a reception timing at the IAB-MT with respect to a signal from the serving cell. Here, the first value may be determined identically or similarly to Equation 5.

[Equation 5]

$$T_{TA}/2 + (N_{delta} + T_{delta} \cdot G_{step} - N_{TA,Offset}/2) \cdot T_c$$

In Equation 5, $T_{TA}$ may mean a difference between a reception timing at the IAB-MT and a transmission timing at the IAB-MT for the transmission timing mode 'Case #6'. $T_{TA}$ may be defined for the IAB-MT transmission timing mode 'Case #6' and the upper node reception mode 'Case #7'.

In Equation 5, $N_{delta}$ and $G_{step}$ may be defined as follows.

- $N_{delta}$=-70528, $G_{step}$=64 (when the serving cell providing the timing delta MAC CE operates in FR1)
- $N_{delta}$=-17664, $G_{step}$=32 (when the serving cell providing the timing delta MAC CE operates in FR2)

The IAB node may assume that the same index $T_{delta}$ is provided from the serving cell for the IAB-MT transmission timing modes 'Case #7' and 'Case #1'.

The IAB node may use the time difference to determine a DU transmission timing.

For the serving cell of the IAB-MT, the IAB-MT may provide an indication of an IAB-MT transmission timing mode of a slot through a timing case indication MAC CE. Upon receiving the timing case indication for the serving cell in a timing advance group (tag), the IAB-MT may apply the same IAB-MT transmission timing mode to the slot for all serving cells of the tag.

When the IAB-MT transmission timing mode indicated for the slot is configured as 'Case #1' or the IAB-MT transmission timing mode indication is not provided for the slot, the IAB-MT transmission timing for the 'UE' may be determined.

When the IAB-MT transmission timing mode indicated for the slot is configured as 'Case #6', the IAB-node may configure the transmission timing of the IAB-MT to be the transmission timing of the IAB-DU.

When the IAB-MT transmission timing mode indicated for the slot is configured as 'Case #7', the IAB-MT may be provided with a timing advance offset value $N_{TA,Offset,2}$ for the serving cell by a Case #7 timing advance offset MAC CE. The IAB-MT may determine the uplink transmission timing as $T_{TA} + N_{TA,offset,2} - c$. In $N_{TA,offset,2} = T_{offset,2} \cdot 16 \cdot 64/2^\mu$, $T_{offset,2}$ may be provided through the Case #7 timing advance offset MAC CE.

Referring to FIG. 19B, according to the above-described PDSCH power adjustment (i.e., DL Tx power adjustment) scheme, the communication system may support the following configurations.

A DL TX power adjustment MAC CE and a desired DL TX power adjustment MAC CE may be distinguished by a MAC subheader each having an eLCID. Otherwise, formats of both the MAC CEs may be the same. Each MAC CE may include the following fields.

- Resource configuration ID: This field indicates an RRC configuration applied to the MAC CE, and may correspond to an *iab-ResourceConfigID* parameter of *IAB-ResourceConfig.* The length of the field may be 16 bits.

- DL Tx power adjustment: In the case of the desired DL TX power adjustment MAC CE, this field may indicate a desired DL TX power adjustment transmitted by the IAB-MT to support DL TX power allocation of the parent node. In the case of the DL TX power adjustment MAC CE, this field may include adjustment to a DL TX power of the node, which is transmitted by the parent node. In both cases, a power adjustment value is included in the rightmost 5 bits of the field, and the remaining 3 bits may be set to 0. The length of the field may be 8 bits.

- Reference CSI-RS ID: This field may indicate a CSI-RS used as a reference for power adjustment, and may be identified as *NZP-CSI-RS-ResourceId.* The indicated DL TX power adjustment may be configured as a relative offset to a CSI-RS TX power of the indicated CSI-RS, and the length of this field may be 8 bits.

- C0: This field may indicate whether an octet including multiplexing mode information (including a multiplexing mode information ID field) is included. When this field is set to 1, it may indicate that the multiplexing mode information is included, and when this field is set to 0, it may indicate that the multiplexing mode information is not included. The length of the field may be 1 bit.

- C1: This field may indicate whether two octets including a cell information ID are included. When this field is set to 0, it may indicate that two octets are not included (and thus no cell information is included). Setting the field to 1 may indicate that two octets are included. The length of the field may be 1 bit.

- C2: This field may indicate whether information on a DL beam of the IAB-MT is included. This field may be set to 1 to indicate that one or more IAB-MT resource set fields IDi are included, and may be set to 0 to indicate that no IAB-MT resource set fields IDi exist. The length of the field may be 1 bit.

- R: Reserved bits, set to 0.

- Multiplexing mode information ID: The rightmost two bits may indicate which of the four multiplexing modes is applicable. The rightmost third bit of this field may indicate whether multiplexing restriction mode information included in the rightmost two bits of the field is applicable to non-overlapping frequency resources. This bit may be set to 1 when the multiplexing mode information included in the rightmost two bits of the multiplexing mode information ID field is applied to non-overlapping frequency resources. When the multiplexing mode information included in the rightmost two bits of the multiplexing mode information ID field is not applied to non-overlapping frequency resources, this field may be set to 0. The remaining 5 bits of this field may be set to 0. The length of the field may be 8 bits.

- Number of IAB-MT DL beams ID: This field may indicate the number of IAB-MT beams included in the MAC CE. The length of the field may be 8 bits.

- IAB-MT beam type IDi: This field may determine the type of information used as an indicator of a downlink IAB-MT beam indicated by the IAB-MT resource set IDi. When the value of the field is set to 00, the information included in the IAB-MT resource set IDi field is a TCI state ID (included in the rightmost seven bits of the field). When the value of the field is set to 01, the information included in the IAB-MT resource set IDi field is an SSB ID (included in the rightmost six bits of the field). When the value of the field is set to 10, the information included in the IAB-MT resource set IDi field is a CSI-RS index (composed of eight bits). The length of the field may be 2 bits.

- IAB-MT resource set IDi: Indication of an IAB-MT downlink beam. The IAB-MT resource set ID0 field may relate to a first IAB-MT downlink beam, and the IAB-MT resource set ID 1 field may relate to a second IAB-MT downlink beam. The length of the field may be 8 bits.

- DU resource configuration ID: When this field is set to 00, a provided power adjustment may be applied to FDMed resources where simultaneous MT and DU signals do not overlap in the frequency domain. When this field is set to 01, a provided power adjustment may be applied to non-FDMed resources where simultaneous MT and DU signals may overlap in the frequency domain for a given (MT CC, DU cell). When this field is set to 10, a provided power adjustment may be applied to FDMed resources where simultaneous MT and DU signals do not overlap and non-FDMed resources where simultaneous MT and DU signals may overlap in the frequency domain for a given (MT CC, DU cell). The length of the field may be 2 bits.

- Cell Information ID: This field may indicate a cell configuration related to information included in the MAC CE. The length of the field may be 14 bits. The IAB-DU cell may be included in the first 9 bits of the field while a lower IAB-MT serving cell may generate an index for the next 5 bits of the field. The length of the field may be 14 bits.

The report configuration (e.g., *CSI-ReportConfig*) for CSI reporting may be configured with the same or similar higher layer parameters as those shown in Tables 31 and 32.

[Table 31]

```
CSI-ReportConfig ::=                    SEQUENCE {
        reportConfigId                  // ID of the corresponding report configuration
        carrier                                 ServCellIndex (serving cell index indicator
indicating a serving cell where resource configuration related to the corresponding report
configuration exist. If this field is not present, resource configuration may exists in the same
serving cell as that of the report configuration)
        resourcesForChannelMeasurement       // resource configuration ID for channel
measurement resource (CMR)
        csi-IM-ResourcesForInterference      // resource configuration ID for CSI-IM based
   interference measurement resource (IMR)
        nzp-CSI-RS-ResourcesForInterference  // resource configuration ID for NZP CSI-RS
based IMR
        reportConfigType                        CHOICE { // temporal operation type of
report configuration
                periodic                            SEQUENCE { // periodic reporting
related configuration
                        reportSlotConfig        // slot periodicity and offset for periodic
reporting
```

```
                        pucch-CSI-ResourceList  // PUCCH resource list for periodic
reporting
                },
                semiPersistentOnPUCCH                    SEQUENCE { // PUCCH-based
semi-persistent reporting related configuation
                        reportSlotConfig        // slot periodicity and offset for semi-persistent
reporting
                        pucch-CSI-ResourceList  // PUCCH resource list for semi-persistent
reporting
                },
                semiPersistentOnPUSCH                    SEQUENCE { //PUSCH-based
semi-persistent reporting related configuration
                        reportSlotConfig        // slot periodicity and offset for semi-persistent
reporting
                        reportSlotOffsetList    // timing offset list for semi-persistent reporting
                        p0alpha                 // p0-ahpha set index that is a power control
parameter for semi-persistent reporting
                },
                aperiodic                                SEQUENCE { // aperiodic reporting
configuration
                        reportSlotOffsetList    // timing offset list for aperiodic reporting
                }
        },
        ...
```

[Table 32]

```
        reportQuantity                          CHOICE { // CSI component configuration
                none                    // omitting acutal reporting (for UE Rx beam
switchingm, etc.)
                cri-RI-PMI-CQI          // CSI report composed of CRI, RI, PMI, CQI
                cri-RI-i1               // CSI report composed of CRI, RI, i1 (first PMI)
                cri-RI-i1-CQI       SEQUENCE { // CSI report composed of CRI, RI, i1, CQI
                    pdsch-BundleSizeForCSI     // PDSCH bundling configuration for CSI report
                },
                cri-RI-CQI              // CSI report composed of CRI, RI, CQI
                cri-RSRP                // CSI report composed of CRI, RSRP
                ssb-Index-RSRP          // CSI report composed of SSBRI, RSRP
                cri-RI-LI-PMI-CQI       // CSI report composed of CRI, RI, LI, PMI, CQI
        },
        reportFreqConfiguration                  SEQUENCE { // frequency-domain
property configuration of report configuration
                cqi-FormatIndicator        // configuration on whether to report wideband CQI or
subband CQI
                pmi-FormatIndicator        // configuration on whether to report wideband PMI or
subband PMI
                csi-ReportingBand                    CHOICE { // configuration on
whether to report for each subband
                    subbands3                            BIT STRING(SIZE(3)),
                    ...
                    subbands18                           BIT STRING(SIZE(18)),
                    ...,
                    subbands19-v1530                     BIT STRING(SIZE(19))
                }   OPTIONAL      -- Need S

        }
```

```
        timeRestrictionForChannelMeasurements    // configuration on whether to apply
time-domain measurement restriction for CMR
        timeRestrictionForInterferenceMeasurements    // configuration on whether to apply
time-domain measurement restriction for IMR
        codebookConfig                           // codebook configuration
        groupBasedBeamReporting                      CHOICE {
            enabled                                       NULL,
            disabled                                      SEQUENCE {
                nrofReportedRS                            ENUMERATED {n1, n2, n3,
n4}                         OPTIONAL      -- Need S
            }
        },
        cqi-Table              // CQI table indicator
        subbandSize                     // subband size indicator of report configuration
        non-PMI-PortIndication     // CSI-RS port index indicator used for CSI calculation for
non-PMI report that does not include PMI

        ...,
    }
```

Resource configuration for CSI reporting (e.g., *CSI-ResourceConfig*) may be configured with the same or similar higher layer parameters as those shown in Tables 33 to 35.

[Table 33]

```
CSI-ResourceConfig ::=        SEQUENCE {
        csi-ResourceConfigId        CSI-ResourceConfigId,
        csi-RS-ResourceSetList      CHOICE {
            nzp-CSI-RS-SSB              SEQUENCE {
                nzp-CSI-RS-ResourceSetList   SEQUENCE (SIZE (1..maxNrofNZP-CSI-RS-
ResourceSetsPerConfig)) OF NZP-CSI-RS-ResourceSetId

OPTIONAL, -- Need R
                csi-SSB-ResourceSetList       SEQUENCE (SIZE (1..maxNrofCSI-SSB-
ResourceSetsPerConfig)) OF CSI-SSB-ResourceSetId    OPTIONAL    -- Need R
            },
            csi-IM-ResourceSetList        SEQUENCE (SIZE (1..maxNrofCSI-IM-
ResourceSetsPerConfig)) OF CSI-IM-ResourceSetId
        },

        bwp-Id                      BWP-Id,
        resourceType                ENUMERATED { aperiodic, semiPersistent,
periodic },
        ...
}
```

[Table 34]

```
NZP-CSI-RS-Resource ::=              SEQUENCE {
        nzp-CSI-RS-ResourceId            NZP-CSI-RS-ResourceId,
        resourceMapping                  CSI-RS-ResourceMapping,
        powerControlOffset               INTEGER (-8..15),
```

```
        powerControlOffsetSS             ENUMERATED{db-3, db0, db3, db6}
OPTIONAL,     -- Need R
        scramblingID                     ScramblingId,
        periodicityAndOffset             CSI-ResourcePeriodicityAndOffset
OPTIONAL,     -- Cond PeriodicOrSemiPersistent
        qcl-InfoPeriodicCSI-RS           TCI-StateId
OPTIONAL,     -- Cond Periodic
        ...
}
```

[Table 35]

```
CSI-IM-Resource ::=                      SEQUENCE {
        csi-IM-ResourceId                    CSI-IM-ResourceId,
        csi-IM-ResourceElementPattern        CHOICE {
            pattern0                             SEQUENCE {
                subcarrierLocation-p0                ENUMERATED { s0, s2, s4, s6,
s8, s10 },
                symbolLocation-p0                    INTEGER (0..12)
            },
            pattern1                             SEQUENCE {
                subcarrierLocation-p1                ENUMERATED { s0, s4, s8 },
                symbolLocation-p1                    INTEGER (0..13)
            }
        }
OPTIONAL,    -- Need M
        freqBand                             CSI-FrequencyOccupation
OPTIONAL,    -- Need M
        periodicityAndOffset                 CSI-ResourcePeriodicityAndOffset
OPTIONAL,     -- Cond PeriodicOrSemiPersistent

        ...
}
```

Trigger configuration for CSI reporting (e.g., *CSI-AperiodicTriggerStateList*, *CSI-SemiPersistentOnPUSCH-TriggerStateList,* etc.) may be configured with the same or similar higher layer parameters as those shown in Table 36.

[Table 36]

```
CSI-MeasConfig ::=                      SEQUENCE {
        nzp-CSI-RS-ResourceToAddModList      SEQUENCE (SIZE (1..maxNrofNZP-CSI-
RS-Resources)) OF NZP-CSI-RS-Resource    OPTIONAL, -- Need N
        nzp-CSI-RS-ResourceToReleaseList     SEQUENCE (SIZE (1..maxNrofNZP-CSI-RS-
Resources)) OF NZP-CSI-RS-ResourceId OPTIONAL, -- Need N
        nzp-CSI-RS-ResourceSetToAddModList   SEQUENCE (SIZE (1..maxNrofNZP-CSI-
RS-ResourceSets)) OF NZP-CSI-RS-ResourceSet

OPTIONAL, -- Need N
        nzp-CSI-RS-ResourceSetToReleaseList SEQUENCE (SIZE (1..maxNrofNZP-CSI-RS-
ResourceSets)) OF NZP-CSI-RS-ResourceSetId

OPTIONAL, -- Need N
```

```
                csi-IM-ResourceToAddModList               SEQUENCE (SIZE (1..maxNrofCSI-IM-
Resources)) OF CSI-IM-Resource                  OPTIONAL, -- Need N
                csi-IM-ResourceToReleaseList              SEQUENCE (SIZE (1..maxNrofCSI-IM-
Resources)) OF CSI-IM-ResourceId                OPTIONAL, -- Need N
                csi-IM-ResourceSetToAddModList            SEQUENCE (SIZE (1..maxNrofCSI-IM-
ResourceSets)) OF CSI-IM-ResourceSet        OPTIONAL, -- Need N
                csi-IM-ResourceSetToReleaseList           SEQUENCE (SIZE (1..maxNrofCSI-IM-
ResourceSets)) OF CSI-IM-ResourceSetId     OPTIONAL, -- Need N
                csi-SSB-ResourceSetToAddModList          SEQUENCE (SIZE (1..maxNrofCSI-SSB-
ResourceSets)) OF CSI-SSB-ResourceSet     OPTIONAL, -- Need N
                csi-SSB-ResourceSetToReleaseList       SEQUENCE (SIZE (1..maxNrofCSI-SSB-
ResourceSets)) OF CSI-SSB-ResourceSetId OPTIONAL, -- Need N
                csi-ResourceConfigToAddModList          SEQUENCE (SIZE (1..maxNrofCSI-
ResourceConfigurations)) OF CSI-ResourceConfig

OPTIONAL, -- Need N
                csi-ResourceConfigToReleaseList         SEQUENCE (SIZE (1..maxNrofCSI-
ResourceConfigurations)) OF CSI-ResourceConfigId

OPTIONAL, -- Need N
                csi-ReportConfigToAddModList             SEQUENCE (SIZE (1..maxNrofCSI-
ReportConfigurations)) OF CSI-ReportConfig    OPTIONAL, -- Need N
                csi-ReportConfigToReleaseList           SEQUENCE (SIZE (1..maxNrofCSI-
ReportConfigurations)) OF CSI-ReportConfigId

OPTIONAL, -- Need N
                reportTriggerSize                       INTEGER (0..6)
OPTIONAL, -- Need M
                aperiodicTriggerStateList               SetupRelease { CSI-AperiodicTriggerStateList }
OPTIONAL, -- Need M
                semiPersistentOnPUSCH-TriggerStateList        SetupRelease { CSI-
SemiPersistentOnPUSCH-TriggerStateList }            OPTIONAL, -- Need M
                ...,
                [[
                reportTriggerSizeDCI-0-2-r16            INTEGER (0..6)
OPTIONAL -- Need R
                ]]
}
```

In an exemplary embodiment of the communication system, a base station may configure a terminal to derive a CQI according to specific criteria. For example, the base station may transmit configuration information to the terminal to allow the terminal to derive a CQI according to any one of Tables 37 to 40.

[Table 37]

| CQI index | modulation | Code rate X 1024 | efficiency |
|---|---|---|---|
| 0 | Out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |

(continued)

| CQI index | modulation | Code rate X 1024 | efficiency |
|---|---|---|---|
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

[Table 38]

| CQI index | modulation | Code rate X 1024 | efficiency |
|---|---|---|---|
| 0 | Out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

[Table 39]

| CQI index | modulation | Code rate X 1024 | efficiency |
|---|---|---|---|
| 0 | Out of range | | |
| 1 | QPSK | 30 | 0.0586 |
| 2 | QPSK | 50 | 0.0977 |
| 3 | QPSK | 78 | 0.1523 |
| 4 | QPSK | 120 | 0.2344 |
| 5 | QPSK | 193 | 0.3770 |
| 6 | QPSK | 308 | 0.6016 |
| 7 | QPSK | 449 | 0.8770 |
| 8 | QPSK | 602 | 1.1758 |
| 9 | 16QAM | 378 | 1.4766 |
| 10 | 16QAM | 490 | 1.9141 |

(continued)

| CQI index | modulation | Code rate X 1024 | efficiency |
|---|---|---|---|
| 11 | 16QAM | 616 | 2.4063 |
| 12 | 64QAM | 466 | 2.7305 |
| 13 | 64QAM | 567 | 3.3223 |
| 14 | 64QAM | 666 | 3.9023 |
| 15 | 64QAM | 772 | 4.5234 |

[Table 40]

| CQI index | modulation | Code rate X 1024 | efficiency |
|---|---|---|---|
| 0 | Out of range | | |
| 1 | QPSK | 78 | 0.1523 |
| 2 | QPSK | 193 | 0.377 |
| 3 | QPSK | 449 | 0.877 |
| 4 | 16QAM | 378 | 1.4766 |
| 5 | 16QAM | 616 | 2.4063 |
| 6 | 64QAM | 567 | 3.3223 |
| 7 | 64QAM | 666 | 3.9023 |
| 8 | 64QAM | 772 | 4.5234 |
| 9 | 64QAM | 873 | 5.1152 |
| 10 | 256QAM | 711 | 5.5547 |
| 11 | 256QAM | 797 | 6.2266 |
| 12 | 256QAM | 885 | 6.9141 |
| 13 | 256QAM | 948 | 7.4063 |
| 14 | 1024QAM | 853 | 8.3301 |
| 15 | 1024QAM | 948 | 9.2578 |

One of the CQI indices shown in Tables 37 to 40 may correspond to a specific combination of a specific modulation scheme and a specific transport block size. For example, a combination (hereinafter, a first combination) of a first modulation scheme and a first transport block size that satisfies conditions 1 to 3 below may correspond to one (hereinafter, a first CQI index) of the CQI indices shown in Tables 37 to 40.

- Condition 1: The first combination is indicated for PDSCH transmission within a CSI reference resource.
- Condition 2: The first modulation scheme is indicated by the first CQI index.
- Condition 3: When the combination (i.e., first combination) of the first transport block size and the first modulation scheme is applied to a reference resource, an effective channel code rate calculated based on the combination may be closest to a code rate indicated by the first CQI index. If two or more combinations of a transport block size and a modulation scheme are calculated to be closest to the code rate indicated by the CQI index, only a combination consisting of the smallest transport block size among the combinations may be effective.

If a higher layer parameter *timeRestrictionForChannelMeasurements* is set to '*notConfigured*' in a certain report configuration, time-domain measurement restriction may not be applied to channel measurement resources (CMRs) of the corresponding report configuration. In this case, when the terminal performs channel measurement for deriving (or calculating) a CSI value to be reported in an uplink slot n, the terminal may derive the CSI value by considering only resource(s) located at the same time as or at a time prior to the CSI reference resource among non-zero power (NZP) CSI-RS resources included in the corresponding CMRs.

If the higher layer parameter *timeRestrictionForChannelMeasurements* is set to '*Configured*' in a certain report configuration, time-domain measurement restriction may be applied to CMRs of the report configuration. In this case, when the terminal performs channel measurement for deriving (or calculating) a CSI value to be reported in an uplink slot n, the terminal may derive the CSI value by considering only the most recent resource (or the most recent occasion) among resource(s) located at the same time as or at a time prior to the CSI reference resource among NZP CSI-RS resources (occasions) included in the corresponding CMRs.

If a higher layer parameter *timeRestrictionForInterferenceMeasurements* is set to '*notConfigured*' in a certain report configuration, time-domain measurement restriction may not be applied to interference measurement resources (IMRs) of the report configuration. In this case, when the terminal performs interference measurement for deriving (or calculating) a CSI value to be reported in an uplink slot n, the terminal may derive the CSI value by considering only resource(s) located at the same time as or at a time prior to the CSI reference resource among CSI-IM and/or NZP CSI-RS resources included in the corresponding IMRs.

If the higher layer parameter *timeRestrictionForInterferenceMeasurements* is set to '*Configured*' in a certain report configuration, time-domain measurement restriction may be applied to IMRs of the report configuration. In this case, when the terminal performs interference measurement for deriving (or calculating) a CSI value to be reported in an uplink slot n, the terminal may derive the CSI value by considering only the most recent resource (or the most recent occasion) among resource(s) located at the same time as or before the CSI reference resource among CSI-IM and/or NZP CSI-RS resources included in the corresponding IMRs.

A CSI reference resource in a serving cell may be defined as follows.

- In the frequency domain, a CSI reference resource may be defined as a downlink PRB group of a band related to CSI to be derived.
- In the time domain, a CSI reference resource for CSI reported in an uplink slot n' may be defined as a downlink slot

$$n - n_{CSI\_ref} - K_{offset \cdot \frac{2^{\mu_{DL}}}{2^{\mu_{K_{offset}}}}}$$

. The corresponding slot may be expressed as a slot

$$n - n_{CSI\_ref} - K_{offset \cdot \frac{2^{\mu_{DL}}}{2^{\mu_{K_{offset}}}}}$$

. Here, the values such as $n_{CSI\_ref}$, $K_{offset}$, $2^{\mu_{DL}}$, and $2^{\mu_{K_{offset}}}$ may be set or indicated through higher layer signaling such as RRC and MAC CE, or may be derived according to a predetermined rule. For example, in an exemplary embodiment of the communication system, the base station may perform RRC configuration or MAC CE indication for $K_{offset}$ to the terminal. In another exemplary embodiment of the communication system, when a single CSI-RS (or SSB resource, etc.) is configured as a CMR for periodic CSI reporting (or semi-persistent CSI reporting), the terminal may assume $n_{CSI\_ref}$ as the minimum value indicating a valid downlink slot among integers greater than or equal to $4 \cdot 2^{\mu_{DL}}$. When multiple CSI-RS or SSB resources are configured as CMRs for periodic CSI reporting or semi-persistent CSI reporting, the terminal may assume $n_{CSI\_ref}$ as the minimum value indicating a valid downlink slot among integers greater than or equal to $5 \cdot 2^{\mu_{DL}}$. Meanwhile, for an aperiodic CSI report indicated by DCI to be reported in the same slot as a specific CSI report, the terminal may assume $n_{CSI\_ref}$ that makes the corresponding slot a valid downlink slot. The terminal may assume $n_{CSI\_ref}$ as the smallest positive integer that satisfies a separately defined delay requirement Z' for other aperiodic CSI reports. In an exemplary embodiment of the communication system, the terminal may perform aperiodic CSI reporting based on channel or interference measurement based on periodic (or semi-persistent) CSI-RS/CSI-IM/SSB resources. Here, when the last OFDM symbol of the periodic (or semi-persistent) CSI-RS/CSI-IM/SSB resource is located within the corresponding delay requirement Z' from the first OFDM symbol in which the corresponding aperiodic CSI report is transmitted, the terminal may not perform measurement on the corresponding CSI-RS/CSI-IM/SSB resource. That is, when Z' symbols or more are not guaranteed until the first OFDM symbol of the aperiodic CSI report after receiving the last OFDM symbol of the corresponding CSI-RS/CSI-IM/SSB resource, the terminal may not perform measurement on the corresponding CSI-RS/CSI-IM/SSB resource.

In an exemplary embodiment of the communication system, a slot satisfying the following conditions within a certain serving cell may be considered as a valid downlink slot.

- Condition 1: A slot including at least one higher layer-configured D (downlink) symbol or F (flexible) symbol.
- Condition 2: A slot that is not included within a measurement gap configured for the corresponding terminal

If there is no valid downlink slot for a CSI reference resource of CSI report configuration within a serving cell, CSI reporting for the corresponding serving cell may be omitted in an uplink slot n'.

When configured to report a CQI, the terminal may assume the following items for the purpose of deriving the corresponding CQI and associated RI and PMI within the corresponding CSI reference resource.

- Item 1: The first two OFDM symbols are used for control signal transmission.
- Item 2: The number of symbols for PDSCH and DMRS is 12.
- Item 3: The same BWP, SCS, and CP length equal to those configured for PDSCH reception
- Item 4: Bandwidth equal to that configured for CQI reporting.
- Item 5: There are no REs used for SSB, NZP CSI-RS, ZP CSI-RS.
- Item 6: Redundancy version (RV) 0.
- Item 7: A ratio between a PDSCH energy per resource element (EPRE) and a CSI-RS EPRE follows a value of higher layer configuration (*Pc*, *powerControlOffset*, etc.).
- Item 8: Refer to a parameter *maxLength* and *dmrs-AdditionalPosition* configuration in *DMRS-DownlinkConfig* for a DMRS pattern.
- Item 9: There is no DMRS in PDSCH symbols.
- Item 10: PRB bundling size is assumed to be 2 PRBs.
- Item 11: a PDSCH signal transmitted through PDSCH antenna ports [1000, ..., 1000+v-1] for v layers may satisfy the relationship of Equation 6 together with a signal transmitted through CSI-RS antenna ports [3000, ..., 3000+P-1]. In Equation 6, $W(i)$ is a precoding matrix indicated by a PMI, and P may be the number of CSI-RS ports in a CSI-RS resource.

[Equation 6]

$$\begin{bmatrix} y^{(3000)}(i) \\ ... \\ y^{(3000+P-1)}(i) \end{bmatrix} = W(i) \begin{bmatrix} x^{(0)}(i) \\ ... \\ x^{(v-1)}(i) \end{bmatrix}$$

- Item 12: One or more CSI-RS resources configured for the terminal may be divided into one or more (e.g., two) resource groups and one or more (e.g., N) resource pairs for a purpose of supporting multi-TRP or the like. In this case, M1 resources in the first resource group may be associated with specific CSI-RS resource indicators (CRIs), respectively, M2 resources in the second resource group may be associated with other CRIs, respectively, and N resource pairs each consisting of one resource included in the first resource group and one resource included in the second resource group may be associated with other CRIs, respectively. In this case, CSI-RS resource mapping relationships for a total of (M1+M2+N) CRIs may be defined/configured. If a CRI assumed for CSI calculation is one of N CRIs (i.e., if a CRI considered for CSI calculation means one of the resource pairs), a first PDSCH signal and a second PDSCH signal may satisfy a relationship of Equation 7, respectively. Here, the first PDSCH signal may mean a signal transmitted through antenna ports [3000, ..., 3000+P-1] of CSI-RS resources included in the first (j=1) resource group among CSI-RS resources indicated by the corresponding CRI and a PDSCH signal transmitted through PDSCH antenna ports [1000, ...., 1000+v1-1] for v1 layers. The second PDSCH signal may mean a signal transmitted through antenna ports [3000, ..., 3000+P-1] of CSI-RS resources included in the second (j=2) resource group among CSI-RS resources indicated by the corresponding CRI and a PDSCH signal transmitted through PDSCH antenna ports [1000, ...., 1000+v1+v2-1] for v2 layers.

[Equation 7]

$$\begin{bmatrix} y_j^{(3000)}(i) \\ ... \\ y_j^{(3000+P-1)}(i) \end{bmatrix} = W_j(i) \begin{bmatrix} x^{((j-1)\cdot v_1)}(i) \\ ... \\ x^{(v_1+(j-1)\cdot v_2-1)}(i) \end{bmatrix}$$

In this case, the total number of layers of the PDSCH is v = v1 + v2, the number of CSI-RS ports for each may be different, and a ratio of a PDSCH EPRE corresponding to each PDSCH layer to a CSI-RS EPRE for each resource group may be assumed according to a value (*Pc*, *powerControlOffset*) configured for each CSI-RS resource. Here, $W_j(i)$ may be a precoding matrix indicated by the (j=1)-th PMI. Signals transmitted through antenna ports corresponding to different resource groups may be assumed to have mutual interference when calculating the CSI.

The respective CSI reports may have priority values according to the following rules, where a low value may have a high priority. When two different CSI reports collide and thus the two different CSI reports are merged into one CSI report or one CSI report among the two CSI reports is selected according to a configuration of the base station, the corresponding priority values may be referred to adjust the CSI contents according to a CSI payload or to select one of the two CSI reports.

- The CSI reports may be associated with the same or similar priority values as in Equation 8.

[Equation 8]

$$Pri_{iCSI}(y,k,c,s) = 2 \cdot N_{cells} \cdot M_s \cdot y + N_{cells} \cdot M_s \cdot k + M_s \cdot c + s$$

In Equation 8, in the case of an aperiodic CSI report transmitted through a PUSCH, y may be 0. In the case of a semi-persistent CSI report transmitted through a PUSCH, y may be 1. In the case of a semi-persistent CSI report transmitted through a PUCCH, y may be 2. In the case of a periodic CSI report transmitted through a PUCCH, y may be 3.

In the case of a CSI report carrying L1-RSRP or L1-SINR, k may be 0, and in the case of a CSI report not carrying L1-RSRP or L1-SINR, k may be 1.

c is a serving cell index and $N_{cells}$ may be a value of a higher layer parameter *maxNrofServingCells.*

s is a *reportConfigID* and $M_s$ may be a value of a higher layer parameter *maxNrofCSI-ReportConfigurations.*

If a $Pri_{iCSI}(y,k,c,s)$ value of a first CSI report is lower for that of a second report, it can be said that the first CSI report has a higher priority than the second CSI report.

Two CSI reports may be said to collide if time occupancies of physical channels reserved for carrying the CSI reports overlap in at least one OFDM symbol and are transmitted un the same carrier. When the terminal is configured to transmit the two colliding CSI reports, the following may be applied.

- If the y values are different between the two CSI reports, the following rules may be applied except for a case where one of the y values is 2 and the other is 3.
- A CSI report having a higher $Pri_{iCSI}(y,k,c,s)$ value may not be transmitted by the terminal.
- Otherwise, depending on the priority values, the two CSI reports may be multiplexed or one of them may be deleted.

When a semi-persistent CSI report transmitted on a PUSCH overlaps in time with PUSCH data transmission in one or more symbols of the same carrier, and the earliest symbol of the PUSCH channel does not start earlier by (N2+d2,1) symbols from the last symbol of DCI scheduling, which is the maximum value of d2,1 related to a PUSCH carrying the semi-persistent CSI report and a PUSCH having data transmission, the terminal may need not to transmit the CSI report. Otherwise, it will be an error case if a timeline requirement is not met.

When the terminal transmits a first PUSCH including a semi-persistent CSI report and a second PUSCH including a UL-SCH, if the first PUSCH transmission overlaps with the second PUSCH transmission in time, the terminal may not transmit the first PUSCH and may transmit the second PUSCH. When at least one of the first PUSCH and the second PUSCH is a response to detection of a DCI format by the terminal, the terminal may expect that the PUSCH transmission in which the first and second PUSCH transmissions overlap in time satisfies the above-described timing condition.

The terminal may report to the base station information (i.e., $N_{CPU}$) of the maximum number of CSI calculations that the terminal can simultaneously perform through a UE capability report. If the terminal needs to newly start calculating N CSI reports in a state in which L CSI processing units (CPUs) are already occupied (or in a state when they are being used for CSI calculations), the terminal may not perform updates for the lower (N-M) CSI reports having lower priorities according to the priorities described above. Here, M is the largest number among positive numbers greater than or equal to 0 and less than or equal to N that satisfies the relationship of $\sum_{n=0}^{M-1} O_{CPU}^{(n)} \leq N_{CPU} - L$, and $O_{CPU}^{(n)}$ may mean the number of CPUs used for the n-th CSI calculation.

The number of CPUs required for each CSI report may be determined as follows. Multiple CPUs may be used for several symbols to process the CSI report as follows.

- $O_{CPU}$=0 (for a CSI report according to *CSI-ReportConfig* having a higher layer parameter *reportQuantity* set to 'none' and a higher layer parameter *trs-Info*)
- Ocru=1 (for a CSI report having a higher layer parameter *reportQuantity* set to '*cri-RSRP*', '*ssb-Index-RSRP*', '*cri-SINR*', '*ssb-Index-SINR*' or '*none*' (and for *CSI-RS-ResourceSet* having a higher layer parameter *trs-Info*)
- $O_{CPU}$ = 1 (for a CSI report according to *CSI-ReportConfig* having a higher layer parameter *reportQuantity* set to '*cri-RI-PMI-CQI*', '*cri-RI-i1*', '*cri-RI-i1-CQI*', '*cri-RI-CQI*' or '*cri-RI-LI-PMI-CQI*')
- A case where $O_{CPU}$=$N_{CPU}$ (max{μPDCCH, μCSI-RS, μUL} ≤ 3, L0 CPUs are occupied, a transport block, HARQ-ACK, or both are not transmitted on a PUSCH, and a CSI report is triggered aperiodically. Here, the CSI corresponds to a single CSI in a wideband frequency unit and corresponds to up to 4 CSI-RS ports in a single resource without a CRI report, and a codebook type is set to '*type1-SinglePanel*' or *reportQuantity* is set to 'cri-RI-CQI'.
- $O_{CPU}$=2N+M (when a codebook type is set to '*type1-SinglePanel*' and the corresponding CSI-RS resource set for channel measurement consists of two resource groups and N resource pairs)

- In other cases, $O_{CPU}=K_s$. Here, $K_s$ may be the number of CSI-RS resources of a CSI-RS resource set configured for channel measurement.

In case of a CSI report according to *CSI-ReportConfig* having a higher layer parameter *reportQuantity* not set to 'none', the CPU(s) may be occupied for several OFDM symbols as follows.

- For a periodic or semi-persistent CSI report (excluding an initial semi-persistent CSI report for a PUSCH after a PDCCH triggers reporting), the CPU may be occupied from the first symbol of the earliest resource among CSI-RS/CSI-IM/SSB resources for channel or interference measurement. Each latest CSI-RS/CSI-IM/SSB occasion is no later than the corresponding CSI reference resource and may occupy the CPU until the last symbol of the configured PUSCH/PUCCH carrying the report.
- An aperiodic CSI report may occupy the CPU from the first symbol after a PDCCH triggers the CSI report to the last symbol of a reserved PUSCH carrying the report. When a PDCCH candidate is associated with a search space set configured by *searchSpaceLinking*, a PDCCH candidate terminated late in time among two PDCCH candidates associated with each other may be used to determine a CPU occupation period.
- An initial semi-persistent CSI report on a PUSCH after triggering of a PDCCH may occupy the CPU from the first symbol after the PDCCH to the last symbol of the reserved PUSCH carrying the report. When a PDCCH candidate is associated with a search space set configured by *searchSpaceLinking*, a PDCCH candidate terminated late in time among two PDCCH candidates associated with each other may be used to determine a CPU occupation period.

For a CSI report according to *CSI-ReportConfig* having a higher layer parameter *reportQuantity* set to 'none' and a *CSI-RS-ResourceSet* with no higher layer parameter *trs-Info* configured, the CPU may be occupied for several OFDM symbols as follows.

- A semi-persistent CSI report (excluding an initial semi-persistent CSI report for a PUSCH after report triggering of a PDCCH) may occupy the CPU from the first symbol of the earliest transmission occasions among transmission occasions of periodic or semi-persistent CSI-RS/SSB resources for channel measurement based on L1-RSRP until $Z_3'$ symbols after the last symbol of the most recent one among the CSI-RS/SSB resources for channel measurement based on L1-RSRP.
- An aperiodic CSI report may occupy the CPU from the first symbol after CSI-report triggering of a PDCCH until the last symbol between $Z_3$ symbol after the first symbol after CSI-report triggering of the PDCCH and $Z_3'$ symbols after the most recent symbol of CSI-RS/SSB resources for L1-RSRP based channel measurement.

In any slots, the terminal may be expected to have no more active CSI-RS ports or active CSI-RS resources of an activated BWP than reported as capacity. An NZP CSI-RS resource may be activated for a period defined as follows. In case of an aperiodic CSI-RS, it may start at the end of a PDCCH carrying a request and end at the end of a scheduled PUSCH including a report related to the aperiodic CSI-RS. When a PDCCH candidate is associated with a search space set configured by *searchSpaceLinking*, a PDCCH candidate terminated late in time among two PDCCH candidates associated with each other may be used to determine a CPU occupation period. In case of a semi-persistent CSI-RS, it may start from a time when an activation command is applied and end from a time when a deactivation command is applied. In case of a periodic CSI-RS, it may start when the periodic CSI-RS is configured by higher layer signaling and end when the periodic CSI-RS configuration is released. When a CSI-RS resource is referred to N times in one or more CSI report configurations, the CSI-RS resource and a CSI-RS port in the CSI-RS resource may be counted N times. For a CSI-RS resource set for channel measurement consisting of two resource groups and N resource pairs, if a CSI-RS resource is referenced X times by one of the M CSI-RS resources and/or by one or two resource pairs, the CSI-RS resource and the CSI-RS port within the CSI-RS resource may be counted X times.

As described above, the CSI reported in the uplink slot n may be derived by assuming (or considering) various factors including the following components as specific values, and in the following description of the present disclosure, the components assumed by the terminal when generating the CSI are called CSI components. The following provides examples of CSI components, and in actual application, the CSI components are not limited thereto and may include more various components provided by the present disclosure.

- Frequency-domain and time-domain position of CSI reference resource
- Position of a valid downlink slot
- Transmission/measurement position of CMR/IMR (e.g., whether or not the minimum delay requirement is satisfied)
- Priority between the respective CSIs
- The number of CPUs used for each CSI calculation, the maximum number of CPUs supported by the terminal, the number of CPUs currently occupied, whether to indicate/activate a CSI report, whether to calculate multi-TRP CSI

- Downlink power control value (e.g., *powerControlOffset*)
- Discontinuous reception (DRX) configuration

In an exemplary embodiment of a communication system, transmission modes may be variably applied to a radio resource to cope with various communication situations. For example, in order to cope with various situations related to operations of IAB nodes, operations of multiple transmission and reception points (multi-TRP), in-band/out-band full duplex communication operations, and the like, transmission modes may be variably applied to a radio resource.

Communication devices (i.e., transceiver, communication node, base station, terminal, and the like) of the communication system may use resources such as time/frequency/spatial/power resources equally or differently according to the respective transmission modes (or according to an indication of an upper node considering each transmission mode) for the purpose of improving wireless communication quality. For example, the communication devices may equally or differently use resources such as time resources, frequency resources, the number of antennas, antenna shapes, and transmit power according to the respective transmission modes. For the purpose of securing robustness and resiliency for various communication environments as well as enhancing wireless communication quality/capacity, techniques for dynamically/variably using various transmission modes may be required. Further, techniques for measuring and/or reporting channel state information to efficiently support dynamically varying transmission modes may be required.

The subject of application of the methods provided in the present disclosure below has been described as a base station or a terminal, but this is for convenience of description, and is not limited thereto when applied to future mobile communication technologies (e.g., 5G, B5G or 6G mobile communication technologies, etc.). For example, the methods provided in the present disclosure below may be applied to wireless communication between other similar devices. The configurations described for a first communication device (or base station) may be equally or similarly applied to an IAB-DU (of an upper node), a repeater-DU, or a repeater-RU (i.e., remote unit, RF unit). The configurations described for a second communication device (or terminal) may be equally or similarly applied to a user equipment (UE), mobile equipment (ME), mobile terminal (MT), IAB-MT (of a lower node), or repeater-MT. For example, when the contents of the present disclosure are applied to an IAB network, an operation of a base station performing higher layer configuration for a terminal through RRC or MAC CE signaling may be substituted with an operation of a CU or an IAB-DU of an upper node (or an IAB-node) performing higher layer configuration for an IAB-MT of a lower node (or neighbor IAB-node) through F1AP signaling. As another example, when the contents of the present disclosure are applied to an IAB network, an operation of a terminal reporting specific information to a base station through a PUSCH or PUCCH may be substituted with an operation of an IAB-MT of a lower node (or an IAB-MT of an IAB-node) reporting specific information to a CU or an IAB-DU of an upper node (or to an IAB-DU of a neighbor IAB-node) through a PUSCH or PUCCH. Specific examples of various other possible operations are omitted in order not to obscure the gist of the description.

Hereinafter, methods for transmitting and receiving channel state information in a communication system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a receiving node is described, a corresponding transmitting node may perform an operation corresponding to the operation of the receiving node. Conversely, when an operation of a transmitting node is described, a corresponding receiving node may perform an operation corresponding to the operation of the transmitting node.

**[First exemplary embodiment of communication system]**

In a first exemplary embodiment of the communication system, operation mode determination schemes for CSI reporting are proposed. More specifically, in the first exemplary embodiment of the communication system, for a case where a first communication device assigns one or more operation modes for a certain resource (or within a certain resource period) to a second communication device, methods for determining which operation mode is to be assumed in derivation/generation/computation of a CSI report for the resource will be proposed. Here, the first communication device may mean a base station, CU, upper node, and/or the like. The second communication device may mean a terminal, IAB-MT, lower node, and/or the like.

Hereinafter, the first exemplary embodiment of the communication system will be described taking an exemplary embodiment in which the first communication device is a base station and the second communication device is a terminal as an example. However, this is only an example for convenience of description, and the first exemplary embodiment of the communication system is not limited thereto. Contents described using 'base station' in the first exemplary embodiment of the communication system may be equally or similarly applied to the 'first communication device'. Contents described using 'terminal' in the first exemplary embodiment of the communication system may be equally or similarly applied to the 'second communication device'.

In the first exemplary embodiment of the communication system, the base station may assign one or more operation modes to the terminal for a certain resource (or within a certain resource period). Here, the corresponding resource (or corresponding resource period) to which one or more operation modes are assigned may include one or a combination of two or more (e.g., time-frequency resource) among time resource, frequency resource, spatial resource, code resource, and computational resource. In assigning the one or more operation modes, the base station may configure the one or more operation modes through RRC signaling, activate the one or more operation modes through a MAC CE, or indicate the one or more operation modes through a DCI and/or MAC CE.

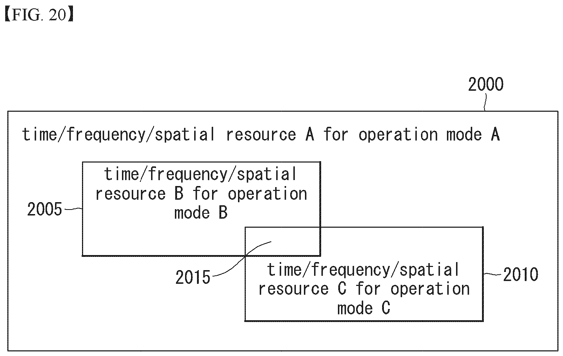

FIG. 20 is a conceptual diagram for describing a first exemplary embodiment of an operation mode assignment method.

Referring to FIG. 20, communication devices in the communication system may perform CSI transmission/reception operations. The communication devices may include a base station (or first communication device) and a terminal (or second communication device). The base station may assign one or more operation modes to the terminal for a certain resource (or within a certain resource period). The terminal may perform CSI reporting (or CSI transmission) to the base station based on the allocated resource and the one or more operation modes. The base station may receive CSI from the terminal. Hereinafter, in describing the first exemplary embodiment of the operation mode assignment method with reference to FIG. 20, contents overlapping with those described with reference to FIGS. 1 to 19 may be omitted.

Referring to FIG. 20, the base station may assign an operation mode A for a resource A 2000. Here, the resource A 2000 may include one or a combination of two or more (e.g., time-frequency resource) among time resources, frequency resources, spatial resources, code resources, and computational resources. The operation mode A assigned to the resource A 2000 may be applied to all possible resources without depending on any of specific configuration/activation/indication, may be configured/activated/indicated as a fallback mode or default mode, may be promised to have the highest priority, or may be a basic mode configured/activated/indicated to have the highest priority.

The base station may assign an operation mode B for a resource B 2005. Here, the resource B 2005 may include one or a combination of two or more (e.g., time-frequency resource) among time resources, frequency resources, spatial resources, code resources, and computational resources. The resource B 2005 may or may not overlap with the resource A 2000 to which the operation mode A is assigned.

The base station may assign an operation mode C for a resource C 2010. Here, the resource C 2010 may include one or a combination of two or more (e.g., time-frequency resource) among time resources, frequency resources, spatial resources, code resources, and computational resources. The resource C 2010 may or may not overlap with the resource A 2000 to which the operation mode A is assigned.

A region where the resource B 2005 to which the operation mode B is assigned and the resource C 2010 to which the operation mode C is assigned overlap may be referred to as a resource D 2015. In other words, the resource D 2015 may refer to a resource included in both the resource B 2005 and the resource C 2010. The base station can be seen as assigning two or more different operation modes to the resource D 2015. For example, two different operation modes may be simultaneously configured to the same resource D 2015. Alternatively, the operation mode applied to the resource D 2015 may be dynamically changed by signaling (e.g., MAC CE, DCI, etc.).

In FIG. 20, the types of operation modes may be classified based on one or more classification criteria. The types of operation modes may be classified according to an applied IAB DU/MT multiplexing mode (e.g., TDM, FDM, SDM, etc.). The types of operation modes may be classified according to an IAB FDM resource configuration (e.g., whether frequency-domain HSNA configuration is applied or not). The types of operation modes may be classified according to a frequency (time) resource configuration for duplex enhancement (e.g., flexible duplex mode including XDD (e.g., FDD, TDD, etc.), a flexible duplex mode including subband full-duplex, and a full-duplex (e.g., FD, in-band full-duplex, etc.). The types of operation modes may be classified according to a restricted/desired DU/MT beam configuration (or whether or not to apply it). The types of operation modes may be classified according to a UL PSD range configuration (or whether or not to apply it). The types of operation modes may be classified according to a timing configuration (or whether or not to apply it) based on Case #1, Case #6, and Case #7 of the simultaneous operation scheme. The types of operation modes may be classified according to whether a corresponding resource is included in a slot list indicated by one of the IAB MAC CEs. Meanwhile, the types of operation modes may be classified based on a combination of a plurality of classification criteria among the classification criteria described above.

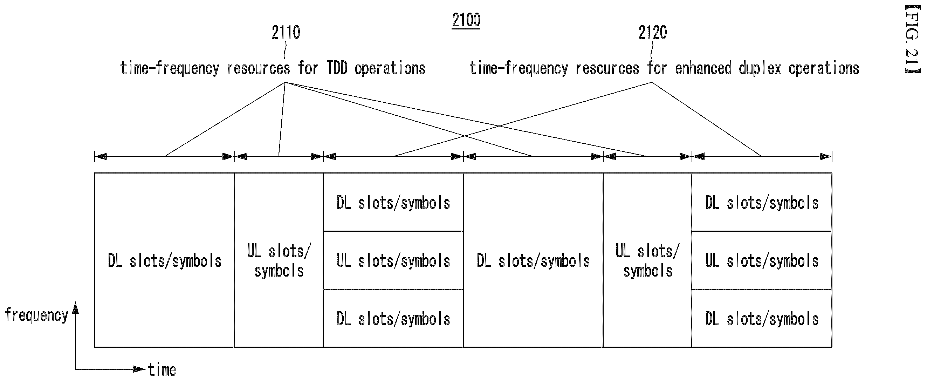

FIG. 21 is a conceptual diagram for describing a second exemplary embodiment of an operation mode assignment method.

Referring to FIG. 21, communication devices in the communication system may perform CSI transmission/reception operations. The communication devices may include a base station (or first communication device) and a terminal (or second communication device). The base station may assign one or more operation modes to the terminal for a certain resource (or within a certain resource period). The terminal may perform CSI reporting (or CSI transmission) to the base station based on the allocated resource and the one or more operation modes. The base station may receive CSI from the terminal. Hereinafter, in describing the second exemplary embodiment of the operation mode assignment method with reference to FIG. 21, contents overlapping with those described with reference to FIGS. 1 to 20 may be omitted.

In the communication system, a resource structure 2100 may consist of one or more resource types. For example, the resource structure 2100 may consist of time-frequency resources. The base station may operate according to an operation mode A in a specific time period 2110. The operation mode A may be the same as or similar to a time-domain duplex (TDD) mode. The base station may operate according to an operation mode B in another specific time period 2120. The operation mode B may be the same as or similar to an enhanced duplex mode. The advanced duplex mode may include a flexible duplex mode including XDD (e.g., FDD, TDD, etc.) and subband full-duplex, and various duplex modes such as full-duplex (FD, including in-band full duplex).

In order to support the enhanced duplex mode, the base station may allocate downlink slot(s) or symbol(s) to a specific terminal (group) for specific frequency resources (groups) within the same time period, and allocate uplink slot(s) or symbol(s) to another terminal (group) for other frequency resources (groups) within the corresponding time period. The various operation modes may be semi-statically assigned based on higher layer signaling (e.g., F1AP, RRC, or MAC CE, etc.) for each resource, or dynamically assigned based on L2 or L1 signaling (e.g., MAC CE or DCI). In this case, each operation mode may be associated with a different set of CSI components (i.e., components to be assumed by the terminal when generating the CSI). In this case, the base station may need to receive separate CSI reports for the resource period 2110 and the resource period 2120 in order to increase a radio transmission efficiency. When the resource allocation characteristics of CSI measurement and reporting (e.g., periodic CSI reporting based on periodic CMR/IMR measurement) do not match the resource allocation characteristics of the operation mode (e.g., dynamic operation mode resource allocation, etc.), or when a timing of resource allocation/change of measurement and reporting (e.g., CSI measurement/report settings in a slot n) and a timing of resource allocation/change of operation mode (e.g., allocation of operation mode resources in a slot n+N), the terminal (or base station) may need to determine which CSI components (set) the CSI report is associated with.

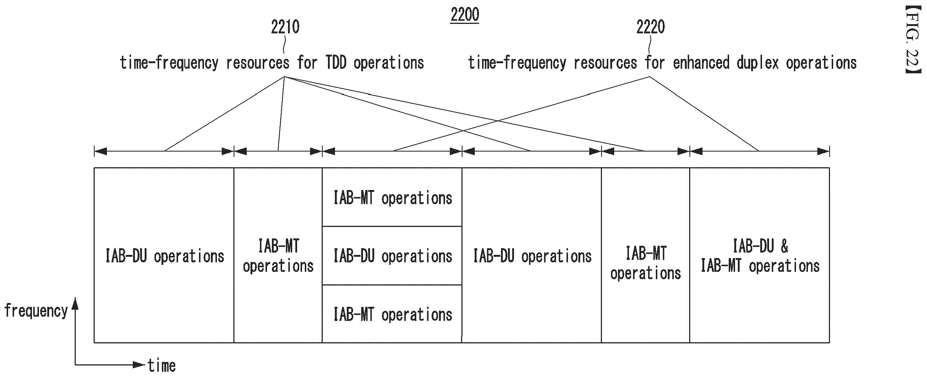

FIG. 22 is a conceptual diagram for describing a third exemplary embodiment of an operation mode assignment method.

Referring to FIG. 22, communication devices in the communication system may perform CSI transmission/reception operations. The communication devices may include a base station (or first communication device) and a terminal (or second communication device). The base station may assign one or more operation modes to the terminal for a certain resource (or within a certain resource period). The terminal may perform CSI reporting (or CSI transmission) to the base station based on the allocated resource and the one or more operation modes. The base station may receive CSI from the terminal. Hereinafter, in describing the third exemplary embodiment of the operation mode assignment method with reference to FIG. 22, contents overlapping with those described with reference to FIGS. 1 to 21 may be omitted.

In the communication system, a resource structure 2200 may consist of one or more resource types. For example, the resource structure 2200 may be composed of time-frequency resources. The base station may operate according to an operation mode C in a specific time period 2210. The operation mode C may mean performing an operation between an IAB-DU and an IAB-MT in a time division multiplexing (TDM) mode. The operation mode C may be configured by a Rel-16 time-domain HSNA configuration. The base station may operate according to an operation mode D in another specific time period 2220. The operation mode D may mean a non-TDM mode (e.g., FDM mode, SDM mode, etc.). The operation mode D may be configured by a Rel-17 frequency-domain HSNA configuration.

The operation modes may be classified into detailed operation modes according to different functions involved. For example, the following classifications may be possible.

1) A resource A allocated to a TDM mode may be associated with Pc configured by a higher layer (i.e., a PDSCH EPRE in the resource A is derived by *powerControlOffset* described above), and an operation mode therefor may be classified as an operation mode A-1.

2) A resource B allocated to a FDM mode may be associated with a provided (or desired) DL Tx power adjustment MAC CE B (e.g., a PDSCH EPRE in the resource B is derived by considering a value indicated by a MAC CE B in addition to a CSI-RS/PDSCH power ratio by *powerControlOffset* described above, or the PDSCH EPRE in the resource B is derived by considering only the value indicated by the MAC CE B without applying the CSI-RS/PDSCH power ratio by *powerControlOffset* described above), and an operation mode thereof may be classified as an operation mode B-1.

3) A resource C allocated to a FDM mode may be associated with a provided (or desired) DL Tx power adjustment MAC CE C (e.g., a PDSCH EPRE in the resource C is derived by a value indicated by the MAC CE C in addition to a CSI-RS/PDSCH power ratio by *powerControlOffset* described above, or derived by considering only the value indicated by the MAC CE C without applying the CSI-RS/PDSCH power ratio by *powerControlOffset* described above), and an operation mode therefor may be classified as an operation mode B-2.

The various operation modes may be assigned semi-statically based on higher layer signaling (F1AP, RRC, or MAC CE, etc.) for each resource, or may be assigned dynamically based on L2 or L1 signaling (e.g., MAC CE or DCI, etc.). In this case, each operation mode may be associated with a set of different CSI components (components to be assumed by the terminal when generating CSI). In this case, the base station may need to receive a separate CSI report for each of the resource periods 2210 and 2220 in order to increase a radio transmission efficiency. When the resource allocation characteristics of CSI measurement and reporting (e.g., periodic CSI reporting based on periodic CMR/IMR measurement) do not match the resource allocation characteristics of the operation mode (e.g., dynamic operation mode resource allocation, etc.), or when a timing of resource allocation/change of CSI measurement and reporting (e.g., CSI measurement/report settings in a slot n) and a timing of resource allocation/change of operation mode (e.g., allocation of operation mode resources in a slot n+N), the terminal (or base station) may need to determine which CSI components (set) the CSI report is associated with.

As another example, as in the exemplary embodiment shown in FIG. 20, there may be a case in which two or more different operation modes are simultaneously assigned to a specific resource 2015. Specifically, this may correspond to a case in which a specific slot list and RB set (or RB set group) are configured as a time-domain soft resource and a frequency-domain soft resource (the operation mode for the time-frequency resource may be dynamically changed by a DCI format 2_5). Even in this case, the terminal (or the base station) may need to determine which CSI components (set) the CSI report is associated with.

In an exemplary embodiment of the communication system, the definition of 'operation modes' described with reference to FIGS. 20 to 22 may be configured as a combination of the above-described possible operation modes. As an example, in FIG. 20, the operation mode A may be defined as a TDM operation mode of IAB-DU/IAB-MT based on time-domain HSNA configuration, and the operation mode B may be defined as a combination of an FDM (or SDM) operation mode of IAB-DU/IAB-MT based on frequency-domain HSNA configuration and a downlink power adjustment operation mode based on a provided (or desired) DL Tx power adjustment MAC CE. The exemplary embodiments shown in FIGS. 21 and 22 may be similarly extended.

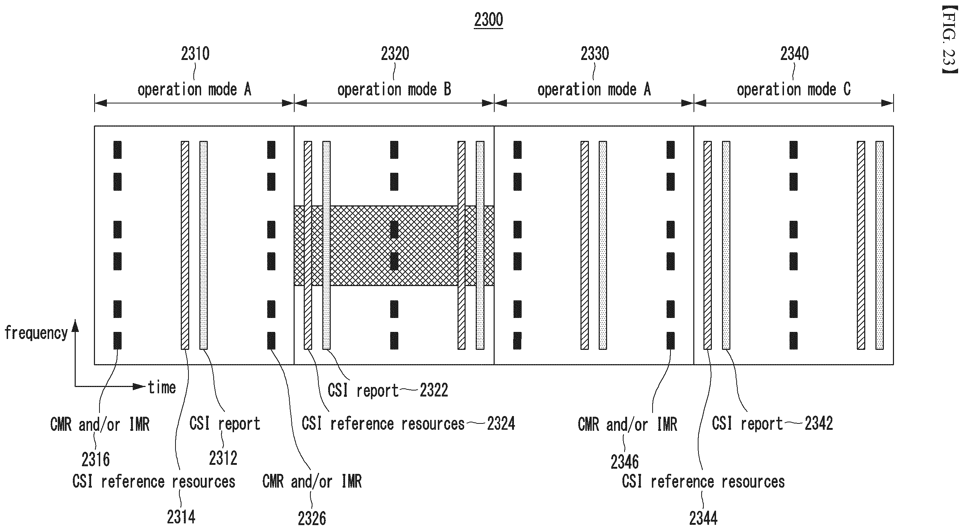

FIG. 23 is a conceptual diagram for describing an exemplary embodiment of a CSI reporting method for each operation mode.

Referring to FIG. 23, communication devices in the communication system may perform CSI transmission/reception operations. The communication devices may include a base station (or first communication device) and a terminal (or second communication device). The base station may assign one or more operation modes to the terminal for a certain resource (or within a certain resource period). The terminal may perform CSI reporting (or CSI transmission) to the base station based on the allocated resource and the one or more operation modes. The base station may receive CSI from the terminal. Hereinafter, in describing the first exemplary embodiment of the CSI reporting method for each operation mode with reference to FIG. 23, contents overlapping with those described with reference to FIGS. 1 to 22 may be omitted.

In an exemplary embodiment of a resource structure 2300 consisting of time-frequency resources in the communication system, the base station may assign one or more operation modes 2310, 2320, 2330, and 2340 to the terminal. Here, the operation of assigning the one or more operation modes 2310, 2320, 2330, and 2340 to the terminal by the base station may mean a configuration operation, an activation operation, an indication operation, and the like for the one or more operation modes. Meanwhile, the base station may allocate the same or different resources to each of the operation modes 2310, 2320, 2330, and 2340. The terminal may perform CSI reporting 2312, 2322, and 2342 to the base station. For the CSI reporting 2312, 2322, and 2342 of the terminal, measurement resources 2316, 2326, and 2346 and CSI reference resources 2314, 2324, and 2344 may be used. Here, the measurement resources 2316, 2326, and 2346 for the CSI reporting 2312, 2322, and 2342 may correspond to CMR for channel measurement and/or IMR for interference measurement. Transmission/monitoring/measurement locations of the measurement resources 2316, 2326, and 2346 for the respective CSI reporting 2312, 2322, and 2342 may be specified based on a predetermined periodicity and offset, or based on a predetermined trigger/activation and offset, and the like. The transmission/monitoring/measurement locations of the measurement resources 2316, 2326, and 2346 for the respective CSI reporting 2312, 2322, and 2342 and locations of the CSI reference resources 2314, 2324, and 2344 may correspond to different resources allocated to the identical or different operation modes. For example, in an exemplary embodiment of the communication system, the operation modes respectively associated with of the measurement resources 2316, 2326, and 2346, such as CMR, IMR, etc. for the CSI reporting 2312, 2322, 2342, and the operation modes associated with the CSI reference resources 2314, 2324, and 2344 may be the same or different from each other.

The operation mode A 2310 associated with the first measurement resource 2316 for the first CSI report 2312 may be the same as the operation mode A 2310 associated with the first CSI reference resource 2314 for the first CSI reporting 2312. In this case, the first CSI report 2312 based on the first measurement resource 2316 and the first CSI reference resource 2314 may be performed based on CSI components according to the operation mode A 2310. As a result, ambiguity may not occur.

Meanwhile, the operation mode A 2310 associated with the second measurement resource 2326 for the second CSI report 2322 may be different from the operation mode B 2320 associated with the second CSI reference resource 2324 for the second CSI report 2322. In this case, uncertainty or ambiguity may occur as to whether the second CSI reporting 2322 based on the second measurement resource 2326 and the second CSI reference resource 2324 is performed based on CSI components according to the operation mode A 2310 or based on CSI components according to the operation mode B 2320.

Meanwhile, the operation mode A 2310 associated with the second measurement resource 2326 for the second CSI report 2322 may be different from the operation mode B 2320 associated with the second CSI reference resource 2324 for the second CSI report 2322. In this case, uncertainty or ambiguity may occur as to whether the second CSI reporting 2322 based on the second measurement resource 2326 and the second CSI reference resource 2324 is performed based on CSI components according to the operation mode A 2310 or based on CSI components according to the operation mode B 2320.

Meanwhile, the operation mode A 2330 associated with the third measurement resource 2346 for the third CSI report 2342 may be different from the operation mode C 2340 associated with the third CSI reference resource 2344 for the third CSI report 2342. In this case, uncertainty or ambiguity may occur as to whether the third CSI reporting 2342 based on the third measurement resource 2346 and the third CSI reference resource 2344 is performed based on CSI components according to the operation mode A 2330 or based on CSI components according to the operation mode C 2340.

As described above, uncertainty (or ambiguity) may occur in relation to the second CSI report 2322 and the third CSI report 2342. This may cause a problem when a signaling (activation, indication, etc.) for changing the operation mode to a new operation mode 2320 or 2340 is monitored or received after monitoring on the measurement resource 2326 or 2346 is performed in the operation mode A 2310 or 2330 and one or more CPUs are occupied for CSI calculation.

In order to solve the above-described problems, the base station and the terminal may operate based on at least one of Method #1 to Method #11 below. According to Methods #1 to #11, the base station and/or the terminal may perform an operation of determining an operation mode assumed for CSI derivation, an operation of limiting a target frequency band of CSI derivation (or a frequency band of the CSI reference resource), or an operation of limiting a time period or a frequency band of the measurement resource (CMR and/or IMR) referred to for CSI derivation. Accordingly, the ambiguity of the CSI component assumption may be removed.

Method #1: The terminal may generate CSI in consideration of an operation mode applied to a CSI reference resource of a certain CSI report. For example, the terminal may generate first CSI in consideration of the operation mode applied to the first CSI reference resource for the first CSI report. Here, the operation mode applied to the first CSI reference resource may be defined based on the following options.

Option #1-1: An operation mode configured in a first resource (e.g., slot or symbol) identical to or overlapping with the first CSI reference resource through higher layer signaling (e.g., SIB, RRC, F1AP, etc.)

Option #1-2: An operation mode activated or indicated to a first resource (e.g., slot or symbol) identical to or overlapping with the first CSI reference resource through higher layer signaling (e.g., MAC CE)

Option #1-3: An operation mode activated or indicated to a first resource (e.g., slot or symbol) identical to or overlapping with the first CSI reference resource through higher layer signaling (e.g., MAC CE). Here, this option is limited only when the corresponding higher layer signaling is received before a first time interval from the first CSI reference resource (or first resource). The first time interval may mean a predetermined number of time resources (e.g., slots or symbols). Alternatively, the first time interval may refer to a time resource (e.g., slot(s) or symbol(s)) configured through separate signaling. The first time interval may mean a minimum delay time Z'.

Option #1-4: An operation mode indicated to a first resource (e.g., slot or symbol) identical to or overlapping with the first CSI reference resource through L1 signaling (e.g., DCI)

Option #1-5: An operation mode indicated to a first resource (e.g., slot or symbol) identical to or overlapping with the first CSI reference resource through L1 signaling (e.g., DCI). Here, this option is limited only when the corresponding L1 signaling is received before the first time period from the first resource.

Here, when one of the conditions in Options #1-3 to #1-5 is not satisfied (e.g., when signaling for activating or indicating a specific operation mode is not received before the first time interval from the first CSI reference resource (or the first resource)), an appointment may be established such that a default operating mode for the first CSI reference resource is assumed. For example, the default operation mode may be determined based on any one of the following criteria.

- An operation mode used when receiving a cell-specific or group-specific downlink signal (e.g., MIB (PBCH), SIB, CSI-RS, or CORESET 0)
- An operation mode used when transmitting a cell-specific or group-specific uplink signal (e.g., PRACH, SRS, etc.)
- An operation mode configured through a separate higher layer parameter
- Other operation mode assumed in CSI reporting

Method #2: The base station may transmit to the terminal a separate configuration (or indication) for one or more operation modes to be considered when the terminal derives (or calculates) CSI for a specific CSI report. When the specific CSI report is associated with multiple operation modes, the terminal may derive the CSI by considering an operation mode having the highest priority. Specific examples of a priority determination method may refer to other exemplary embodiments of the present disclosure. For a CSI report not associated with the separate configuration (or indication) received by the terminal from the base station, an appointment may be established so that a default operation mode is assumed. For example, the default operation mode may be determined based on any one of Options #1-1 to #1-5.

Method #3: The base station may configure or instruct the terminal to perform CSI reporting including a plurality of CSI values considering a plurality of operation modes. When N operation modes to be considered for reporting of specific CSI (hereinafter referred to as first CSI) are configured or indicated, the terminal may perform reporting of the first CSI including a group or pairs of N CSI values (e.g., CRI, RI, PMI, CQI, RSRP, etc.). Here, the group (or pairs) of N CSI values for the N operation modes maybe understood as an extension of a serving cell associated with the first CSI to N virtual serving cells. A stacking order (or combination order, sorting order, etc.) of the CSI group (or pairs) for the N operation modes may be determined by priorities of the N operation modes, or by a configuration/indicator order of the N operation modes. The stacking order determined in this manner may be a criterion when some CSI values should be dropped or omitted because a PUCCH payload or PUSCH payload for the CSI reporting is not sufficient. In another exemplary embodiment of the communication system, when two different operation modes are configured or indicated for reporting a specific CSI, a (subband) differential CQI or a subband differential CQI may be used to report a different in CQIs at the first operation mode and the second operation mode. The first operation mode among the two different operation modes may be configured or indicated through separate signaling. Alternatively, the first operation mode among the two different operation modes may be determined based on any one of the default operation mode determination methods according to Options #1-1 to #1-5.

Method #4: When a CMR and an IMR associated with a certain CSI report use different time resources associated with different operation modes, the terminal may omit or ignore the corresponding CSI report. For example, when a CMR and an IMR associated with the first CSI report are configured as different time resources associated with different operation modes (different symbols, different slots, different symbols/slots separated by N symbols/slots or more, etc.), the first CSI report may be omitted or ignored. In another exemplary embodiment of the communication system, when resources associated with a certain CSI report (e.g., CMR, IMR, CSI reference resource, etc.) use different time resources associated with different operation modes, the terminal may omit or ignore the corresponding CSI report. Through this, CSI reporting with ambiguity related to the operation modes may be omitted. Accordingly, a burden on the terminal for CSI reporting may be reduced, and an uplink load may be reduced.

Method #5: When a CMR and an IMR associated with a certain CSI report use different frequency resources associated with different operation modes, the terminal may omit or ignore the corresponding CSI report. For example, when a CMR and an IMR associated with the first CSI report are configured as different frequency resources associated with different operation modes (different RBs, different RB sets/RB set groups, different RBs/RB sets/RB set groups separated by N RBs/RB sets/RB set groups, etc.), the first CSI report may be omitted or ignored. In another exemplary embodiment of the communication system, when resources associated with a certain CSI report (e.g., CMR, IMR, CSI reference resource, etc.) use different frequency resources associated with different operation modes, the terminal may omit or ignore the corresponding CSI report. Through this, CSI reporting with ambiguity related to the operation modes may be omitted. Accordingly, a burden on the terminal for CSI reporting may be reduced, and an uplink load may be reduced.

Method #6: When a CMR and an IMR associated with a certain CSI report use different time resources associated with different operation modes, the terminal may omit or ignore the corresponding CSI report. For example, when a CMR and an IMR associated with the first CSI report are included in different IAB time resource configurations (or relay station time resource configurations), the terminal may omit or ignore the first CSI report. Alternatively, when one of the CMR and IMR associated with the first CSI report is configured within a slot included in a slot list indicated by a provided DL TX power adjustment MAC CE and the other is configured within a slot not included in the slot list indicated by the provided DL TX power adjustment MAC CE, the terminal may omit or ignore the first CSI report. In another exemplary embodiment of the communication system, the terminal may omit or ignore a certain CSI report when resources (CMR, IMR, CSI reference resource, etc.) associated with the certain CSI report use different time resources associated with different operation modes. For example, when a CMR/IMR and a CSI reference resource associated with a first CSI report are included in different IAB time resource configurations (or relay station time resource configurations), the terminal may omit or ignore the first CSI report. Alternatively, when one of the CMR/IMR and CSI reference resource associated with the first CSI report is configured within a slot included in a slot list indicated by a provided DL TX power adjustment MAC CE, and the other is configured within a slot not included in the slot list indicated by the provided DL TX power adjustment MAC CE, the terminal may omit or ignore the first CSI report. Through this, CSI reporting with ambiguity related to the operation modes may be omitted. Accordingly, a burden on the terminal for CSI reporting may be reduced, and an uplink load may be reduced.

Method #7: When a CMR and an IMR associated with a certain CSI report use different frequency resources associated with different operation modes, the terminal may omit or ignore the corresponding CSI report. For example, when a CMR and an IMR associated with a first CSI report are included in different IAB frequency resource configurations (or relay station frequency resource configurations), the terminal may omit or ignore the first CSI report. Alternatively, when one of the CMR and IMR associated with the first CSI report is included in an RB set/RB set group included in a frequency-domain H/S/NA configuration, and the other is included in an RB set/RB set group not included in the frequency-domain H/S/NA configuration, the terminal may omit or ignore the first CSI report. Through this, CSI reporting with ambiguity related to the operation modes may be omitted. Accordingly, a burden on the terminal for CSI reporting may be reduced, and an uplink load may be reduced.

Method #8: When a CMR and an IMR associated with a certain CSI report use different time/frequency resources associated with different operation modes, the terminal may perform CSI derivation (or calculation) based on an operation mode of the CMR (e.g., whether DL TX power adjustment is applied or not). That is, the operation mode for the IMR may be overridden with the operation mode for the CMR.

Similarly, when a CMR and an IMR associated with a certain CSI report use different time/frequency resources associated with different operating modes, terminal may perform CSI derivation (or calculation) based on an operation mode of the IMR (e.g., whether DL TX power adjustment is applied or not). That is, the operation mode for the CMR may be overridden with the operation mode for the IMR.

Similarly, when a CMR, IMR, and CSI reference resource associated with a certain CSI report use different time/frequency resources associated with different operation modes, terminal may perform CSI derivation (or calculation) based on an operation mode (e.g., whether DL TX power adjustment is applied or not) of a resource having the highest priority. For example, the operation mode for the IMR/CMR may be overridden with the operation mode for the CSI reference resource. Through this, CSI reporting with ambiguity related to the operation modes may be omitted. Accordingly, a burden on the terminal for CSI reporting may be reduced, and an uplink load may be reduced.

Method #9: When there is an operation mode associated with a certain CSI report, the terminal may consider only frequency resources allocated to (or associated with) the corresponding operation mode when deriving (or calculating) a wideband CQI. For example, when calculating the CQI, the terminal may consider only the frequency resources associated with the corresponding operation mode in determining a TBS. When there are a plurality of frequency resource configurations for a certain operation mode at the same time, an appointment, in which the terminal derives the CSI for frequency resources selected according to a specific selection criterion, may be made. Here, the plurality of frequency resource configurations may include, for example, multiple RB sets, multiple RB set groups, multiple RB sets/multi-RB set groups configured for FDM HIS resource configuration for IAB, and the like. For example, the specific selection criterion may be as follows.

- Frequency resources occupying the narrowest band
- Frequency resources occupying the widest band
- Frequency resources with the smallest TBS
- Frequency resources with the largest TBS

Similarly, when there are a plurality of frequency resource configurations for a certain operation mode at the same time (e.g., multiple RB sets/RB set groups for FDM HIS resource configurations for IAB or enhanced IAB (eIAB)), the base station may configure the terminal to derive (calculate) the CSI based on which frequency resource configuration through separate signaling.

Method #10: When there are a plurality of operation modes at the same time (by configuration or indication of the base station), the terminal may be promised or configured/indicated to report CSI having the lowest (or highest) MCS (or modulation scheme, code rate, efficiency value, etc.) among a plurality of CSIs derived for the plurality of operation modes. In an exemplary embodiment of the communication system, the CSI may include an indicator for an operation mode assumed when deriving the corresponding CSI. Through this, the terminal may resolve ambiguity in CSI derivation (or calculation) and improve the accuracy of CSI reporting.

Method #11: When there is an operation mode associated with a certain CSI report, the terminal may be promised or configured/indicated to exclude a CMR or IMR that is not transmitted in time/frequency resources associated with the corresponding operation mode when calculating CSI. Through this, the terminal may resolve ambiguity in CSI derivation (or calculation) and improve the accuracy of CSI reporting.

In an exemplary embodiment of the communication system, an appointment may be configured so that the terminal applies the same method among Method #1 to Method #11 for CSI-RS groups for multi-TRP. When different methods are configured/indicated, an appointment to unify according to a specific criterion may be established. Alternatively, it may be ensured that only the same method among Method #1 to Method #11 is configured/indicated for CSI-RS groups for multi-TRP. Alternatively, similarly to the above-described scheme, the terminal may be promised or configured/indicated to apply the same or different methods to the different CSI-RS groups.

Methods #1 to #11 may be limited to be applied only when an IMR is configured as a NZP CSI-RS. This may be because, in the case of CSI-IM based IMR, an operation mode applied to an interference signal may be implicitly reflected based on the ZP CSI-RS configuration.

In Method #1 to Method #11, a frequency resource (or time resource) region assumed when generating CSI for CSI reporting associated with a certain operation mode may have one of the following meanings.

- Meaning #1: The resource region may mean resources configured for DU/RU (e.g., IAB-UD) of a node (e.g., IAB node) including a CSI generation entity (e.g., IAB-MT) for the operation mode (e.g., FDM HSNA resources allocated by frequency-domain *IAB-DU-Resource-Configuration-H/S/NA-Config*) or FDM soft resources indicated as 'available' or 'not available' by a DCI format 2_5).

- Meaning #2: The resource region may mean resources excluding a part overlapping with resources configured for DU/RU (e.g., IAB-DU) of a note (e.g., IAB node) including a CSI generation entity (e.g., IAB-MT) among resources (e.g., MT-CC) allocated to the CSI generation entity (e.g., IAB-MT) for the operation mode (e.g., FDM HSNA resources allocated by frequency-domain *IAB-DU-Resource-Configuration-H/S/NA-Config*) or FDM soft resources indicated as 'available' or 'not available' by a DCI format 2_5. Here, a part of the MT-CC that does not overlap (or overlap) with DU FDM resources may be defined as MT FDM resources.
- Meaning #3: The resource region mean resources that a CSI generation entity (e.g., IAM-MT) can utilize in a downlink reception operation (or uplink transmission operation) in the operation mode among resources (e.g., MT-CC) allocated to the CSI generation entity.
- Meaning #4: The resource region may mean resources configured for DU/RU (e.g., IAB-DU of a parent node) of a parent/upper node (e.g., IAB parent node, donor node, CU) of a node including a CSI generation entity for the operation mode (e.g., FDM HSNA resources allocated by frequency-domain *IAB-DU-Resource-Configuration-H/S/NA-Config*) or FDM soft resources indicated as 'available' or 'not available' by a DCI format 2_5).
- Meaning #5: The resource region may mean a resource allocated through separate and independent configuration, indication, or reporting. For example, the resource region may mean a frequency (time) resource region configured or indicated by the base station, upper node, or adj acent node. Alternatively, the region may mean a frequency (time) resource region reported by the terminal (e.g., IAB-MT, repeater-MT) to the base station, upper node, or adjacent node directly (e.g., the terminal explicitly reports the frequency (time) region used/referred by a CSI report associated with the operation mode). Alternatively, the region may mean a frequency (time) resource region reported by the terminal (e.g., IAB-MT, repeater-MT) to the base station, upper node, or adjacent node indirectly through signaling such as DCI, MAC CE, RRC, and F1AP (e.g., when the IAB-MT reports an operation mode of specific frequency (time) resources as one of a TDM (fallback) mode or FDM mode through a MAC CE, the specific frequency (time) resources are specified as IAB-MT frequency (time) resources that can be used for the corresponding mode). Here, when the IAB-MT reports FDM use for specific frequency-time resources to the upper node, only frequency-time resources usable for FDM IAB-MT reception may be considered when reporting CSI for the corresponding frequency-time resources. When the IAB-MT reports TDM use for specific frequency-time resources to the upper node (or when the IAB-MT does not report FDM use for specific frequency-time resources to the upper node), only frequency-time resources usable for TDM IAB-MT reception may be considered when reporting CSI for the corresponding frequency-time resources.

The terminal (or IAB-MT, repeater-MT, etc.) may determine a TB size (TBS) based on a frequency resource (or time resource) region according to one of the definitions when generating CSI for CSI reporting associated with a certain operation mode. For example, when generating wideband CSI for CSI reporting associated with a certain operation mode, CSI (e.g., CRI, RI, LI, PMI, CQI, etc.) representing only a frequency resource (or time resource region) according to one of the definitions (i.e., not the entire band in which PDSCH transmission is possible within a CC or BWP represented by the CSI report) may need to be generated. As another example, when generating subband CSI for CSI reporting associated with a certain operation mode, CSI (CRI, RI, LI, PMI, CQI, etc.) representing only a frequency resource (or time resource) region according to one of the definitions may need to be generated and reported, and CSI for frequency resource (or time resource) regions other than the frequency resource (time resource) region may not need to be reported (i.e., omitted) or may be reported as meaningless (garbage) values.

An exemplary embodiment of the communication system may support the following configurations.

- The terminal (or IAB-MT) may calculate the number of REs available in the CSI reference resource based on a bandwidth configured for the corresponding CQI reporting. It may be noted that the accuracy of CSI reports for various multiplexing modes may be affected not only by DL TX power adjustment, but also by the validity of the configured bandwidth for the corresponding CQI reports.
- FIG. 22 illustrates examples of valid frequency resources for deriving CSI according to various multiplexing modes. Referring to FIG. 22, it can be seen that for a CSI reference resource using a TDM multiplexing mode 22-00, a configured bandwidth for the corresponding CQI report does not cause ambiguity (e.g., the configured bandwidth may be applied to both wideband CSI and ultra-band CSI). On the other hand, since the bandwidth configured for the corresponding CQI report may be wider than an IAB-MT receive bandwidth using a FDM multiplexing mode 22-10, a TBS derived by the bandwidth configured for the corresponding CQI report and a TBS derived by actually available IAB-MT resources for the FDM multiplexing mode may not match. In practice, these two different TBS values may be quite different, and therefore the derived CQI indices may also be different. In the case of the FDM multiplexing mode, the following two types of IAB-DU resources may not be used for IAB-MT operations.

　> IAB-DU resources configured as FDM H
　> IAB-DU resources configured as FDM S and indicated as 'available'

For the same or similar application to those disclosed in Tables 14 and 15 (or to support accurate CSI feedback for non-TDM multiplexing modes), when the IAB node operates according to the FDM multiplexing mode in the CSI reference resource, it may need to be clarified that the IAB-MT should not consider frequency resources, which are configured as FDM H or configured as FDM S and indicated as available, for the IAB-DU.

In an exemplary embodiment of the communication system, the definition of the CSI reference resource may be as follows. When configured to report a CQI index, in order to derive the CQI index from the CSI reference resource or to derive a PMI and an RI, the terminal may assume the followings.

- The first two OFDM symbols may be occupied by control signals.
- The number of symbols for a PDSCH and a DM-RS may be 12.
- The same bandwidth partial subcarrier spacing as that for PDSCH reception is configured
- A bandwidth configured for the corresponding CQI report.

> The IAB-MT may consider only frequency resources available for the multiplexing mode applied to the CSI reference resource.
> When the FDM multiplexing mode is applied to the CSI reference resource, the IAB-MT may consider only frequency resources that do not overlap with FDM H or FDM S indicated as available in the IAB-DU.

- The reference resource may use a CP length and a subcarrier spacing configured for PDSCH reception.
- There are no resource elements used for a primary or secondary synchronization signal or a PBCH.
- Redundancy version 0

> In addition, the IAB-MT may need to consider provided DL TX power adjustment when indicated.

- It may be assumed that there are no REs allocated to a NZP CSI-RS and a ZP CSI-RS.

The terminal (IAB-MT or repeater-MT) may perform UE (IAB-MT or repeater-MT) capability reporting indicating one of Method #1 to Method #11, which includes candidate value(s) (e.g., N symbols, slots, RBs, RB sets, RB set groups, etc.) of an interval between time/frequency resources.

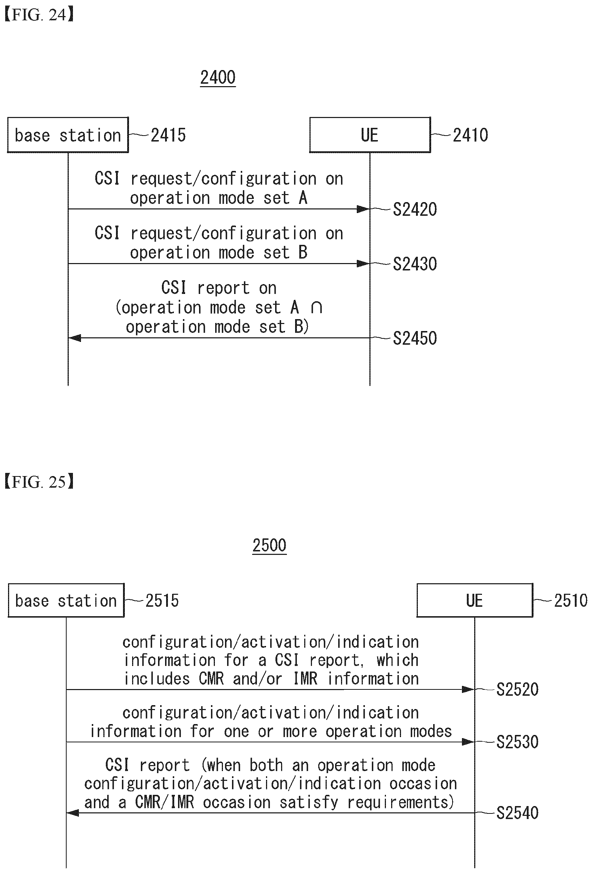

FIG. 24 is a sequence chart for describing a first exemplary embodiment of a method for transmitting and receiving CSI.

Referring to FIG. 24, communication devices in the communication system may perform CSI transmission/reception operations. The communication devices may include a base station (or first communication device) and a terminal (or second communication device). The base station may assign one or more operation modes to the terminal for a certain resource (or within a certain resource period). The terminal may perform CSI reporting (or CSI transmission) to the base station based on the allocated resource and the one or more operation modes. The base station may receive CSI from the terminal. Hereinafter, in describing the first exemplary embodiment of the method for transmitting and receiving CSI with reference to FIG. 24, contents overlapping with those described with reference to FIGS. 1 to 23 may be omitted.

In a communication system 2400, a base station 2415 may request a CSI report on an operation mode set A from a terminal 2410 (S2420). Here, the operation mode set A may consist of one or more operation modes. The base station 2415 may perform report configuration, resource configuration, and the like for the CSI reporting on the operation mode set A to the terminal 2410. The base station 2415 may request the terminal 2410 to report CSI based on the report configuration, resource configuration, and the like on the operation mode set A.

The base station 2415 may perform resource allocation on an operation mode set B to the terminal 2410 and may notify the terminal 2410 of this (S2430). Here, the operation mode set B may consist of one or more operation modes. The operation mode set B may be the same as or different from the operation mode set A. The one or more operation modes constituting the operation mode set B and the one or more operation modes constituting the operation mode set A may partially overlap. The base station 2415 may allocate specific resources on the operation mode set B to the terminal 2410. The base station 2415 may notify the terminal 2410 of resource allocation information on the operation mode set B. For example, the base station 2415 may configure, activate, or indicate resource allocation on the operation mode set B for the terminal 2410.

The terminal 2410 may perform CSI reporting to the base station 2415 based on results of the steps S2420 and S2430. Specifically, for a certain CSI reference resource, the terminal 2410 may derive (or calculate) only CSI corresponding to one or more operation modes belonging to an intersection of the operation mode set A and the operation mode set B, and report it to the base station 2415 (S2440). Through this, the CSI derivation (or calculation) burden of the terminal 2410 may be reduced. In addition, uplink resource occupancy for CSI reporting from the base station 2015 or network perspective may be minimized.

FIG. 25 is a sequence chart for describing a second exemplary embodiment of a method for transmitting and receiving CSI.

Referring to FIG. 25, communication devices in the communication system may perform CSI transmission/reception operations. The communication devices may include a base station (or first communication device) and a terminal (or second communication device). The base station may assign one or more operation modes to the terminal for a certain resource (or within a certain resource period). The terminal may perform CSI reporting (or CSI transmission) to the base station based on the allocated resource and the one or more operation modes. The base station may receive CSI from the terminal. Hereinafter, in describing the second exemplary embodiment of the method for transmitting and receiving CSI with reference to FIG. 25, contents overlapping with those described with reference to FIGS. 1 to 24 may be omitted.

In a communication system 2500, a base station 2515 may transmit configuration information for CSI reporting to a terminal 2510 (S2520). The configuration information transmitted from the base station 2515 to the terminal 2510 in the step S2520 may include CMR configuration information and/or IMR configuration information. In the step S2520, the base station 2515 may additionally transmit activation information and/or indication information for CSI (or CSI reporting) to the terminal 2510.

The base station 2515 may perform resource allocation on one or more operation modes to the terminal 2510 (S2530). In the step S2530, the base station 2515 may transmit configuration information, activation information, and/or indication information for one or more operation modes for a specific resource to the terminal 2510.

When both the a signaling occasion of configuring, activating, or indicating the operation mode and an occasion of a CMR or IMR satisfy the conditions of Methods #1 to #11 described above, the terminal 2510 may perform the corresponding CSI report, and otherwise, the terminal 2510 may omit the corresponding CSI report (S2540). Through this, the CSI derivation (or calculation) burden of the terminal 2510 may be reduced. In addition, uplink resource occupancy for CSI reporting from the base station 2520 or network perspective may be minimized.

**[Second exemplary embodiment of communication system]**

In the second exemplary embodiment of the communication system, methods for determining CPU occupancy considering the operation mode are proposed. More specifically, in the second exemplary embodiment of the communication system, methods for determining (or calculating) the number of CPUs that a CSI reporting operation occupies when a CSI report configuration for a second communication device to perform CSI reporting to a first communication device is associated with a plurality of operation modes are proposed. Here, the first communication device may refer to a base station, CU, upper node, or the like. The second communication device may refer to a terminal, IAB-MT, lower node, or the like.

Hereinafter, the second exemplary embodiment of the communication system will be described by taking an exemplary embodiment in which the first communication device is a base station and the second communication device is a terminal as an example. However, this is only an example for convenience of description, and the second exemplary embodiment of the communication system is not limited thereto. Contents described for the base station in the second exemplary embodiment of the communication system may be equally or similarly applied to the first communication device. Contents described for the terminal in the second exemplary embodiment of the communication system may be equally or similarly applied to the second communication device.

In the second exemplary embodiment of the communication system, a CSI report configuration for performing CSI reporting by the terminal to the base station may be associated with M operation modes. Here, M may be a natural number greater than 1. The terminal may perform CSI reporting in N operation modes among the M operation modes. Here, N may be a natural number greater than 1 and less than or equal to M. In this case, an appointment may be established so that a CSI report of the terminal occupies ($O_{CPU}$=N) CPUs.

In an exemplary embodiment of the communication system, a certain CSI report configuration (e.g., *CSI-ReportConfig*) may be associated with M (>1) operation modes (e.g., IAB-DU/IAB-MT simultaneous operation mode, multiplexing mode, duplex mode, etc.) or a specific frequency/time resource configuration (e.g., FDM HSNA resource configuration or resource configurations for subband non-overlapping full duplex), and the like. Among them, when the terminal performs CSI reporting for (M>N>1) operation modes, an appointment may be established so that a CSI report occupies ($O_{CPU}$=N) CPUs.

On the other hand, when the terminal performs CSI reporting considering a plurality of operation modes, the terminal may configured (or instruct) the terminal to initialize previously-occupied CPUs in consideration of the complexity of the terminal through separate higher layer signaling (e.g., F1AP, RRC, MAC CE, etc.) or L1 signaling (e.g., DCI, etc.). For example, the base station may configure (or instruct) the terminal to make a CPU occupancy for previously-derived (or calculated) CSI to 0 other than newly-derived (or calculated) CSI at a specific time point.

**[Third exemplary embodiment of communication system]**

In the third exemplary embodiment of the communication system, methods for CSI reference resource/valid DL slot determination considering the operation mode are proposed. Here, a first communication device may refer to a base station, CU, upper node, or the like. A second communication device may refer to a terminal, IAB-MT, lower node, or the like.

Hereinafter, the third exemplary embodiment of the communication system will be described by taking an exemplary embodiment in which the first communication device is a base station and the second communication device is a terminal as an example. However, this is only an example for convenience of description, and the third exemplary embodiment of the communication system is not limited thereto. Contents described for the base station in the third exemplary embodiment of the communication system may be equally or similarly applied to the first communication device. Contents described for the terminal in the third exemplary embodiment of the communication system may be equally or similarly applied to the second communication device.

In an exemplary embodiment, the terminal may be guaranteed to derive (calculate) CSI for an operation mode after receiving at least one CMR or IMR for each operation mode. For example, the terminal may be guaranteed to receive at least one CMR/IMR and perform CSI reporting associated therewith after applying a specific operation mode (e.g., after applying a provided DL TX power adjustment MAC CE or after receiving a provided DL TX power adjustment MAC CE). The terminal may omit a CSI report that does not satisfy the condition. As another example, the terminal may be guaranteed to receive at least one CMR/IMR and perform CSI reporting associated therewith before a specific time from a CSI reference resource for CSI reporting of a specific operation mode (e.g., before n slots from a CSI reference resource to which a provided DL TX power adjustment MAC CE is applied). The terminal may omit a CSI report that does not satisfy the condition.

In an exemplary embodiment, the terminal may be guaranteed not to consider a separate operation mode (in a DRX period) when DRX is configured. For example, the terminal may be guaranteed not to perform CSI reporting considering a provided DL TX power adjustment MAC CE in a DRX period.

In an exemplary embodiment, when an operation mode applied to a CSI reference resource and an operation mode associated with a corresponding CSI report configuration are different, the terminal may be promised not to consider the corresponding slot as a valid slot. For example, when an IAB-DU/-MT simultaneous operation mode (or multiplexing mode, i.e., TDM/FDM/SDM) applied to a certain slot is different from a simultaneous operation mode (or multiplexing mode, i.e., TDM/FDM/SDM) associated with a CSI report configuration, the terminal (e.g., IAB-MT) may not consider the corresponding slot as a valid slot.

All of 1) frequency resources allocated to a PDSCH, 2) frequency resources configured as a CSI reporting band (e.g., wideband CSI, subband CSI), and 3) frequency resources allocated to a specific operation mode (e.g., Rel-17 frequency-domain HSNA configuration for RB sets or RB set groups, or frequency resource configuration for XDD or FD) may have different values.

> The base station may configure which criterion the terminal is to derive the CSI based on. In this case, 2) the frequency resources configured as a CSI reporting candidate band may be represented with a list of one or more RB sets or RB set groups, and the base station may configure/select one or more RB sets or RB set groups among them, so that the terminal derives actual CSI for the configured/selected RB set(s) or RB set group(s).
> Various frequency resource configurations/allocations may have different priorities, and when deriving certain CSI, the terminal may derive CSI for a frequency resource with the highest priority at a given time point (e.g. based on a slot of the CSI reference resource). For example, the assumption 2) may have a higher priority than the assumption 3) with respect to a resource through which cell-specific information such as SIB is transmitted. As another example, when an operation mode indicator (e.g., DCI format 2_5 or provided DL Tx power adjustment MAC CE) indicates a specific operation mode (e.g., indicates an AI for a Rel-17 frequency-domain soft resource as 'available' and indicates a specific PDSCH EPRE adjustment value (non-zero) for the corresponding resource), the assumption 3) may have a higher priority than the assumption 2).

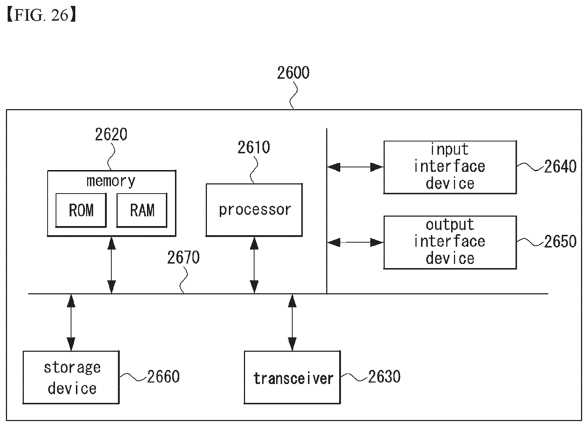

FIG. 26 is a conceptual diagram for describing an exemplary embodiment of a communication node in a communication system.

Referring to FIG. 26, a communication node 2600 may comprise at least one processor 2610, a memory 2620, and a transceiver 2630 connected to the network for performing communications. Also, the communication node 2600 may further comprise an input interface device 2640, an output interface device 2650, a storage device 2660, and the like. The respective components included in the communication node 2600 may communicate with each other as connected through a bus 2670.

However, each component included in the communication node 2600 may be connected to the processor 2610 via an individual interface or a separate bus, rather than the common bus 2670. For example, the processor 2610 may be connected to at least one of the memory 2620, the transceiver 2630, the input interface device 2640, the output interface device 2650, and the storage device 2660 via a dedicated interface.

The processor 2610 may execute a program stored in at least one of the memory 2620 and the storage device 2660. The processor 2610 may refer to a central processing unit (CPU), a graphics processing unit (GPU), or a dedicated processor on which methods in accordance with exemplary embodiments of the present invention are performed. Each of the memory 2620 and the storage device 2660 may be constituted by at least one of a volatile storage medium and a non-volatile storage medium. For example, the memory 2620 may comprise at least one of read-only memory (ROM) and random access memory (RAM).

The communication node 2600 may correspond to one of the communication nodes constituting exemplary embodiments of the communication system described with reference to FIGS. 1 to 25. In an exemplary embodiment of the communication system, the communication node 2600 may correspond to an IAB node. On the other hand, in an exemplary embodiment of the communication system, the communication node 2600 may correspond to an IAB-DU or an IAB-MT constituting an IAB node. The communication node 2600 may correspond to a gNB-CU or a gNB-DU. In an exemplary embodiment of the communication system, the communication node 2600 may perform operations identical or similar to those of the IAB node, IAB-MT, IAB-DU, upper node of the IAB node, lower node of the IAB node, gNB-CU, or gNB-DU described with reference to at least one of FIGS. 13 to 25.

The processor 2610 of the communication node 2600 may perform operations for communication with other communication nodes such as an upper node or a lower node. The processor 2610 of the communication node 2600 may cause the communication node 2600 to perform communication based on the operations of the first communication device (e.g., base station), the second communication device, and the like described with reference to one of the first to third exemplary embodiments of the communication system.

Configurations described with reference to at least one of FIGS. 1 to 26 in the present disclosure may be implemented by a predetermined device. For example, the communication node 2600 described with reference to FIG. 26 may be referred to as a device (e.g., first device, second device, etc.). The operations of the communication nodes described with reference to FIGS. 13 to 26 may be performed by the first device, the second device, or the like. When the first device corresponds to an IAB node, the first device may include a first transceiver and a second transceiver. Here, the first transceiver and the second transceiver may respectively correspond to an IAB-MT and an IAB-DU.

According to an exemplary embodiment of operation methods of the first device and the second device, an operation method of the first device may comprise: receiving, from a second device, a first report configuration for configuring to perform reporting of first CSI; receiving, from the second device, a first MAC CE for configuring one or more multiplexing modes to the first device in at least a first time resource; generating the first CSI based on the first report configuration and the first MAC CE; and transmitting the first CSI to the second device, wherein the first time resource may constitute first CSI reference resource(s) configured by the first report configuration.

The first MAC CE may indicate the one or more multiplexing modes configured to the first device among a plurality of multiplexing modes configured based on a first signaling received before receiving the first MAC CE.

The one or more multiplexing modes configured by the first MAC CE may be a first multiplexing mode, and the generating of the first CSI may comprise: determining a first channel quality indicator (CQI) index in consideration of the first multiplexing mode configured by the first MAC CE; and generating the first CSI including the first CQI index.

The one or more multiplexing modes configured by the first MAC CE may include at least N multiplexing modes, and the generating of the first CSI may comprise: determining at least one CQI index in consideration of at least one multiplexing mode among the N multiplexing modes; and generating the first CSI including the determined at least one CQI index, wherein N is a natural number.

The first MAC CE may indicate the N multiplexing modes configured to the first device among a plurality of multiplexing modes configured based on a first signaling received before receiving the first MAC CE, and may further indicate information on a first criterion for determining the at least one multiplexing mode among the N multiplexing modes.

The first MAC CE may be received before a first time interval from the first CSI reference resource(s) in time domain.

The first CSI may include information indicating at least one multiplexing mode considered in generating the first CSI among the one or more multiplexing modes.

The first MAC CE may indicate a first frequency resource to which the one or more multiplexing modes are applied, and the generating of the first CSI may comprise: generating the first CSI in consideration of the one or more multiplexing modes based on a resource overlapping with the first frequency resource among the first CSI reference resource(s).

The first MAC CE may indicate a first frequency resource to which the one or more multiplexing modes are applied, and the generating of the first CSI may comprise: generating the first CSI in consideration of the one or more multiplexing modes based on a resource overlapping with the first frequency resource and a resource non-overlapping with the first frequency resource among the first CSI reference resource(s).

The first device may include a first transceiver for communication with an upper node of the first device and a second transceiver for communication with a lower node of the first device, and the generating of the first CSI may comprise: generating the first CSI using a resource non-overlapping with a resource allocated to the second transceiver among the first CSI reference resource(s).

The first report configuration may include DL power control configuration information for the first CSI reference resource(s), and the generating of the first CSI may comprise: generating the first CSI based on the DL power control configuration information for the first CSI reference resource(s), when a time division multiplexing (TDM) mode is assigned to the first CSI reference resource(s).

The first MAC CE may include DL transmit (Tx) power adjustment configuration information for a resource corresponding at least to the first time resource, and the generating of the first CSI may comprise: generating the first CSI based on the DL transmit power adjustment configuration information for the resource corresponding at least to the first time resource, when a frequency division multiplexing (FDM) mode is assigned to the first CSI reference resource(s).

The operation method of the first device may further comprise: receiving, from the second device, a second report configuration for configuring to perform reporting of second CSI; receiving, from the second device, a second MAC CE for configuring at least one multiplexing mode to the first device in a second time resource constituting second CSI reference resource(s) configured by at least the second report configuration; comparing multiplexing modes configured for at least one channel measurement resource (CMR) and/or at least one interference measurement resource (IMR) configured by the second report configuration, based on the second report configuration and the second MAC CE; and determining not to perform reporting of the second CSI, when different multiplexing modes are configured for the at least one CMR and/or the at least one IMR.

The operation method of the first device may further comprise: receiving, from the second device, a second report configuration for configuring to perform reporting of second CSI; receiving, from the second device, a second MAC CE for configuring at least one multiplexing mode to the first device in a second time resource constituting second CSI reference resource(s) configured by at least the second report configuration; comparing multiplexing modes configured for at least one CMR and/or at least one IMR configured by the second report configuration, based on the second report configuration and the second MAC CE; generating the second CSI based on the at least one CMR and the at least one IMR in consideration of a multiplexing mode configured for one of the at least one CMR and/or the at least one IMR, when different multiplexing modes are configured for the at least one CMR and/or the at least one IMR; and transmitting the second CSI to the second device.

An operation method of the second device may comprise: transmitting, to the first device, a first report configuration for configuring to perform reporting of first channel state information (CSI); transmitting, to the first device, a first medium access control (MAC) control element (CE) for configuring one or more multiplexing modes to the second device in at least a first time resource; and receiving, from the first device, the first CSI generated based on the first report configuration and the first MAC CE, wherein the first time resource may constitute first CSI reference resource(s) configured by the first report configuration.

The one or more multiplexing modes configured by the first MAC CE may be a first multiplexing mode, and the first CSI may include a first channel quality indicator (CQI) index determined in consideration of the first multiplexing mode configured by the first MAC CE.

The one or more multiplexing modes configured by the first MAC CE may include at least N multiplexing modes, and the first CSI may include at least one CQI index determined in consideration of at least one multiplexing mode among the N multiplexing modes, N being a natural number.

The first MAC CE may indicate the N multiplexing modes configured to the first device among a plurality of multiplexing modes configured based on a first signaling received before receiving the first MAC CE, and may further indicate information on a first criterion for determining the at least one multiplexing mode among the N multiplexing modes.

The first device may include a first transceiver for communication with an upper node of the first device and a second transceiver for communication with a lower node of the first device, and the first CSI may be generated using a resource non-overlapping with a resource allocated to the second transceiver among the first CSI reference resource(s).

The first MAC CE may include downlink (DL) transmit (Tx) power adjustment configuration information for a resource corresponding at least to the first time resource, and the first CSI may be generated based on the DL transmit power adjustment configuration information for the resource corresponding at least to the first time resource, when a frequency division multiplexing (FDM) mode is assigned to the first CSI reference resource(s).

According to another exemplary embodiment of operation methods of the first device and the second device, an operation method of the first device may comprise: receiving, from a second device, a first signaling for configuring to perform reporting of first CSI derived from a first resource; receiving, from the second device, a second signaling for configuring one or more multiplexing modes for a second resource overlapping at least partially with the first resource; determining the first CSI in consideration of at least one multiplexing mode among the one or more multiplexing modes based on the first signaling and the second signaling; and transmitting the determined first CSI to the second device.

The one or more multiplexing modes configured by the second signaling may be a first multiplexing mode, and the determining of the first CSI may comprise: determining the first CSI in consideration of the first multiplexing mode configured by the second signaling.

The one or more multiplexing operation modes configured by the second signaling may include at least N multiplexing operation modes, and the determining of the first CSI may comprise: selecting a second multiplexing operation mode among the N multiplexing operation modes by comparing priorities of the N multiplexing modes configured by the second signaling; and determining the first CSI in consideration of the selected second multiplexing mode, N being a natural number.

The one or more multiplexing operation modes configured by the second signaling may include at least N multiplexing operation modes, and the determining of the first CSI may comprise: determining N CSI values in consideration of the respective N multiplexing modes configured by the second signaling; and determining the first CSI including the N CSI values, N being a natural number.

The one or more multiplexing operation modes configured by the second signaling may include at least N multiplexing operation modes, and the determining of the first CSI may comprise: determining N CSI values in consideration of the respective N multiplexing modes configured by the second signaling; selecting a first value among the N CSI values by comparing priorities of the determined N CSI values; and determining the first CSI including the selected first value, N being a natural number.

The one or more multiplexing operation modes configured by the second signaling may include at least N multiplexing operation modes, and the determining of the first CSI may comprise: selecting M multiplexing modes among the N multiplexing modes by comparing priorities of the N multiplexing modes configured by the second signaling; determining M CSI values in consideration of the respective selected M multiplexing modes; and determining the first CSI including the M CSI values, wherein M and N are natural numbers, and M is less than N.

The one or more multiplexing operation modes configured by the second signaling may include at least two multiplexing operation modes, and the determining of the first CSI may comprise: determining two CSI values in consideration of the respective two multiplexing modes configured by the second signaling; and determining the first CSI based on a difference between the determined two CSI values.

The second signaling may be received at a time point ahead of the first resource by a first time interval or more in the time domain.

The first CSI may include information indicating at least one multiplexing operation mode considered in determining the first CSI.

The first and second resources may overlap at least in part in the time domain and the frequency domain, and the determining of the first CSI may comprise: determining the first CSI derived from a third resource in which the first and second resources overlap in consideration of the one or more multiplexing modes configured by the second signaling.

An operation method of the first device may comprise: receiving, from the second device, a third signaling for configuring to perform reporting of second CSI based on a sixth resource including a fourth resource and a fifth resource that are different from each other; receiving, from the second device, a fourth signaling for configuring one or more multiplexing modes for a seventh resource overlapping at least in part with the fourth resource and the fifth resource; and determining not to perform reporting of the second CSI when different multiplexing modes are configured for the fourth resource and the fifth resource.

An operation method of the first device may comprise: receiving, from the second device, a third signaling for configuring to perform reporting of second CSI based on a sixth resource including a fourth resource and a fifth resource that are different from each other; receiving, from the second device, a fourth signaling for configuring one or more multiplexing modes for a seventh resource overlapping at least partially with the fourth resource and the fifth resource; when a fourth multiplexing mode configured for the fourth resource is different from a fifth multiplexing mode configured for the fifth resource, determining the second CSI by considering the fourth multiplexing mode commonly for the fourth resource and the fifth resource; and transmitting the determined second CSI to the second device.

An operation method of the second device may comprise: transmitting, to the first device, a first signaling for configuring to perform reporting of first CSI derived from a first resource; transmitting, to the first device, a second signaling for configuring one or more multiplexing modes for a second resource overlapping at least partially with the first resource; and receiving, from the first device, the first CSI determined based on the first signaling and the second signaling, wherein the first CSI is determined by the first device in consideration of at least one multiplexing mode among the one or more multiplexing modes.

The one or more multiplexing operation modes configured by the second signaling may be a first multiplexing operation mode, and the first CSI may be determined by the first device in consideration of a first multiplexing operation mode configured by the second signaling.

The one or more multiplexing operation modes configured by the second signaling may include at least N multiplexing operation modes, and the first CSI may be determined by the first device in consideration of a second multiplexing mode selected among the N multiplexing modes by comparing priorities of the N multiplexing modes configured by the second signaling, N being a natural number.

The one or more multiplexing operation modes configured by the second signaling may include at least N multiplexing operation modes, and the first CSI may include N CSI values determined by considering the respective N multiplexing operation modes configured by the second signaling, N being a natural number.

The one or more multiplexing operation modes configured by the second signaling may include at least N multiplexing operation modes, and the first CSI may include M CSI values determined by considering M multiplexing modes selected among the N multiplexing modes through comparison of priorities of the N multiplexing modes configured by the second signaling, wherein M and N are natural numbers, and M may be less than N.

The one or more multiplexing operation modes configured by the second signaling may include at least two multiplexing operation modes, and the first CSI may be determined based on a difference between two CSI values determined by considering the respective two multiplexing modes configured by the second signaling.

The first and second resources may overlap at least in part in the time domain and the frequency domain, and the first CSI may be derived by the first device from a third resource in which the first and second resources overlap in consideration of the one or more multiplexing modes configured by the second signaling.

An operation method of the second device may comprise: transmitting, to the first device, a third signaling for configuring to perform reporting of second CSI based on a sixth resource including a fourth resource and a fifth resource that are different from each other; transmitting, to the first device, a fourth signaling for configuring one or more multiplexing modes for a seventh resource overlapping at least in part with the fourth resource and the fifth resource; receiving, from the first device, the second CSI determined based on the third signaling and the fourth signaling, wherein when a fourth multiplexing mode configured for the fourth resource is different from a fifth multiplexing mode configured for the fifth resource, the second CSI may be determined by the first device in consideration of the fourth multiplexing mode commonly for the fourth resource and the fifth resource.

According to an exemplary embodiment of a method and apparatus for transmitting and receiving channel state information in a communication system, the communication system can support channel state information (CSI) measurement and/or reporting schemes for efficiently supporting dynamically changing transmission modes. In the communication system, communication devices may perform actions such as determining validity of a certain CSI report, determining a priority of the CSI report, or determining radio resources and/or computational resources required for the CSI report, based on references to a transmission mode change time, channel measurement time, interference measurement time, and/or the like. Based on the determinations made regarding the CSI reporting as described above, the CSI transmission and reception operations in the communication system can be performed efficiently.

However, the effects that can be achieved by the exemplary embodiments of the method and apparatus for transmitting and receiving channel state information in the communication system are not limited to those mentioned above, and other effects not mentioned may be clearly understood by those of ordinary skill in the art to which the present disclosure belongs from the configurations described in the present disclosure.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. An operation method of a first device, comprising:

   receiving, from a second device, a first report configuration for configuring to perform reporting of first channel state information (CSI);
   receiving, from the second device, a first medium access control (MAC) control element (CE) for configuring one or more multiplexing modes to the first device in at least a first time resource;
   generating the first CSI based on the first report configuration and the first MAC CE; and
   transmitting the first CSI to the second device,
   wherein the first time resource constitutes first CSI reference resource(s) configured by the first report configuration.

2. The operation method according to claim 1, wherein the first MAC CE indicates the one or more multiplexing modes configured to the first device among a plurality of multiplexing modes configured based on a first signaling received before receiving the first MAC CE.

3. The operation method according to claim 1, wherein the one or more multiplexing modes configured by the first MAC CE are a first multiplexing mode, and the generating of the first CSI comprises:

   determining a first channel quality indicator (CQI) index in consideration of the first multiplexing mode configured by the first MAC CE; and
   generating the first CSI including the first CQI index.

4. The operation method according to claim 1, wherein the one or more multiplexing modes configured by the first MAC CE include at least N multiplexing modes, and the generating of the first CSI comprises:

   determining at least one CQI index in consideration of at least one multiplexing mode among the N multiplexing modes; and
   generating the first CSI including the determined at least one CQI index,
   wherein N is a natural number.

5. The operation method according to claim 4, wherein the first MAC CE indicates the N multiplexing modes configured to the first device among a plurality of multiplexing modes configured based on a first signaling received before receiving the first MAC CE, and further indicates information on a first criterion for determining the at least one multiplexing mode among the N multiplexing modes.

6. The operation method according to claim 1, wherein the first MAC CE is received before a first time interval from the first CSI reference resource(s) in time domain.

7. The operation method according to claim 1, wherein the first CSI includes information indicating at least one multiplexing mode considered in generating the first CSI among the one or more multiplexing modes.

8. The operation method according to claim 1, wherein the first MAC CE indicates a first frequency resource to which the one or more multiplexing modes are applied, and the generating of the first CSI comprises: generating the first CSI in consideration of the one or more multiplexing modes based on a resource overlapping with the first frequency resource among the first CSI reference resource(s).

9. The operation method according to claim 1, wherein the first MAC CE indicates a first frequency resource to which the one or more multiplexing modes are applied, and the generating of the first CSI comprises: generating the first CSI in consideration of the one or more multiplexing modes based on a resource overlapping with the first frequency resource and a resource non-overlapping with the first frequency resource among the first CSI reference resource(s).

10. The operation method according to claim 1, wherein the first device includes a first transceiver for communication with an upper node of the first device and a second transceiver for communication with a lower node of the first device, and the generating of the first CSI comprises: generating the first CSI using a resource non-overlapping with a resource allocated to the second transceiver among the first CSI reference resource(s).

11. The operation method according to claim 1, wherein the first report configuration includes downlink (DL) power control configuration information for the first CSI reference resource(s), and the generating of the first CSI comprises: generating the first CSI based on the DL power control configuration information for the first CSI reference resource(s), when a time division multiplexing (TDM) mode is assigned to the first CSI reference resource(s).

12. The operation method according to claim 1, wherein the first MAC CE includes DL transmit (Tx) power adjustment configuration information for a resource corresponding at least to the first time resource, and the generating of the first CSI comprises: generating the first CSI based on the DL transmit power adjustment configuration information for the resource corresponding at least to the first time resource, when a frequency division multiplexing (FDM) mode is assigned to the first CSI reference resource(s).

13. The operation method according to claim 1, further comprising:

    receiving, from the second device, a second report configuration for configuring to perform reporting of second CSI;
    receiving, from the second device, a second MAC CE for configuring at least one multiplexing mode to the first device in a second time resource constituting second CSI reference resource(s) configured by at least the second report configuration;
    comparing multiplexing modes configured for at least one channel measurement resource (CMR) and/or at least one interference measurement resource (IMR) configured by the second report configuration, based on the second report configuration and the second MAC CE; and
    determining not to perform reporting of the second CSI, when different multiplexing modes are configured for the at least one CMR and/or the at least one IMR.

14. The operation method according to claim 1, further comprising:

    receiving, from the second device, a second report configuration for configuring to perform reporting of second CSI;
    receiving, from the second device, a second MAC CE for configuring at least one multiplexing mode to the first device in a second time resource constituting second CSI reference resource(s) configured by at least the second report configuration;
    comparing multiplexing modes configured for at least one CMR and/or at least one IMR configured by the second report configuration, based on the second report configuration and the second MAC CE;
    generating the second CSI based on the at least one CMR and the at least one IMR in consideration of a multiplexing mode configured for one of the at least one CMR and/or the at least one IMR, when different multiplexing modes are configured for the at least one CMR and/or the at least one IMR; and
    transmitting the second CSI to the second device.

15. An operation method of a first device, comprising:

    transmitting, to a second device, a first report configuration for configuring to perform reporting of first channel state information (CSI);
    transmitting, to the second device, a first medium access control (MAC) control element (CE) for configuring one or more multiplexing modes to the first device in at least a first time resource; and
    receiving, from the second device, the first CSI generated based on the first report configuration and the first MAC CE,
    wherein the first time resource constitutes first CSI reference resource(s) configured by the first report configuration.

16. The operation method according to claim 15, wherein the one or more multiplexing modes configured by the first MAC CE are a first multiplexing mode, and the first CSI includes a first channel quality indicator (CQI) index determined in consideration of the first multiplexing mode configured by the first MAC CE.

17. The operation method according to claim 15, wherein the one or more multiplexing modes configured by the first MAC CE include at least N multiplexing modes, and the first CSI includes at least one CQI index determined in consideration of at least one multiplexing mode among the N multiplexing modes, N being a natural number.

18. The operation method according to claim 17, wherein the first MAC CE indicates the N multiplexing modes configured to the first device among a plurality of multiplexing modes configured based on a first signaling received before receiving the first MAC CE, and further indicates information on a first criterion for determining the at least one multiplexing mode among the N multiplexing modes.

19. The operation method according to claim 15, wherein the second device includes a first transceiver for communication with an upper node of the second device and a second transceiver for communication with a lower node of the second device, and the first CSI is generated using a resource non-overlapping with a resource allocated to the second transceiver among the first CSI reference resource(s).

20. The operation method according to claim 15, wherein the first MAC CE includes downlink (DL) transmit (Tx) power adjustment configuration information for a resource corresponding at least to the first time resource, and the first CSI is generated based on the DL transmit power adjustment configuration information for the resource corresponding at least to the first time resource, when a frequency division multiplexing (FDM) mode is assigned to the first CSI reference resource(s).

【FIG. 1】

100

L3     radio resource control (RRC) layer ~110

logical channel ~115

L2     medium access control (MAC) layer ~120

transport channel ~125

L1     physical (PHY) layer ~130

control/measurement

150

【FIG. 2】

200

frame ~230

slot ~210

#0 $\cdots$ #($N_{slot}^{subframe, \mu}-1$) $\cdots$ #($N_{slot}^{frame, \mu}-1$)

~220

subframe

【FIG. 3】

downlink frame #i —300

uplink frame #i —310

—320

$T_{TA}$

【FIG. 4】

【FIG. 5】

【FIG. 6】

600

615

610

UE

gNB

S620

Msg1 : preamble

S630

Msg2 : RACH response

S640

Msg3: PUSCH

S650

Msg4: contention resolution

S660

HARQ ACK

【FIG. 7】

frequency

RO #0    RO #1    RO #2    RO #(N-1)

SSB #0    SSB #1    SSB #2    · · ·    SSB #(N-1)

time

【FIG. 8】

【FIG. 9】

[FIG. 10]

EP 4 498 614 A1

| CORESET pool ID | serving cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| $T_{(N-2)x8+7}$ | $T_{(N-2)x8+6}$ | $T_{(N-2)x8+5}$ | $T_{(N-2)x8+4}$ | $T_{(N-2)x8+3}$ | $T_{(N-2)x8+2}$ | $T_{(N-2)x8+1}$ | $T_{(N-2)x8}$ | Oct N |

【FIG. 11】

| serving cell ID | CORESET ID | Oct 1 |
|---|---|---|
| CORESET ID | TCI state ID | Oct 2 |

【FIG. 12】

| | | |
|---|---|---|
| 1215 | DL symbol | DL-dedicated slot(1200) |
| 1220 | UL symbol | UL-dedicated slot(1205) |

| DL symbol | guard period | UL symbol | mixed slot(1210) |
|---|---|---|---|
| 1225 | 1230 | 1235 | |

【FIG. 13】

【FIG. 14】

【FIG. 15】

start

IAB node receives, from upper IAB node,
higher layer IAB-MT resource configuration
information and higher layer IAB-DU
resource configuration information — S1500

IAB node receives, from upper IAB node,
physical layer IAB-MT resource indicator
and physical layer IAB-DU resource indicator — S1510

IAB node determines whether to
use IAB-DU resources — S1520

end

【FIG. 16】

【FIG. 17A】

user plane protocol stack

【FIG. 17B】

1750

| 1760 — terminal | base station — 1770 | AMF — 1780 |
|---|---|---|
| 1766 — NAS | ←——————————→ NAS | NAS — 1786 |
| 1765 — RRC | ←——→ RRC — 1775 | |
| 1764 — PDCP | ←——→ PDCP — 1774 | |
| 1763 — RLC | ←——→ RLC — 1773 | |
| 1762 — MAC | ←——→ MAC — 1772 | |
| 1761 — PHY | ←——→ PHY — 1771 | |

control plane protocol stack

【FIG. 18A】

1800

| 1816 — RRC | | RRC — 1836 |
|---|---|---|
| 1815 — PDCP | | PDCP — 1835 |
| 1814 — RLC | | RLC — 1834 |
| 1813 — MAC | | MAC — 1833 |
| 1812 — PHY | 1821 | PHY — 1832 |
| 1811 — RF | RF | RF — 1831 |
| 1810 — base station | advanced repeater — 1820 | UE — 1830 |

user plane

【FIG. 18B】

1850

| 1866 — | RRC | | | | RRC | — 1886 |
| 1865 — | PDCP | | | | PDCP | — 1885 |
| 1864 — | RLC | | | | RLC | — 1884 |
| 1863 — | MAC | 1872 | | | MAC | — 1883 |
| 1862 — | PHY | PHY | | | PHY | — 1882 |
| 1861 — | RF | RF | — 1871 | | RF | — 1881 |

1860 — base station          advanced repeater — 1870          UE — 1880

control plane

【FIG. 19A】

【FIG. 19B】

| resource configuration ID |
|---|
| resource configuration ID |
| DL Tx Power adjustment |
| Reference CSI-RS ID |

| $C_0$ | $C_1$ | $C_2$ | R | R | R | R | R |
|---|---|---|---|---|---|---|---|

| Multiplexing mode info ID |
|---|
| Number of IAB-MT DL beams ID |

| IAB-MT beam type $ID_0$ | R | R | R | R | R | R |
|---|---|---|---|---|---|---|

| IAB-MT Resource set $ID_0$ |
|---|

. . .

| IAB-MT beam type $ID_N$ | R | R | R | R | R | R |
|---|---|---|---|---|---|---|

| IAB-MT Resource set $ID_N$ |
|---|

| DU resource configuration ID | Cell info ID |
|---|---|

| Cell info ID |
|---|

[FIG. 20]

[FIG. 21]

EP 4 498 614 A1

【FIG. 22】

【FIG. 23】

【FIG. 24】

2400

| base station |—2415  | UE |—2410

CSI request/configuration on
operation mode set A
—S2420

CSI request/configuration on
operation mode set B
—S2430

CSI report on
(operation mode set A ∩
operation mode set B)
—S2450

【FIG. 25】

2500

| base station |—2515  | UE |—2510

configuration/activation/indication
information for a CSI report, which
includes CMR and/or IMR information
—S2520

configuration/activation/indication
information for one or more operation modes
—S2530

CSI report (when both an operation mode
configuration/activation/indication occasion
and a CMR/IMR occasion satisfy requirements)
—S2540

【FIG. 26】

2600

memory 2620

ROM    RAM

processor 2610

input
interface
device 2640

output
interface
device 2650

2670

storage
device 2660

transceiver 2630

## INTERNATIONAL SEARCH REPORT

| International application No. |
| --- |
| **PCT/KR2023/003754** |

### A. CLASSIFICATION OF SUBJECT MATTER

**H04B 7/06**(2006.01)i; **H04B 17/345**(2015.01)i; **H04W 24/10**(2009.01)i; **H04W 72/23**(2023.01)i; **H04W 72/56**(2023.01)i; **H04W 84/06**(2009.01)i; **H04L 5/14**(2006.01)i; **H04L 5/22**(2006.01)i; **H04W 84/04**(2009.01)i; **H04B 17/318**(2015.01)i

According to International Patent Classification (IPC) or to both national classification and IPC

### B. FIELDS SEARCHED

Minimum documentation searched (classification system followed by classification symbols)

H04B 7/06(2006.01); H04B 7/08(2006.01); H04L 5/00(2006.01); H04L 5/14(2006.01); H04W 40/24(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중화 모드(multiplexing mode), 시간 자원(time resource), CSI(channel state information), CSI 기준 자원(CSI reference resource), MAC CE(medium access control control element), IAB(integrated access and backhaul)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2021-198991 A1 (LENOVO (SINGAPORE) PTE. LTD.) 07 October 2021 (2021-10-07)<br>See paragraph [0072]. | 1-12,15-20 |
| A | | 13-14 |
| Y | WO 2021-162452 A1 (LG ELECTRONICS INC.) 19 August 2021 (2021-08-19)<br>See paragraphs [0164], [0220]-[0221], [0280], [0309]-[0311], [0313], [0317], [0320]-[0321], [0329], [0331], [0334] and [0340]-[0342]; and figure 27. | 1-12,15-20 |
| Y | US 2021-0160875 A1 (ZTE CORPORATION) 27 May 2021 (2021-05-27)<br>See paragraphs [0048] and [0069]; and figure 2. | 2,4-6,17-18 |
| Y | ETRI. Discussion on IAB resource multiplexing enhancements. R1-2111995, 3GPP TSG RAN WG1 #107-e, e-Meeting. 05 November 2021.<br>See section 2.1. | 7 |

☑ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 June 2023** | **19 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/003754** |

**C.     DOCUMENTS CONSIDERED TO BE RELEVANT**

| Category* | Citation of document, with indication, where appropriate, of the relevant passages | Relevant to claim No. |
|---|---|---|
| Y | NOKIA et al. Other enhancements for simultaneous operation of IAB-node's child and parent links. R1-2106829, 3GPP TSG RAN WG1 #106-e, e-Meeting. 06 August 2021. See section 4. | 11-12,20 |
| A | NOKIA et al. Enhancements for resource multiplexing among IAB backhaul and access links. R1-2201673, 3GPP TSG RAN WG1 #108-e, e-Meeting. 14 February 2022. See section 2. | 1-20 |

Form PCT/ISA/210 (second sheet) (July 2022)

<table>
<tr><td colspan="2" align="center"><b>INTERNATIONAL SEARCH REPORT</b><br>Information on patent family members</td><td colspan="2">International application No.<br><br><b>PCT/KR2023/003754</b></td></tr>
</table>

| Patent document cited in search report | | | Publication date (day/month/year) | Patent family member(s) | | | Publication date (day/month/year) |
|---|---|---|---|---|---|---|---|
| WO | 2021-198991 | A1 | 07 October 2021 | CN | 115428351 | A | 02 December 2022 |
| | | | | EP | 4128569 | A1 | 08 February 2023 |
| | | | | KR | 10-2022-0162756 | A | 08 December 2022 |
| WO | 2021-162452 | A1 | 19 August 2021 | EP | 4106468 | A1 | 21 December 2022 |
| | | | | KR | 10-2022-0119073 | A | 26 August 2022 |
| US | 2021-0160875 | A1 | 27 May 2021 | AU | 2018-435973 | A1 | 25 February 2021 |
| | | | | CN | 112534909 | A | 19 March 2021 |
| | | | | EP | 3834534 | A1 | 16 June 2021 |
| | | | | EP | 3834534 | A4 | 30 March 2022 |
| | | | | KR | 10-2021-0042360 | A | 19 April 2021 |
| | | | | WO | 2020-029163 | A1 | 13 February 2020 |

Form PCT/ISA/210 (patent family annex) (July 2022)